# EUROPEAN PATENT SPECIFICATION

(11) **EP 4 057 135 B1**
(45) Date of publication and mention of the grant of the patent: **05.03.2025**
(21) Application number: 20883715.3
(22) Date of filing: 09.11.2020
(51) Int. Cl.: G06F 9/451, G06F 3/0484, H04M 1/02, G06F 1/16

(54) **DISPLAY METHOD FOR ELECTRONIC DEVICE HAVING FOLDABLE SCREEN, AND ELECTRONIC DEVICE**
ANZEIGEVERFAHREN FÜR ELEKTRONISCHE VORRICHTUNG, DIE EINEN FALTBAREN SCHIRM AUFWEIST, UND ELEKTRONISCHE VORRICHTUNG
PROCÉDÉ D'AFFICHAGE POUR DISPOSITIF ÉLECTRONIQUE AYANT UN ÉCRAN PLIABLE ET DISPOSITIF ÉLECTRONIQUE

(30) Priority: 08.11.2019 CN 201911090551
(43) Date of publication of application: 14.09.2022
(73) Proprietor: Huawei Technologies Co., Ltd., Shenzhen, Guangdong 518129 (CN)
(72) Inventor: LUO, Honglei, Shenzhen, Guangdong 518129 (CN); GAO, Lingyun, Shenzhen, Guangdong 518129 (CN); ZHANG, Yanan, Shenzhen, Guangdong 518129 (CN); WANG, Ying, Shenzhen, Guangdong 518129 (CN); YIN, Jian, Shenzhen, Guangdong 518129 (CN)
(74) Representative: Gill Jennings & Every LLP
(86) International application number: PCT/CN2020/127468
(87) International publication number: WO 2021/089039

(56) References cited:
- CN-A- 108 881 723
- CN-A- 109 917 956
- CN-A- 110 381 282
- CN-A- 110 389 802
- CN-A- 111 124 561
- US-A1- 2017 293 383
- US-A1- 2018 039 408
- US-A1- 2019 042 066

## Description

### TECHNICAL FIELD

This application relates to the field of terminal technologies, and in particular, to a display method applied to an electronic device having a foldable screen, and an electronic device.

### BACKGROUND

A mobile phone is conventionally designed to be flat. With popularization of various applications, people have an increasingly strong demand for large-screen mobile phones. However, it is inconvenient to carry the large-screen mobile phone. Therefore, a mobile phone having a foldable, stretchable, and bendable screen is popular.

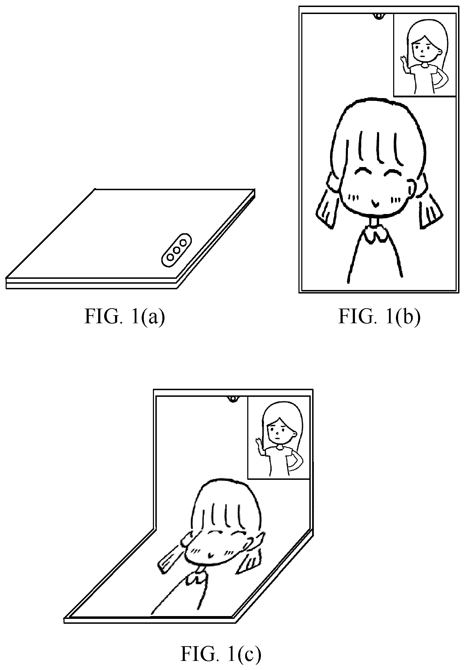

A form of the mobile phone having a foldable screen may be changed according to a user requirement. For example, when a user does not need to use the mobile phone, the mobile phone may be fully folded for ease of carrying. For example, a form of the mobile phone is shown in FIG. 1(a). When the user watches a movie or plays a game, the mobile phone can be fully unfolded, bringing immersive experience to the user. For example, a form of the mobile phone is shown in FIG. 1(b). When the user wants to use the mobile phone without both hands, the mobile phone may alternatively be folded at a specific angle and placed in a bracket form, so that the user can process other affairs while using the mobile phone. For example, the user may watch a child while having a video chat with a relative or a friend, or take a photo while using both hands to pose. For example, a form of the mobile phone is shown in FIG. 1(c).

However, after the mobile phone is folded at the specific angle, content displayed on the screen of the mobile phone is also divided with the screen. For example, a display interface for photo shooting, a video, news, or microblog may be displayed as two or more bent segments. In this case, an image displayed on the screen of the mobile phone has a severe sense of fragmentation, and it is very inconvenient for the user to watch and operate the mobile phone. Consequently, user experience is poor.

CN110381282A discloses a video call display method applied to an electronic device and a related apparatus so that during a video call, a user can conveniently open an application interface that is being used by the user before answering the video call.

CN109917956A discloses a method and an electronic device for controlling a screen display.

US 2017/293383 A1 discloses a portable device and a method of controlling thereof.

US2019/042066A1 discloses electronic devices including a plurality of displays.

### SUMMARY

According to a first aspect of the present invention there is provided a method according to claim 1. According to a second aspect of the present invention there is provided a device according to claim 5. According to a second aspect of the present invention there is provided a computer-readable storage medium according to claim 9.

According to a display method applied to an electronic device having a foldable screen and an electronic device provided in this application, a display layout adapting to a form of the electronic device can be provided, to improve user experience.

To achieve the foregoing objective, the following technical solutions are used in this application.

According to a first aspect, this application provides a display method applied to an electronic device having a foldable screen, and the method may include:
If the foldable screen is in an unfolded state, the electronic device displays a running interface of a first application in full screen by using the unfolded foldable screen. In response to that the foldable screen is folded from the unfolded state to a bent state, the electronic device displays the running interface of the first application by using a first display interface of the foldable screen, and displays a second interface by using a second display interface of the foldable screen, where the second interface does not include the running interface of the first application. A size of a window, of the running interface of the first application, that is displayed by using the unfolded foldable screen is a first size. A size of a window, of the running interface of the first application, that is displayed by using the first display interface is a second size. The first size is greater than the second size.

In this way, when the foldable screen is in the unfolded state, the running interface of the first application is fully displayed on an full display interface of the foldable screen. When the foldable screen is in the bent state, the running interface of the first application is scaled down to the first display interface of the foldable screen for full display, and the second display interface of the foldable screen may display another interface. In the bent state, the running interface of the first application is not bent, so that user experience is relatively good.

With reference to the first aspect, in a possible design, when the electronic device displays the running interface of the first application by using the first display interface, and displays the second interface by using the second display interface, in response to that the foldable screen is unfolded from the bent state to the unfolded state, the electronic device displays the running interface of the first application in full screen by using the unfolded foldable screen. In the method, when the electronic device is restored to the unfolded state, the running interface of the first application is fully displayed on the full display interface of the foldable screen. A window size of the running interface of the first application is relatively large, so that user experience is relatively good.

According to a second aspect, this application provides a display method applied to an electronic device having a foldable screen, and the method may include:
In response to that the foldable screen is folded to a bent state, the foldable screen includes a first display interface and a second display interface. The electronic device receives an input for enabling a first application. The electronic device displays a running interface of the first application by using the first display interface of the foldable screen in response to the input for enabling the first application, where the second display interface displays a second interface, and the second interface does not include the running interface of the first application. A display area of the foldable screen in which the first display interface is located is a first area. A display area of the foldable screen in which the second display interface is located is a second area. An included angle between a plane on which the first area located and a plane on which the second area located is between 60 degrees and 150 degrees, or an included angle between a plane on which the first area located and a plane on which the second area located is between 30 degrees and 120 degrees, or an included angle between a plane on which the first area located and a plane on which the second area located is between 0 degrees and 180 degrees, or an included angle between a plane on which the first area located and a plane on which the second area located is between 0 degrees and 120 degrees, or an included angle between a plane on which the first area located and a plane on which the second area located is between 0 degrees and 150 degrees.

In this way, when the foldable screen is in the bent state, the running interface of the first application is fully displayed on the first display interface of the foldable screen, and the second display interface of the foldable screen may display another interface. In the bent state, the running interface of the first application is not bent, so that user experience is relatively good.

With reference to the second aspect, in a possible design, when the electronic device displays the running interface of the first application by using the first display interface, and displays the second interface by using the second display interface, in response to that the foldable screen is unfolded from the bent state to an unfolded state, the electronic device displays the running interface of the first application in full screen by using the unfolded foldable screen. A size of a window, of the running interface of the first application, that is displayed by using the unfolded foldable screen is a first size. A size of a window, of the running interface of the first application, that is displayed by using the first display interface is a second size. The first size is greater than the second size.

In this way, when the electronic device is in the unfolded state, the running interface of the first application is expanded to an full display area of the foldable screen for full display. A window size of the running interface of the first application is relatively large, so that user experience is relatively good.

With reference to the second aspect, in a possible design, the electronic device receives an input that is performed on the first display interface and used to start the first application. For example, an icon of the first application is displayed on the first display interface, and the electronic device receives an input performed on the icon of the first application, starts the first application, and displays the running interface of the first application by using the first display interface. In another possible design, the electronic device receives an input that is performed on the first display interface and used to start the first application. The electronic device displays an icon of the first application on the second display interface. The electronic device receives an input performed on the icon of the first application, starts the first application, and displays the running interface of the first application by using the first display interface.

With reference to the second aspect, in a possible design, the first area and the camera are on a same side of a foldable rotating shaft of the electronic device.

With reference to the second aspect, in a possible design, an included angle between a plane on which the second area located and a horizontal plane is a first angle, an included angle between a plane on which the first area and the horizontal plane is a second angle, and the first angle is less than the second angle.

With reference to the first aspect or the second aspect, in a possible design, when the electronic device displays the running interface of the first application by using the first display interface, and displays the second interface by using the second display interface, in response to detecting that a distance between a user and the electronic device is greater than a first preset distance, the electronic device turns off the second area, where the first display interface continues to display a video call interface. In this way, when the user leaves the mobile phone, the second area of the foldable screen is turned off. This can save power and reduce energy consumption. In addition, the first display interface continues to display the video call interface, and the user may continue the video call by using the first display interface.

In a design, when the second area is turned off, a virtual navigation key is displayed on the second display interface that is in a screen-off state. The electronic device controls, in response to an input performed on the virtual navigation key, the running interface that is of the first application and that is displayed on the first display interface.

With reference to the first aspect or the second aspect, in a possible design, when the second area is turned off, the electronic device turns on the second area in response to detecting that the distance between the user and the electronic device is less than or equal to a second preset distance. In another possible design, when the second area is turned off, the electronic device receives an input performed on the second display interface, and turns on the second area in response to the input performed on the second display interface. The second preset distance may be equal to or unequal to the first preset distance.

With reference to the first aspect or the second aspect, the first application may include applications such as a video call application, a video playing application, an album browsing application, a text input application, a navigation application, a game application, or a shooting application.

With reference to the first aspect or the second aspect, in a possible design, the electronic device receives an input performed on the second interface, and controls, in response to the input performed on the second interface, the running interface that is of the first application and that is displayed on the first display interface. In an implementation, the first application is the text input application, the second interface includes a virtual keyboard. The electronic device receives an input performed on the virtual keyboard, and controls a text input interface based on the input performed on the virtual keyboard. In an implementation, the first application is the game application, the second interface includes a virtual joypad key. The electronic device receives an input performed on the virtual joypad key, and controls a running interface of the game application based on the input performed on the virtual joypad key. In an implementation, the first application is an application related to shooting by a front-facing camera of the electronic device, the first display interface displays a selfie preview interface of the front-facing camera, and the second display interface includes a make-up key. The electronic device receives an input performed on the make-up key, and displays, based on the input performed on the make-up key, a make-up animation effect on the selfie preview interface displayed on the first display interface, to guide the user to make up.

With reference to the first aspect or the second aspect, in a possible design, the second interface includes prompt information of a voice input or a gesture input. The electronic device receives the voice input or the gesture input, and controls, based on the voice input or the gesture input, the running interface that is of the first application and that is displayed on the first display interface.

With reference to the first aspect or the second aspect, in a possible design, the second interface includes prompt information of an action input or a gesture input. The electronic device receives the action input or the gesture input, and controls, based on the action input or the gesture input, the running interface that is of the first application and that is displayed on the first display interface. In an implementation, the first application is a game application. In an implementation, the first application is an album browsing application.

With reference to the first aspect or the second aspect, in a possible design, the first application is a video application. The electronic device receives a touch input performed on the second interface, generates audio in response to the touch input, and generates a video based on the audio and the running interface of the first application. In an implementation, the second interface includes a display interface of a piano key. The electronic device receives a touch input performed on the piano key, and generates audio in response to the touch input performed on the piano key. The audio may be implemented as customized audio that matches the video, and the generated audio and a video file of the first application are combined into one video file.

With reference to the first aspect or the second aspect, in a possible design, the first application is a navigation application. The running interface of the first application is a map navigation interface, and the second interface is an augmented reality AR real scene navigation interface corresponding to the map navigation interface. In this design, an included angle between a plane on which the first area located and the horizontal plane is the first angle, an included angle between a plane on which the second area located and the horizontal plane is the second angle, and the first angle is less than the second angle.

According to a third aspect, this application provides a display method applied to an electronic device having a foldable screen, and the method may include:
If the foldable screen is in an unfolded state, the electronic device displays an AOD running interface in full screen by using the unfolded foldable screen. In response to that the foldable screen is folded from the unfolded state to a bent state, the electronic device displays the AOD running interface by using a first display interface, and turns off a display area of the foldable screen in which a second display interface is located. A size of a window, of the AOD running interface, that is displayed by using the unfolded foldable screen is a first size. A size of a window, of the AOD running interface, that is displayed by using the first display interface is a second size. The first size is greater than the second size.

In this way, when the foldable screen is in the unfolded state, the AOD running interface is fully displayed on an full display interface of the foldable screen. When the foldable screen is in the bent state, the AOD running interface is scaled down to the first display interface of the foldable screen for full display. In the bent state, a user may place the electronic device in a bracket form on a plane, and may view the AOD running interface without picking up the electronic device. In addition, the display area of the foldable screen in which the second display interface is located is turned off, so that power can be saved.

With reference to the third aspect, in a possible design, in the bent state, a clock interface is displayed on the first display interface that is in a screen-off state, and memo information is displayed on the second display interface that is in a screen-off state.

With reference to the third aspect, in a possible design, when the electronic device displays the AOD running interface by using the first display interface, and turns off the display area of the foldable screen in which the second display interface is located, in response to that the foldable screen is unfolded from the bent state to the unfolded state, the electronic device displays the AOD running interface in full screen by using the unfolded foldable screen.

With reference to the third aspect, in a possible design, in the bent state, the foldable screen includes the first display interface and the second display interface. A display area of the foldable screen in which the first display interface is located is a first area. A display area of the foldable screen in which the second display interface is located is a second area. An included angle between a plane on which the first area located and a plane on which the second area located is less than a first threshold and greater than a second threshold. For example, the first threshold is 150 degrees, and the second threshold is 60 degrees; or the first threshold is 180 degrees, and the second threshold is 0 degrees; or the first threshold is 120 degrees, and the second threshold is 30 degrees; or the first threshold is 120 degrees, and the second threshold is 0 degrees.

According to a fourth aspect, this application provides a display method applied to an electronic device having a foldable screen, and the method may include:
If the foldable screen is in an unfolded state, the electronic device displays a screen saver interface in full screen by using the unfolded foldable screen. In response to that the foldable screen is folded from the unfolded state to a bent state, the electronic device displays the screen saver interface by using a first display interface, and turns off a display area of the foldable screen in which a second display interface is located, or displays a mirror interface of the screen saver interface by using a second display interface. A size of a window, of the screen saver interface, that is displayed by using the unfolded foldable screen is a first size. A size of a window, of the screen saver interface, that is displayed by using the first display interface is a second size. The first size is greater than the second size.

In this way, when the foldable screen is in the unfolded state, the screen saver interface is fully displayed on an full display interface of the foldable screen. When the foldable screen is in the bent state, the screen saver interface is scaled down to the first display interface of the foldable screen for full display. The screen saver interface is not bent, so that user experience is relatively good. The display area of the foldable screen in which the second display interface is located is turned off, so that power can further be saved. Alternatively, the mirror interface of the screen saver interface is displayed on the second display interface, so that the display is more aesthetic.

With reference to the fourth aspect, in a possible design, in the bent state, the foldable screen includes the first display interface and the second display interface. A display area of the foldable screen in which the first display interface is located is a first area. The display area of the foldable screen in which the second display interface is located is a second area. An included angle between a plane on which the first area located and a plane on which the second area located is less than a first threshold and greater than a second threshold.

According to a fifth aspect, this application provides a display method applied to an electronic device having a foldable screen, and the electronic device includes a camera. The method may include:

If the foldable screen is in a bent state, the foldable screen includes a first display interface and a second display interface. A display area of the foldable screen in which the first display interface is located is a first area, and a display area of the foldable screen in which the second display interface is located is a second area. The electronic device displays a shooting preview interface on the second display interface. The camera and the first area are on a same side of a foldable rotating shaft of the electronic device.

With reference to the fifth aspect, in a possible design, in the bent state, an included angle between a plane on which the first area located and a plane on which the second area located is less than a first threshold and greater than a second threshold. For example, the first threshold is 150 degrees, and the second threshold is 60 degrees; or the first threshold is 180 degrees, and the second threshold is 0 degrees; or the first threshold is 120 degrees, and the second threshold is 30 degrees; or the first threshold is 120 degrees, and the second threshold is 0 degrees.

With reference to the fifth aspect, in a possible design, an included angle between the first area and a horizontal plane is less than a first angle. Optionally, the first angle may be less than 30 degrees. In this way, because the camera and the first area are on the same side of the foldable rotating shaft of the electronic device, when a user holds the electronic device and shoots the sky or the ground by using the camera, and the first area is close to parallel to the horizontal plane, the shooting preview interface is displayed by using the second display interface, and the user does not need to look up or look down to view the shooting preview interface by using the first display interface. This improves shooting experience of the user when the electronic device is in the bent state.

According to a sixth aspect, this application provides a display method applied to an electronic device having a foldable screen, and the method may include:

The electronic device receives a first operation of folding the foldable screen from an unfolded state to a bent state, or receives a second operation of unfolding the foldable screen from a folded state to a bent state; and automatically displays a running interface of an electronic wallet application on a first display interface and a second display interface of the foldable screen in response to the first operation or the second operation, where the running interface of the electronic wallet application includes at least one virtual payment card. When the foldable screen is in the bent state, the foldable screen includes the first display interface and the second display interface. A display area of the foldable screen in which the first display interface is located is a first area, and a display area of the foldable screen in which the second display interface is located is a second area. In the bent state, an included angle between a plane on which the first area located and a plane on which the second area located is less than a first threshold and greater than a second threshold. In the folded state, an included angle between a plane on which the first area located and a plane on which the second area located is less than or equal to the second threshold. For example, the first threshold is 150 degrees, and the second threshold is 60 degrees; or the first threshold is 180 degrees, and the second threshold is 0 degrees; or the first threshold is 120 degrees, and the second threshold is 30 degrees; or the first threshold is 120 degrees, and the second threshold is 0 degrees.

In this way, when the user opens the electronic device to the bent state, the electronic wallet application interface is automatically displayed. Because the electronic device has a specific bending angle, view of another person may be blocked, and it is difficult for the another person to view content on the electronic wallet application interface. This helps protect privacy information of the user.

With reference to the sixth aspect, in a possible design, in response to detecting that the electronic device is unfolded from the bent state to the unfolded state, the electronic device exits from displaying the running interface of the electronic wallet application.

With reference to the sixth aspect, in a possible design, that the electronic device receives a first operation of folding the foldable screen from an unfolded state to a bent state may be: The electronic device receives a first operation of folding the foldable screen from the unfolded state to a horizontally bent state. That the electronic device receives a second operation of unfolding the foldable screen from a folded state to a bent state may be: The electronic device receives a first operation of unfolding the foldable screen from the folded state to a horizontally bent state. In response to the first operation or the second operation, the running interface of the electronic wallet application is automatically displayed on the first display interface and the second display interface of the foldable screen.

According to a seventh aspect, this application provides a display method applied to an electronic device having a foldable screen, and the method may include:
The electronic device receives a first operation of folding the foldable screen from an unfolded state to a bent state, or receives a second operation of unfolding the foldable screen from a folded state to a bent state; and automatically displays a running interface of an e-book application on a first display interface and a second display interface of the foldable screen in response to the first operation or the second operation. A display area of the foldable screen in which the first display interface is located is a first area, and a display area of the foldable screen in which the second display interface is located is a second area. In the bent state, an included angle between a plane on which the first area located and a plane on which the second area located is less than a first threshold and greater than a second threshold. In the folded state, an included angle between a plane on which the first area located and a plane on which the second area located is less than or equal to the second threshold.

In this way, when an e-book is read, the electronic device may be folded to the bent state, and placed in a bracket form on a plane, to release a user's hands.

With reference to the seventh aspect, in a possible design, that the electronic device receives a first operation of folding the foldable screen from an unfolded state to a bent state may be: The electronic device receives a first operation of folding the foldable screen from the unfolded state to a horizontally bent state. Alternatively, that the electronic device receives a second operation of unfolding the foldable screen from a folded state to a bent state may be: The electronic device receives a second operation of unfolding the foldable screen from the folded state to a horizontally bent state. If the foldable screen is in the bent state, the foldable screen is in the horizontally bent state.

With reference to the seventh aspect, in a possible design, in response to detecting that the electronic device is unfolded from the bent state to the unfolded state, the electronic device exits from displaying the running interface of the e-book application.

According to an eighth aspect, this application provides a display method applied to an electronic device having a foldable screen, and the method may include:
The electronic device receives an operation of unfolding the foldable screen from a folded state to a bent state, and displays a shortcut application icon in a first specific area on a display interface of the foldable screen in response to that the foldable screen is unfolded from the folded state to the bent state. The foldable screen includes a first display interface and a second display interface. A display area of the foldable screen in which the first display interface is located is a first area, and a display area of the foldable screen in which the second display interface is located is a second area. In the bent state, an included angle between a plane on which the first area located and a plane on which the second area located is less than a first threshold and greater than a second threshold. In the folded state, an included angle between a plane on which the first area located and a plane on which the second area located is less than or equal to the second threshold. In a vertically bent state, the first specific area is an area, in contact with a finger of the user, in the first area or the second area that is on an upper side. In a horizontally bent state, the first specific area is an area, in contact with a finger of the user, in the first area or the second area that is on a right side.

In this way, the shortcut application icon is located in an area in which the finger of the user is relatively convenient to operate. When the electronic device is unfolded, a shortcut application may be selected and started more conveniently, to implement a shortcut operation.

With reference to the eighth aspect, in a possible design, in response to detecting that an area in which the foldable screen is in contact with the finger of the user changes, a location of the first specific area moves with the area in which the foldable screen is in contact with the finger of the user.

According to a ninth aspect, this application provides a display method applied to an electronic device having a foldable screen, and the method may include:
start a video call application; if the foldable screen is in an unfolded state, the electronic device displays a video call interface in full screen by using the unfolded foldable screen; in response to that the foldable screen is folded from the unfolded state to a bent state, the electronic device displays the video call interface by using a first display interface of the foldable screen, and displays a desktop or a text chat interface by using a second display interface of the foldable screen.

In this way, when the foldable screen is in the unfolded state, the video call interface is fully displayed on an full display interface of the foldable screen. When the foldable screen is in the bent state, the video call interface is scaled down to the first display interface of the foldable screen for full display, and the second display interface of the foldable screen may display the desktop or the text chat interface. In the bent state, the video call interface is not bent, so that user experience is relatively good. In addition, the user may further use the desktop or perform text chatting on the second display interface, to simultaneously process a plurality of tasks.

According to a tenth aspect, this application provides a display method applied to an electronic device having a foldable screen, and the method may include: In response to that the foldable screen is folded to a bent state, the foldable screen includes a first display interface and a second display interface. The electronic device receives an input for starting a video call application, and displays a video call interface by using the first display interface of the foldable screen in response to the input for starting the video call application. The second display interface of the foldable screen displays a desktop or a text chat interface. A display area of the foldable screen in which the first display interface is located is a first area, and a display area of the foldable screen in which the second display interface is located is a second area. The first area and the second area are on two different sides of a foldable rotating shaft of the electronic device.

In this way, when the foldable screen is in the bent state, the video call interface is fully displayed on the first display interface of the foldable screen, and the second display interface of the foldable screen displays the desktop or the text chat interface. In the bent state, the video call interface is not bent, so that user experience is relatively good.

With reference to the tenth aspect, in a possible design, that the electronic device receives an input for starting a video call application includes: receiving, on the first display interface, the input for starting the video call application; or receiving, on the second display interface, the input for starting the video call application.

With reference to the ninth aspect or the tenth aspect, in a possible design, when the electronic device displays the video call interface by using the first display interface, and displays the desktop or the text chat interface by using the second display interface, in response to that the foldable screen is unfolded from the bent state to the unfolded state, the electronic device displays the video call interface in full screen by using the unfolded foldable screen.

In this way, when the electronic device is in the unfolded state, the video call interface is expanded to the full foldable screen for full display. A window size of the video call interface is relatively large, so that user experience is relatively good.

With reference to the ninth aspect or the tenth aspect, in a possible design, when the electronic device displays the video call interface by using the first display interface, and displays the desktop or the text chat interface by using the second display interface, in response to detecting that a distance between the user and the electronic device is greater than a first preset distance, the electronic device turns off the display area of the foldable screen in which the second display interface is located, where the first display interface continues to display the video call interface. In this way, when the user leaves the mobile phone, the display area of the foldable screen in which the second display interface of the mobile phone is located is turned off, to save power and reduce energy consumption.

With reference to the ninth aspect or the tenth aspect, in a possible design, a virtual navigation key is displayed on the second display interface that is in a screen-off state, and in response to an input performed on the virtual navigation key, the video call interface displayed on the first display interface is controlled.

With reference to the ninth aspect or the tenth aspect, in a possible design, when the display area of the foldable screen in which the second display interface is located is turned off, in response to detecting that the distance between the user and the electronic device is less than or equal to a second preset distance, the electronic device turns on the display area of the foldable screen in which the second display interface is located, and displays the desktop or the text chat interface on the second display interface. In another possible design, when the display area of the foldable screen in which the second display interface is located is turned off, the electronic device receives an input performed on the second display interface; and in response to the input performed on the second display interface, turns on the display area of the foldable screen in which the second display interface is located, and displays the desktop or the text chat interface on the second display interface. The second preset distance may be equal to or unequal to the first preset distance.

With reference to the ninth aspect or the tenth aspect, in a possible design, the display area of the foldable screen in which the first display interface is located is the first area, and the display area of the foldable screen in which the second display interface is located is the second area. If the foldable screen is in the bent state, an included angle between a plane on which the first area located and a plane on which the second area located is between 60 degrees and 150 degrees, or an included angle between a plane on which the first area located and a plane on which the second area located is between 30 degrees and 120 degrees, or an included angle between a plane on which the first area located and a plane on which the second area located is between 0 degrees and 180 degrees, or an included angle between a plane on which the first area located and a plane on which the second area located is between 0 degrees and 120 degrees, or an included angle between a plane on which the first area located and a plane on which the second area located is between 0 degrees and 150 degrees.

With reference to the ninth aspect or the tenth aspect, in a possible design, the first area and the camera are on a same side of the foldable rotating shaft of the electronic device.

With reference to the ninth aspect or the tenth aspect, in a possible design, an included angle between a plane on which the second area located and a horizontal plane is a first angle, an included angle between a plane on which the first area located and the horizontal plane is a second angle, and the first angle is less than the second angle.

According to an eleventh aspect, this application provides a display method applied to an electronic device having a foldable screen, and the method may include: starting a camera of the electronic device; if the foldable screen is in an unfolded state, the electronic device displays a shooting preview interface of the camera in full screen by using the unfolded foldable screen; in response to that the foldable screen is folded from the unfolded state to a bent state, the electronic device displays the shooting preview interface by using a first display interface of the foldable screen, and displays a voice assistant prompt information interface or a shooting settings option interface by using a second display interface of the foldable screen.

In this way, when the foldable screen is in the unfolded state, the shooting preview interface is fully displayed on an full display interface of the foldable screen. When the foldable screen is in the bent state, the shooting preview interface is scaled down to the first display interface of the foldable screen for full display, and the second display interface of the foldable screen may display the voice assistant prompt information interface or the shooting settings option interface. In the bent state, the shooting preview interface is not bent, so that user experience is relatively good. In addition, a user may further control the shooting preview interface based on voice assistant prompt information, or set shooting of the camera by using a shooting settings option.

According to a twelfth aspect, this application provides a display method applied to an electronic device having a foldable screen, and the method may include: In response to that the foldable screen is folded to a bent state, folding the foldable screen to form a first display interface and a second display interface; receiving, by the electronic device, an input for starting a camera of the electronic device; and displaying, by the electronic device, a shooting preview interface of the camera by using the first display interface of the foldable screen in response to the input for starting the camera of the electronic device. The second display interface of the foldable screen displays a voice assistant prompt information interface or a shooting settings option interface. A display area of the foldable screen in which the first display interface is located is a first area, and a display area of the foldable screen in which the second display interface is located is a second area. The first area and the second area are on two different sides of a rotating shaft of the electronic device.

In this way, when the foldable screen is in the bent state, the shooting preview interface is fully displayed on the first display interface of the foldable screen, and the second display interface of the foldable screen displays the voice assistant prompt information interface or the shooting settings option interface. In the bent state, the shooting preview interface is not bent, so that user experience is relatively good. In addition, a user may further control the shooting preview interface based on voice assistant prompt information, or set shooting of the camera by using a shooting settings option.

With reference to the twelfth aspect, in a possible design, that the electronic device receives an input for starting a camera of the electronic device includes: An application icon for starting the camera of the electronic device is displayed on the first display interface, and the electronic device receives an input performed on the icon to start the camera. Alternatively, an application icon for starting the camera of the electronic device is displayed on the second display interface, and the electronic device receives an input performed on the icon to start the camera.

With reference to the eleventh aspect or the twelfth aspect, in a possible design, when the electronic device displays the shooting preview interface by using the first display interface, and displays the voice assistant prompt information interface or the shooting settings option interface by using the second display interface, in response to that the foldable screen is unfolded from the bent state to the unfolded state, the electronic device displays the shooting preview interface in full screen by using the unfolded foldable screen. In this way, when the electronic device is in the unfolded state, the shooting preview interface is expanded to the full foldable screen for full display. A window size of the shooting preview interface is relatively large, so that user experience is relatively good.

With reference to the eleventh aspect or the twelfth aspect, in a possible design, the electronic device receives a voice input, and controls the shooting preview interface based on the received voice input.

With reference to the eleventh aspect or the twelfth aspect, in a possible design, the electronic device receives an input performed on a shooting settings option, and controls the shooting preview interface in response to the input performed on the shooting settings option.

With reference to the eleventh aspect or the twelfth aspect, in a possible design, the display area of the foldable screen in which the first display interface is located is the first area, and the display area of the foldable screen in which the second display interface is located is the second area. If the foldable screen is in the bent state, an included angle between a plane on which the first area located and a plane on which the second area located is between 60 degrees and 150 degrees, or an included angle between a plane on which the first area located and a plane on which the second area located is between 30 degrees and 120 degrees, or an included angle between a plane on which the first area located and a plane on which the second area located is between 0 degrees and 180 degrees, or an included angle between a plane on which the first area located and a plane on which the second area located is between 0 degrees and 120 degrees, or an included angle between a plane on which the first area located and a plane on which the second area located is between 0 degrees and 150 degrees.

With reference to the eleventh aspect or the twelfth aspect, in a possible design, the first area and the camera are on a same side of the foldable rotating shaft of the electronic device.

With reference to the eleventh aspect or the twelfth aspect, in a possible design, an included angle between a plane on which the second area located and a horizontal plane is a first angle, an included angle between a plane on which the first area located and the horizontal plane is a second angle, and the first angle is less than the second angle.

According to a thirteenth aspect, this application provides an electronic device. The electronic device includes a foldable screen, a camera, and a processor. The processor is configured to start a video call application and control the camera to collect a video image. The camera is configured to collect the video image. The processor is further configured to: if the foldable screen is in an unfolded state, display a video call interface in full screen by using the unfolded foldable screen; and in response to that the foldable screen is folded from the unfolded state to a bent state, display the video call interface by using a first display interface of the foldable screen, and display a desktop or a text chat interface by using a second display interface of the foldable screen.

According to a fourteenth aspect, this application provides an electronic device. The electronic device includes a foldable screen, a camera, and a processor. In response to that the foldable screen is folded into a bent state, the foldable screen is folded to form a first area and a second area. The processor is configured to receive an input for starting a video call application, and control the camera to collect a video image. The camera is configured to collect the video image. The processor is further configured to: in response to receiving the input for starting the video call application, display a video call interface by using a first display interface of the foldable screen. A second display interface of the foldable screen displays a desktop or a text chat interface. A display area of the foldable screen in which the first display interface is located is the first area, and a display area of the foldable screen in which the second display interface is located is the second area.

With reference to the thirteenth aspect or the fourteenth aspect, in a possible design, the processor is further configured to: if the first display interface displays the video call interface, and the second display interface displays the desktop or the text chat interface, in response to that the foldable screen is unfolded from the bent state to the unfolded state, display the video call interface in full screen by using the unfolded foldable screen.

With reference to the thirteenth aspect or the fourteenth aspect, in a possible design, the camera is further configured to detect a distance between a user and the electronic device. The processor is further configured to: if the first display interface displays the video call interface, and the second display interface displays the desktop or the text chat interface, in response to the camera detecting that the distance between the user and the electronic device is greater than a first preset distance, control turning off the display area of the foldable screen in which the second display interface is located, where the first display interface continues to display the video call interface. The processor is further configured to: if the display area of the foldable screen in which the second display interface is located is turned off, display the video call interface on the first display interface; and in response to the camera detecting that the distance between the user and the electronic device is less than or equal to a second preset distance, control turning on the display area of the foldable screen in which the second display interface is located, and display the desktop or the text chat interface on the first display interface.

With reference to the thirteenth aspect or the fourteenth aspect, in a possible design, the electronic device further includes a sensor. The sensor is configured to detect a distance between a user and the electronic device. The processor is further configured to: if the first display interface displays the video call interface, and the second display interface displays the desktop or the text chat interface, in response to the distance sensor detecting that the distance between the user and the electronic device is greater than a first preset distance, control turning off the display area of the foldable screen in which the second display interface is located, where the first display interface continues to display the video call interface. The processor is further configured to: if the display area of the foldable screen in which the second display interface is located is turned off, display the video call interface on the first display interface; and in response to the distance sensor detecting that the distance between the user and the electronic device is less than or equal to a second preset distance, control turning on the display area of the foldable screen in which the second display interface is located, and display the desktop or the text chat interface on the first display interface. The sensor may include a distance sensor, an infrared sensor, and the like.

According to a fifteenth aspect, this application provides an electronic device. The electronic device includes a foldable screen, a camera, and a processor. The processor is configured to start a camera application and control the camera to collect an image. The camera is configured to collect the image. The processor is further configured to: if the foldable screen is in an unfolded state, display a shooting preview interface in full screen by using the unfolded foldable screen; and in response to that the foldable screen is folded from the unfolded state to a bent state, display the shooting preview interface by using a first display interface of the foldable screen, and display a voice assistant prompt information interface or a shooting settings option interface by using a second display interface of the foldable screen.

According to a sixteenth aspect, this application provides an electronic device. The electronic device includes a foldable screen, a camera, and a processor. In response to that the foldable screen is folded to a bent state, the foldable screen is folded to form a first area and a second area. The processor is configured to receive an input for starting the camera, and control the camera to collect an image. The camera is configured to collect the image. The processor is further configured to: in response to the input for starting the camera, display a shooting preview interface of the camera by using a first display interface of the foldable screen. A second display interface of the foldable screen displays a voice assistant prompt information interface or a shooting settings option interface. A display area of the foldable screen in which the first display interface is located is the first area, and a display area of the foldable screen in which the second display interface is located is the second area.

With reference to the fifteenth aspect or the sixteenth aspect, in a possible design, the processor is further configured to: if the first display interface displays the shooting preview interface, and the second display interface displays the voice assistant prompt information interface or the shooting settings option interface, in response to that the foldable screen is unfolded from the bent state to the unfolded state, display the shooting preview interface in full screen by using the unfolded foldable screen.

With reference to the fifteenth aspect or the sixteenth aspect, in a possible design, the electronic device further includes a microphone, and the microphone is configured to receive a voice input. The processor is further configured to control the shooting preview interface based on the voice input received by the microphone.

With reference to the fifteenth aspect or the sixteenth aspect, in a possible design, the foldable screen is further configured to receive, on the second display interface, an input performed on a shooting settings option. The processor is further configured to control the shooting preview interface based on the input performed on the shooting settings option.

According to a seventeenth aspect, this application provides an electronic device. The electronic device may implement the display method applied to the electronic device having a foldable screen according to any one of the first aspect to the twelfth aspect and the possible designs thereof. The electronic device may implement the method by using software or hardware, or by using hardware executing corresponding software. In a possible design, the electronic device may include a processor and a memory. The processor is configured to support the electronic device in performing a corresponding function in any one of the first aspect to the twelfth aspect and the possible designs of the first aspect to the twelfth aspect. The memory is configured to be coupled to the processor, and store program instructions and data that are necessary for the electronic device.

According to an eighteenth aspect, an embodiment of this application provides a computer-readable storage medium. The computer-readable storage medium includes computer instructions. When the computer instructions are run on an electronic device, the electronic device is enabled to perform the display method applied to the electronic device having a foldable screen according to any one of the first aspect to the twelfth aspect and the possible designs thereof.

According to a nineteenth aspect, an embodiment of this application provides a computer program product. When the computer program product runs on a computer, the computer is enabled to perform the display method applied to the electronic device having a foldable screen according to any one of the first aspect to the twelfth aspect and the possible designs thereof.

For technical effects brought by the electronic device according to the thirteenth aspect, the electronic device according to the fourteenth aspect, the electronic device according to the fifteenth aspect, the electronic device according to the sixteenth aspect, the electronic device according to the seventeenth aspect, the computer-readable storage medium according to the eighteenth aspect, and the computer program product according to the nineteenth aspect, refer to technical effects brought by the foregoing corresponding methods. Details are not described herein again.

### BRIEF DESCRIPTION OF DRAWINGS

FIG. 1(a) to FIG. 1(c) are a schematic diagram of an example of a scenario of a display method applied to an electronic device having a foldable screen;
FIG. 2A(a) to FIG. 2A(c) are a schematic diagram 1 of a structure of an electronic device having a foldable screen according to an embodiment of this application;
FIG. 2B(a) to FIG. 2B(c) are a schematic diagram 2 of a structure of an electronic device having a foldable screen according to an embodiment of this application;
FIG. 2C(a) and FIG. 2C(b) are a schematic diagram 3 of a structure of an electronic device having a foldable screen according to an embodiment of this application;
FIG. 3 is a schematic diagram 4 of a structure of an electronic device having a foldable screen according to an embodiment of this application;
FIG. 4A is a schematic diagram of a software architecture of an electronic device having a foldable screen according to an embodiment of this application;
FIG. 4B is a schematic diagram 5 of a structure of an electronic device having a foldable screen according to an embodiment of this application;
FIG. 5 is a schematic flowchart of a display method applied to an electronic device having a foldable screen according to an embodiment of this application;
FIG. 6A is a schematic diagram 1 of an example of a scenario of a display method applied to an electronic device having a foldable screen according to an embodiment of this application;
FIG. 6B-1 and FIG. 6B-2 are a schematic diagram 2 of an example of a scenario of a display method applied to an electronic device having a foldable screen according to an embodiment of this application;

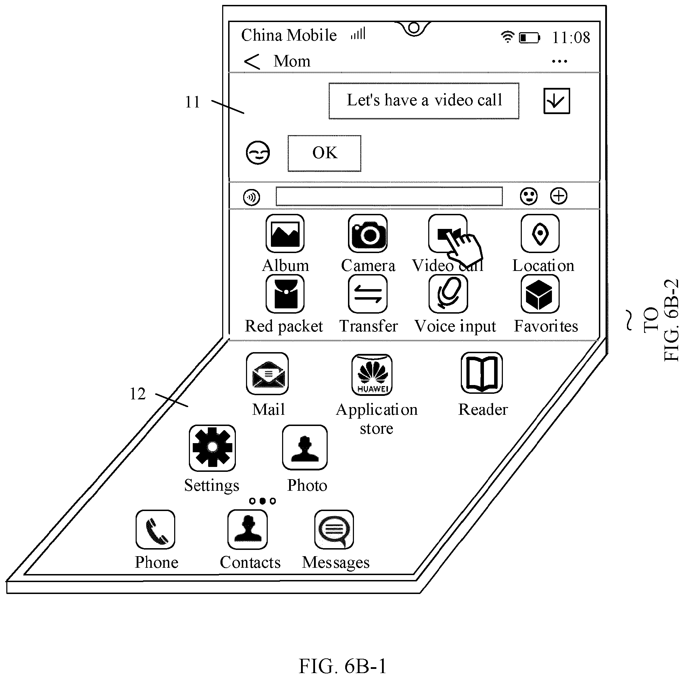

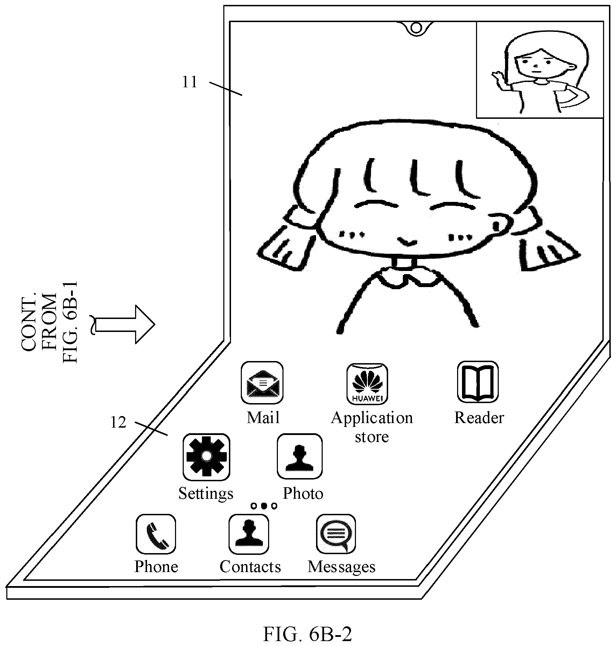

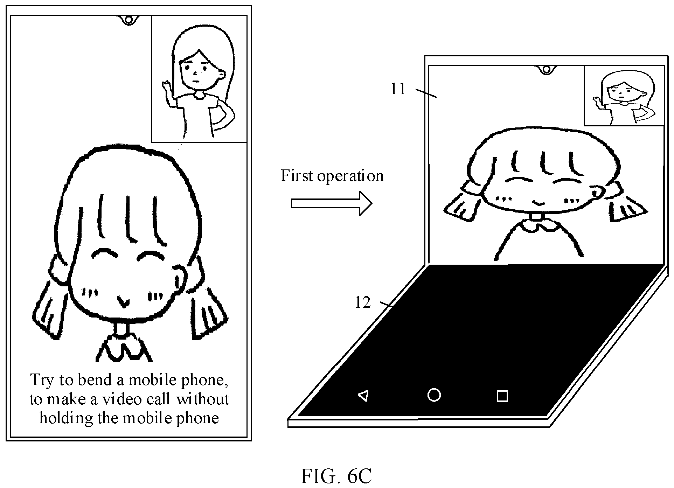

FIG. 6C is a schematic diagram 3 of an example of a scenario of a display method applied to an electronic device having a foldable screen according to an embodiment of this application;

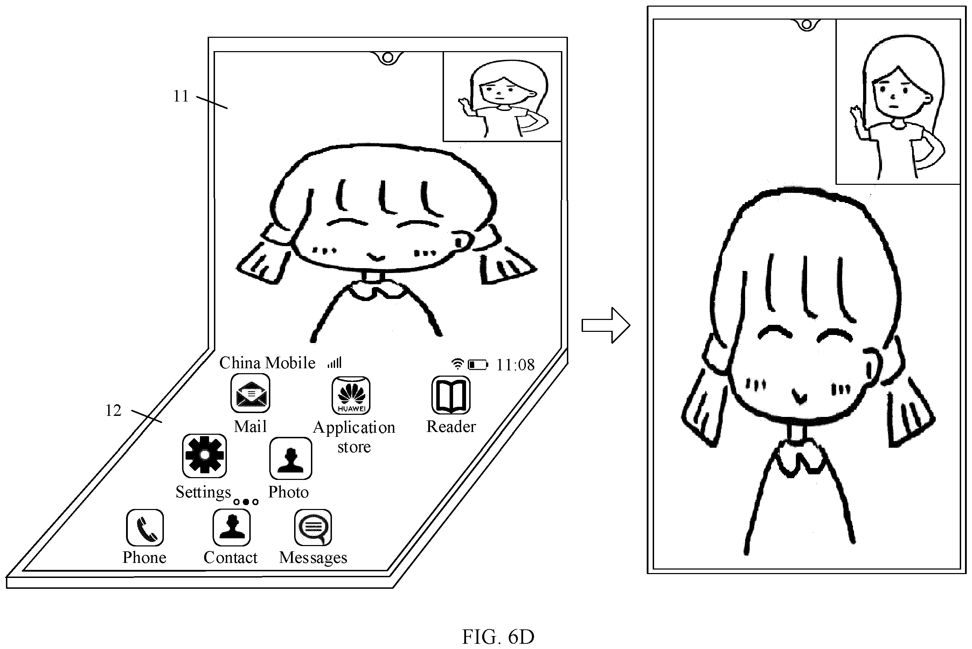

FIG. 6D is a schematic diagram 4 of an example of a scenario of a display method applied to an electronic device having a foldable screen according to an embodiment of this application;

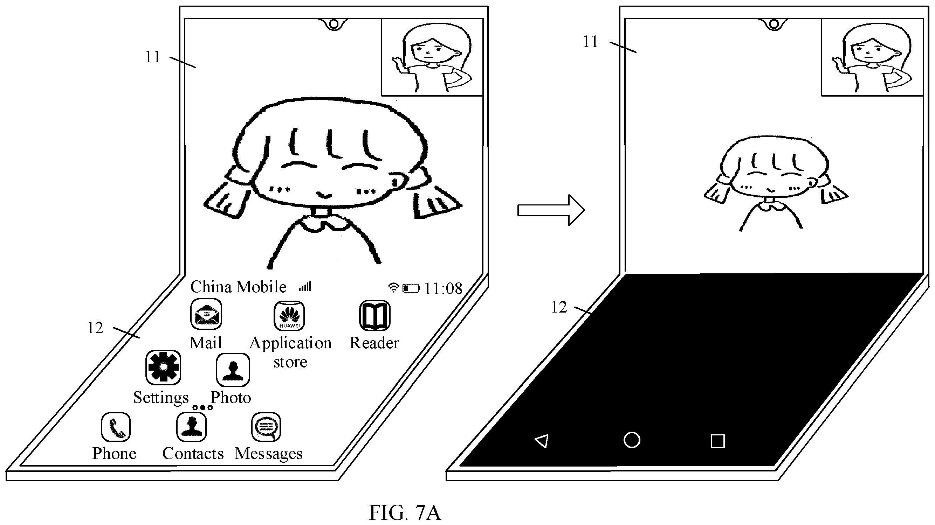

FIG. 7A is a schematic diagram 5 of an example of a scenario of a display method applied to an electronic device having a foldable screen according to an embodiment of this application;

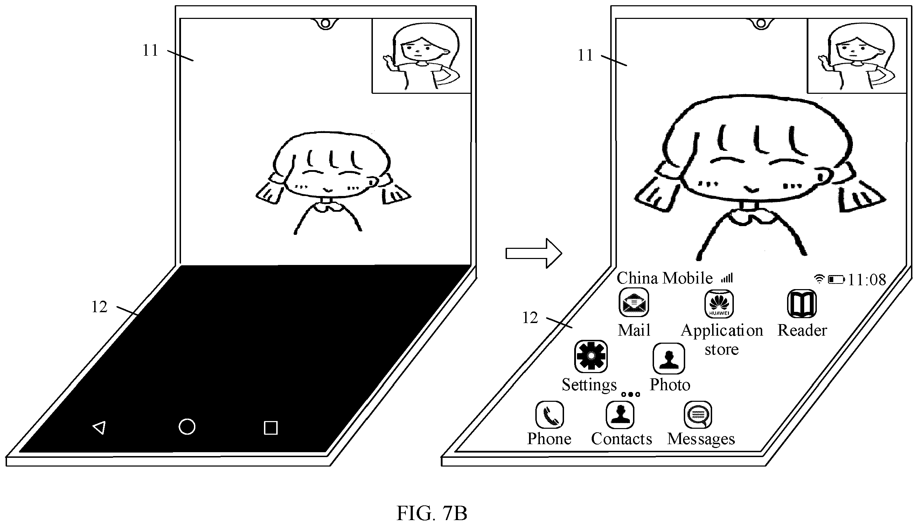

FIG. 7B is a schematic diagram 6 of an example of a scenario of a display method applied to an electronic device having a foldable screen according to an embodiment of this application;

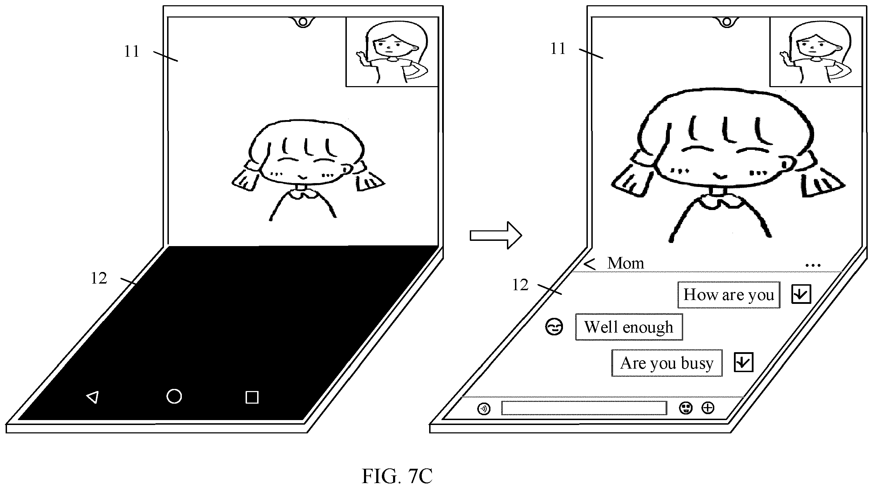

FIG. 7C is a schematic diagram 7 of an example of a scenario of a display method applied to an electronic device having a foldable screen according to an embodiment of this application;

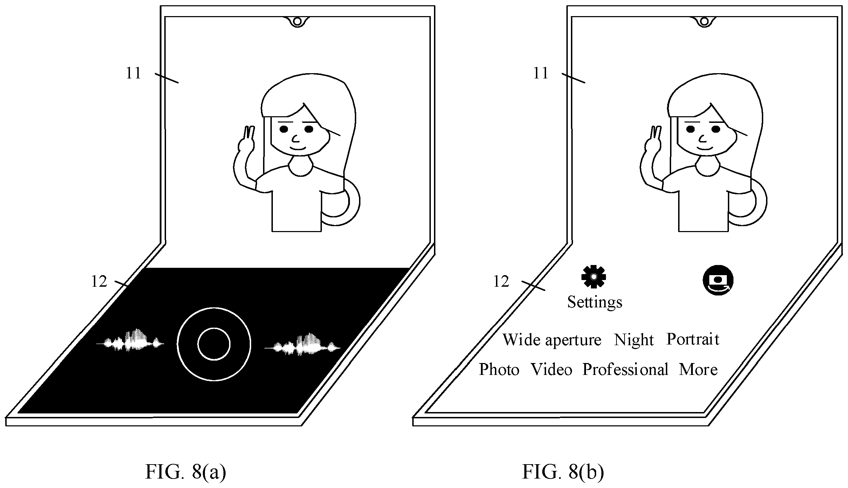

FIG. 8(a) and FIG. 8(b) are a schematic diagram 8 of an example of a scenario of a display method applied to an electronic device having a foldable screen according to an embodiment of this application;

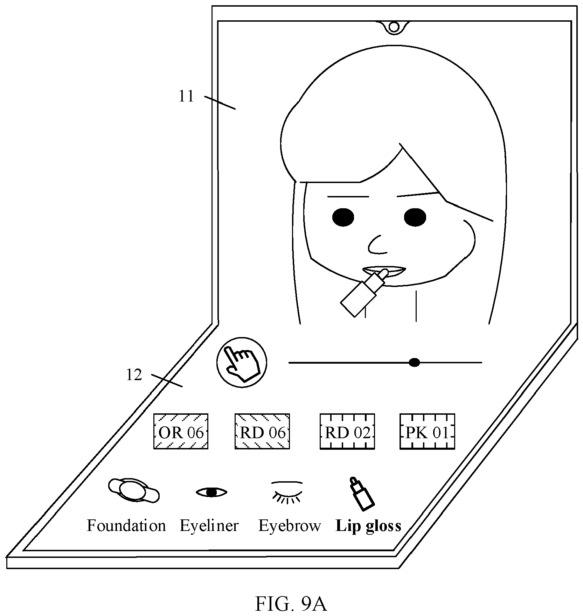

FIG. 9A is a schematic diagram 9 of an example of a scenario of a display method applied to an electronic device having a foldable screen according to an embodiment of this application;

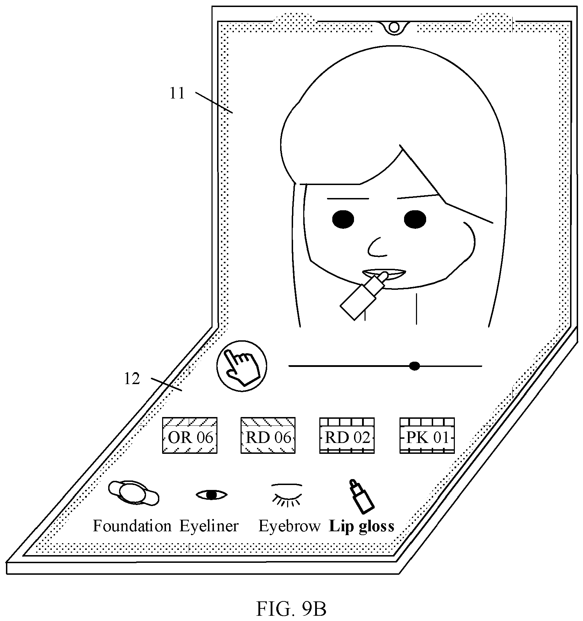

FIG. 9B is a schematic diagram 10 of an example of a scenario of a display method applied to an electronic device having a foldable screen according to an embodiment of this application;

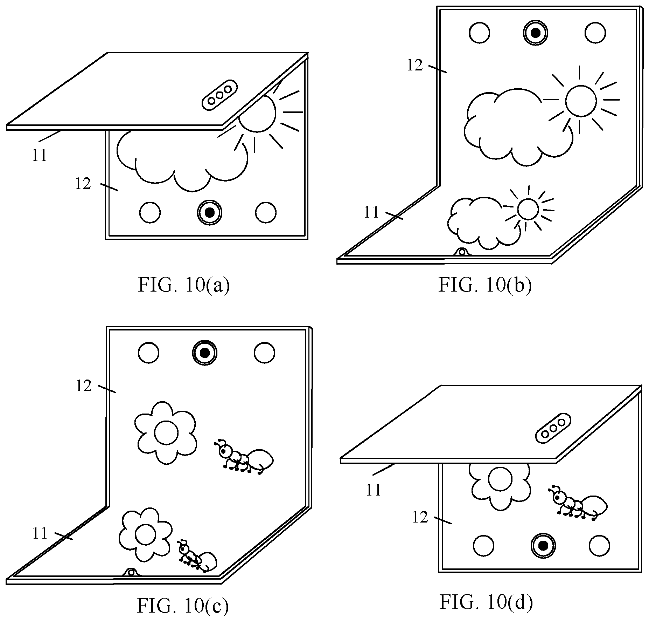

FIG. 10(a) to FIG. 10(d) are a schematic diagram 11 of an example of a scenario of a display method applied to an electronic device having a foldable screen according to an embodiment of this application;

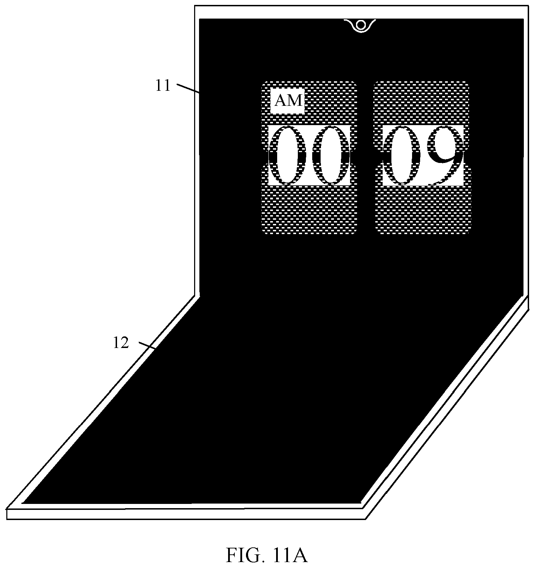

FIG. 11A is a schematic diagram 12 of an example of a scenario of a display method applied to an electronic device having a foldable screen according to an embodiment of this application;

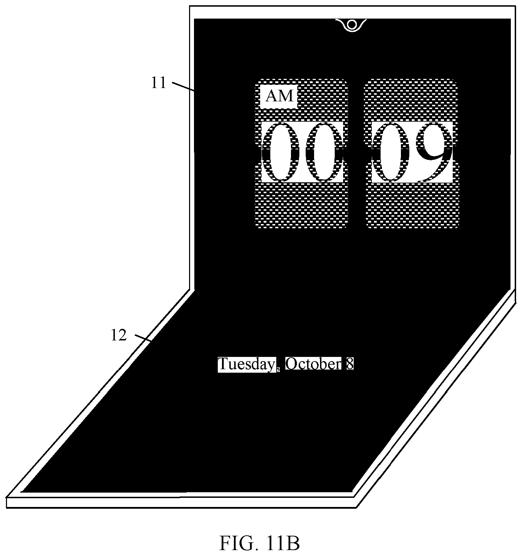

FIG. 11B is a schematic diagram 13 of an example of a scenario of a display method applied to an electronic device having a foldable screen according to an embodiment of this application;

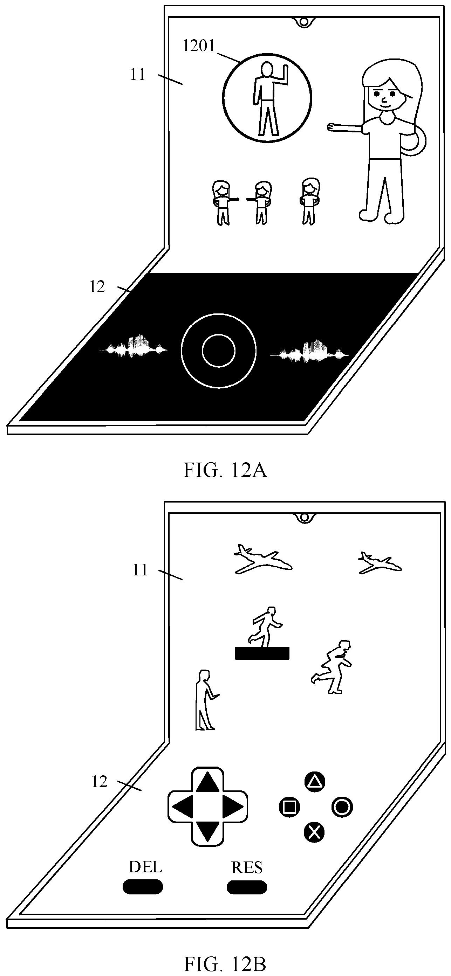

FIG. 12A is a schematic diagram 14 of an example of a scenario of a display method applied to an electronic device having a foldable screen according to an embodiment of this application;
FIG. 12B is a schematic diagram 15 of an example of a scenario of a display method applied to an electronic device having a foldable screen according to an embodiment of this application;

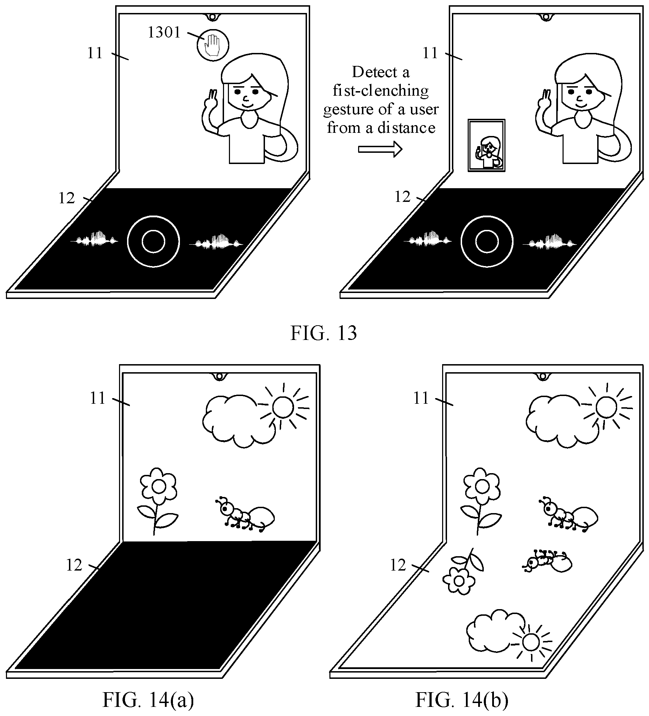

FIG. 13 is a schematic diagram 16 of an example of a scenario of a display method applied to an electronic device having a foldable screen according to an embodiment of this application;
FIG. 14(a) and FIG. 14(b) are a schematic diagram 17 of an example of a scenario of a display method applied to an electronic device having a foldable screen according to an embodiment of this application;

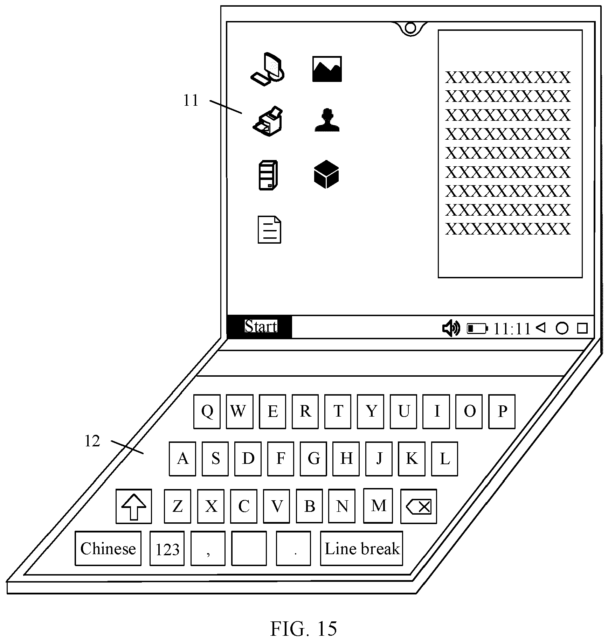

FIG. 15 is a schematic diagram 18 of an example of a scenario of a display method applied to an electronic device having a foldable screen according to an embodiment of this application;

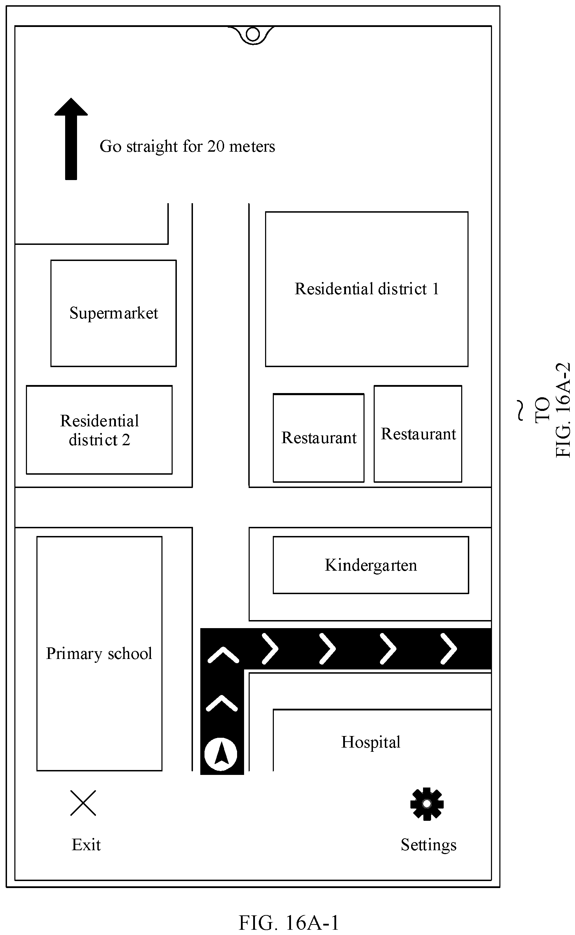

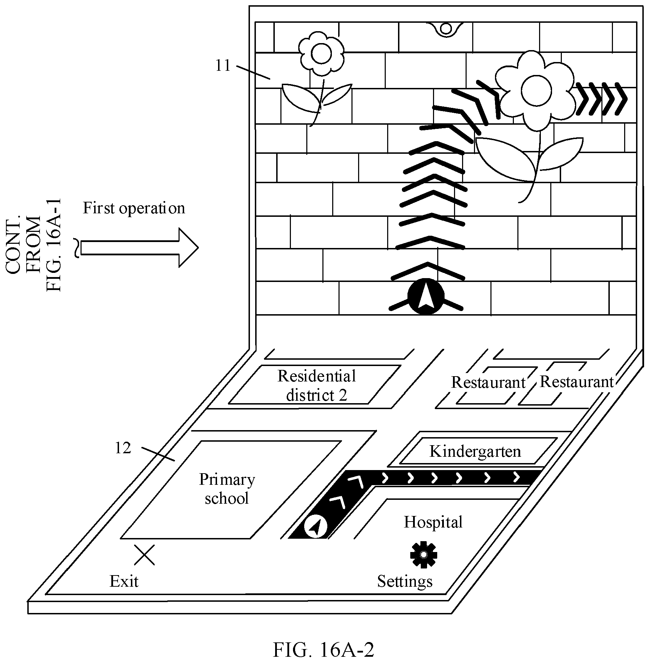

FIG. 16A-1 and FIG. 16A-2 are a schematic diagram 19 of an example of a scenario of a display method applied to an electronic device having a foldable screen according to an embodiment of this application;

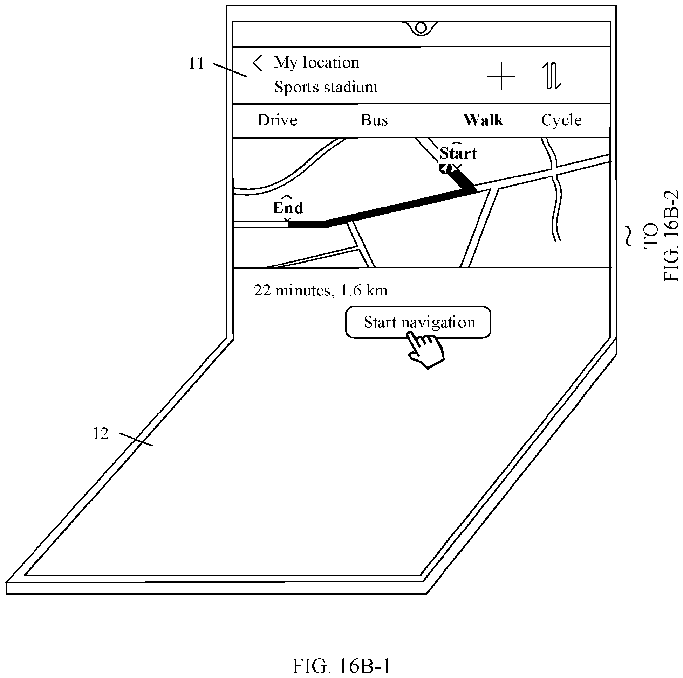

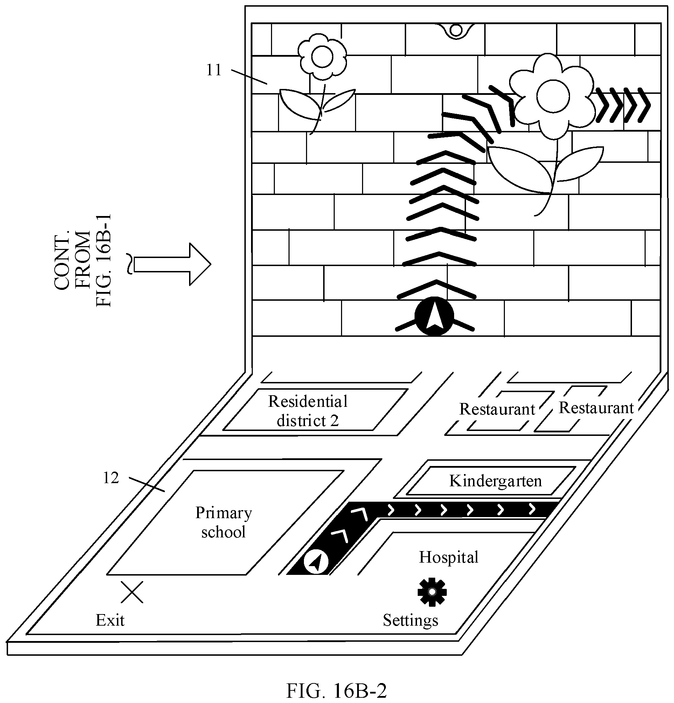

FIG. 16B-1 and FIG. 16B-2 are a schematic diagram 20 of an example of a scenario of a display method applied to an electronic device having a foldable screen according to an embodiment of this application;

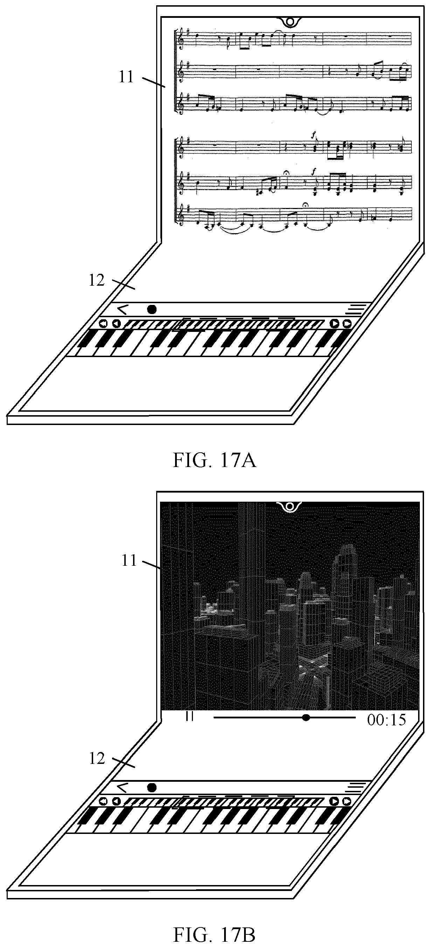

FIG. 17A is a schematic diagram 21 of an example of a scenario of a display method applied to an electronic device having a foldable screen according to an embodiment of this application;
FIG. 17B is a schematic diagram 22 of an example of a scenario of a display method applied to an electronic device having a foldable screen according to an embodiment of this application;

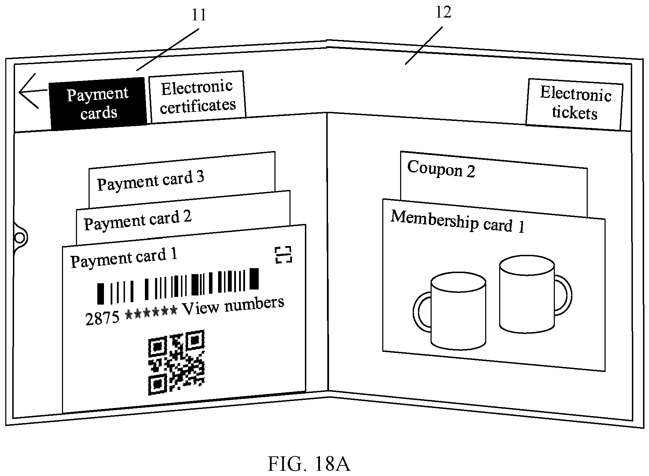

FIG. 18A is a schematic diagram 23 of an example of a scenario of a display method applied to an electronic device having a foldable screen according to an embodiment of this application;

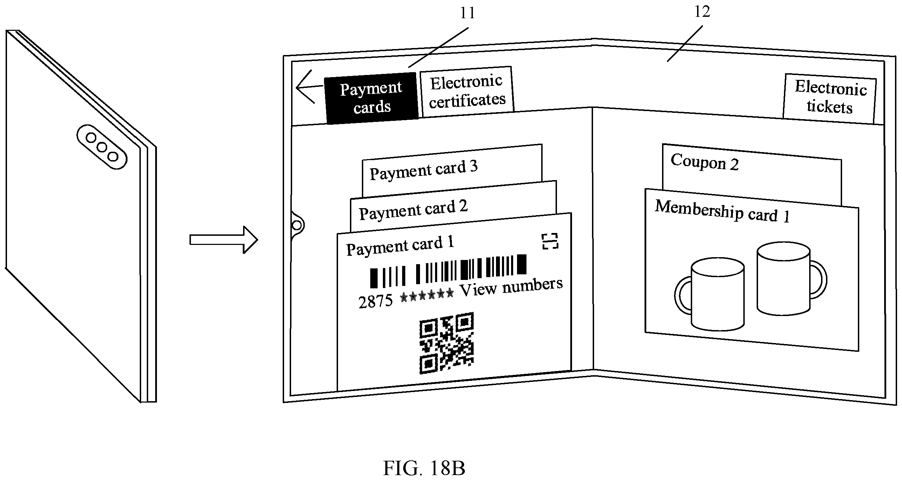

FIG. 18B is a schematic diagram 24 of an example of a scenario of a display method applied to an electronic device having a foldable screen according to an embodiment of this application;

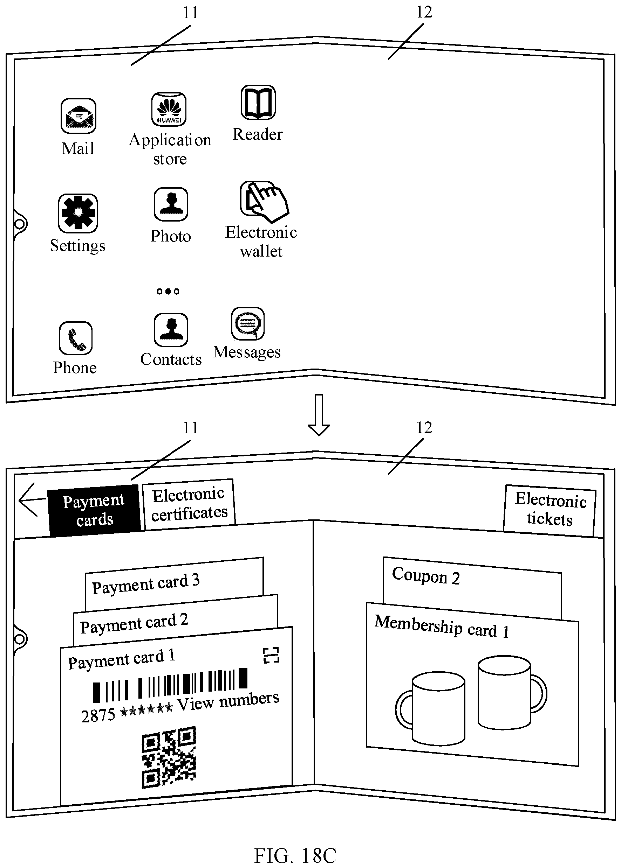

FIG. 18C is a schematic diagram 25 of an example of a scenario of a display method applied to an electronic device having a foldable screen according to an embodiment of this application;

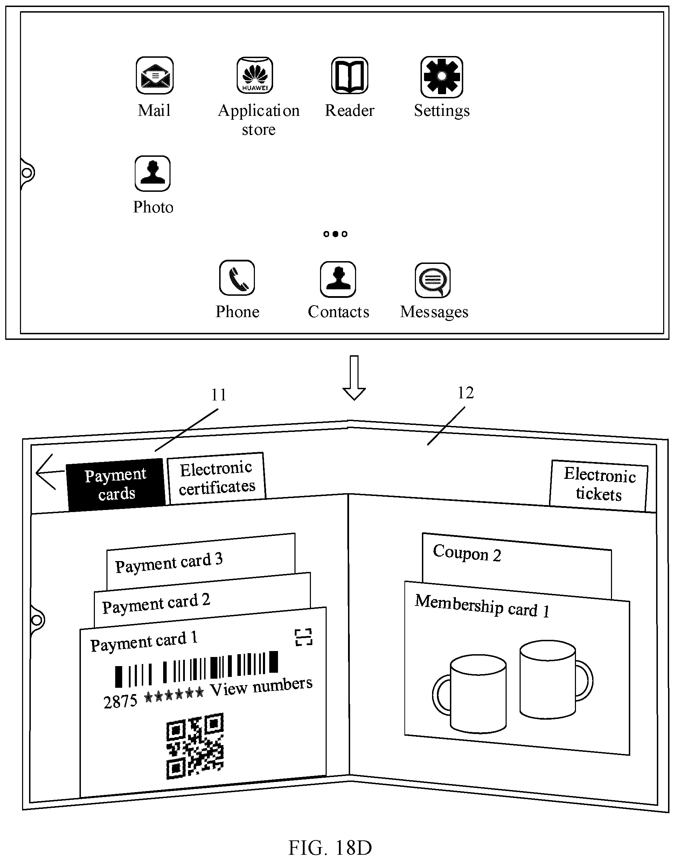

FIG. 18D is a schematic diagram 26 of an example of a scenario of a display method applied to an electronic device having a foldable screen according to an embodiment of this application;

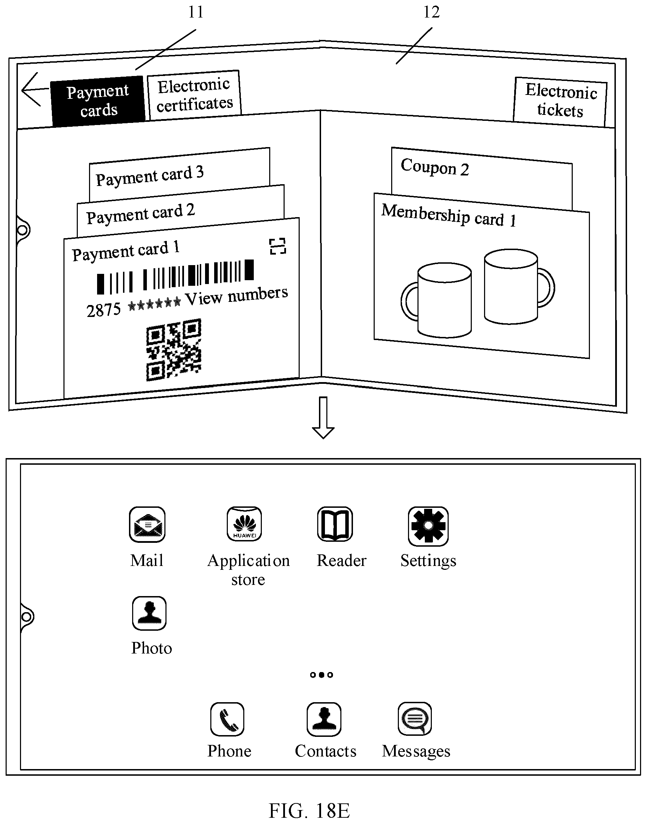

FIG. 18E is a schematic diagram 27 of an example of a scenario of a display method applied to an electronic device having a foldable screen according to an embodiment of this application;

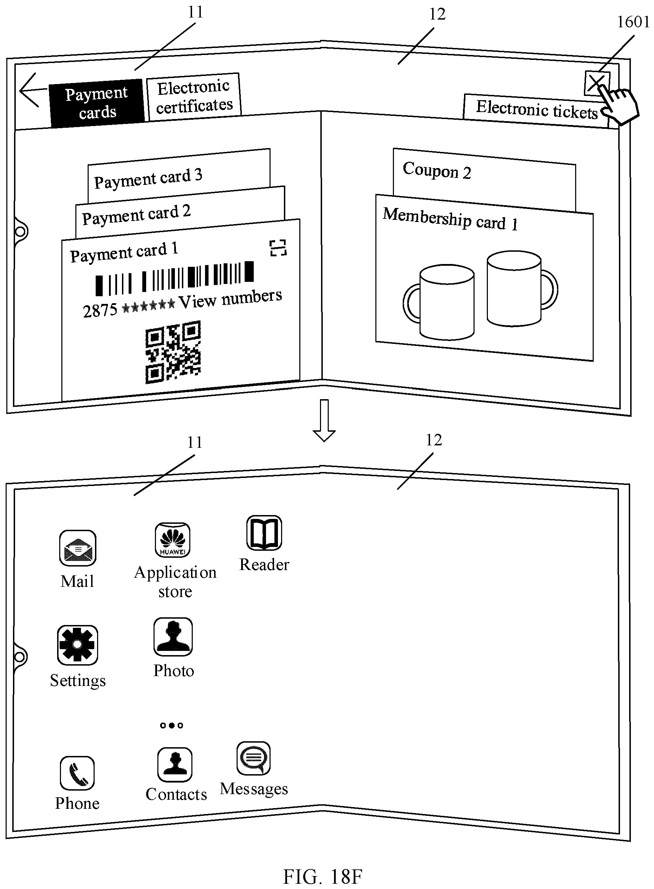

FIG. 18F is a schematic diagram 28 of an example of a scenario of a display method applied to an electronic device having a foldable screen according to an embodiment of this application;

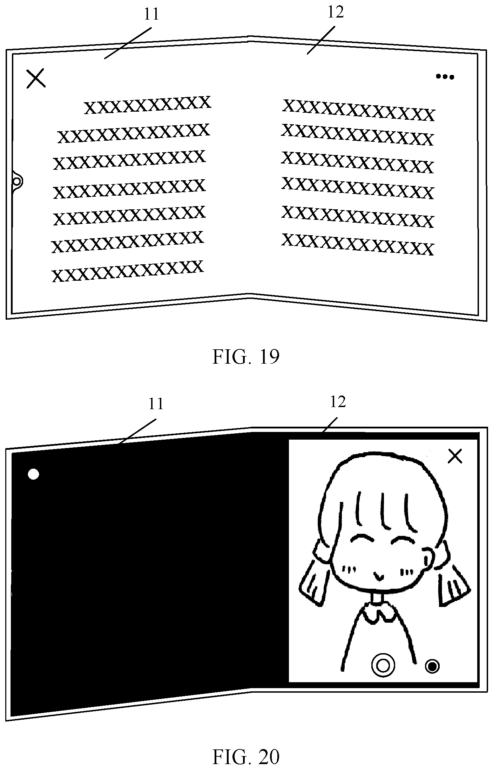

FIG. 19 is a schematic diagram 29 of an example of a scenario of a display method applied to an electronic device having a foldable screen according to an embodiment of this application;
FIG. 20 is a schematic diagram 30 of an example of a scenario of a display method applied to an electronic device having a foldable screen according to an embodiment of this application;

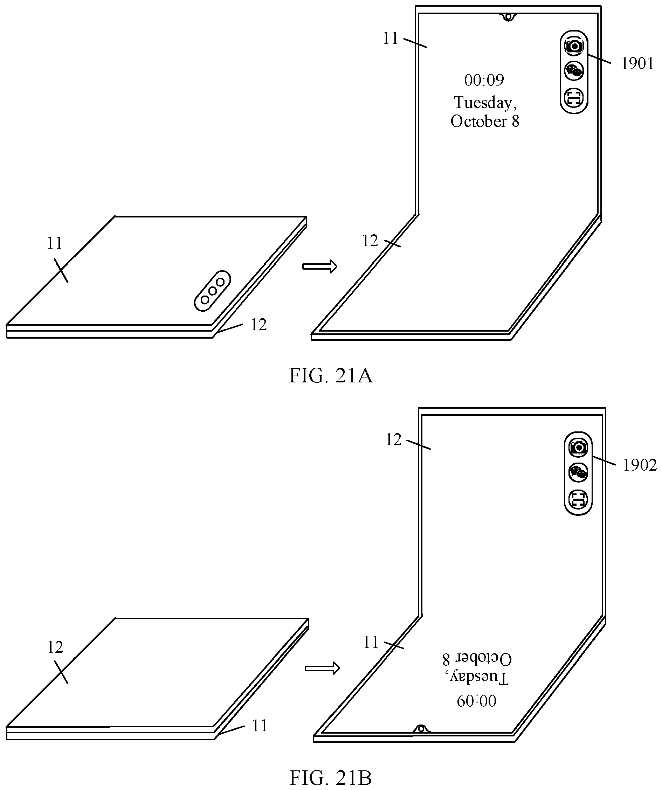

FIG. 21A is a schematic diagram 31 of an example of a scenario of a display method applied to an electronic device having a foldable screen according to an embodiment of this application;
FIG. 21B is a schematic diagram 32 of an example of a scenario of a display method applied to an electronic device having a foldable screen according to an embodiment of this application;

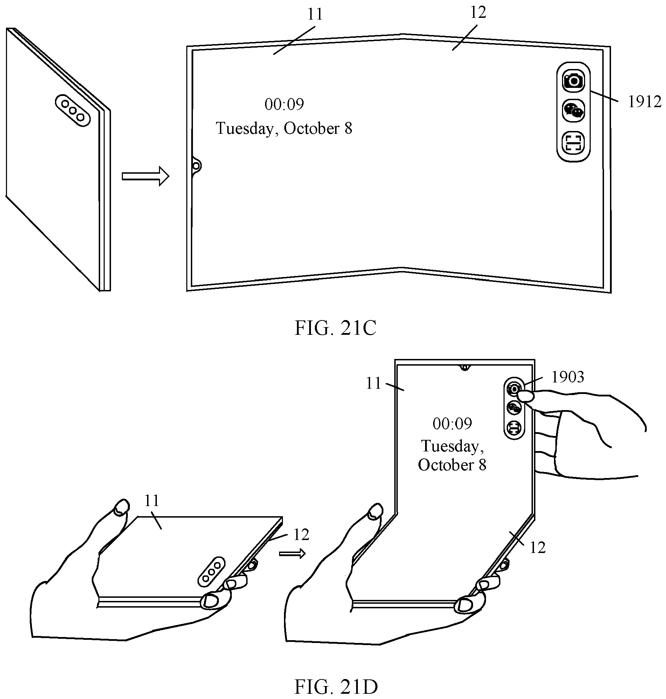

FIG. 21C is a schematic diagram 33 of an example of a scenario of a display method applied to an electronic device having a foldable screen according to an embodiment of this application;
FIG. 21D is a schematic diagram 34 of an example of a scenario of a display method applied to an electronic device having a foldable screen according to an embodiment of this application;

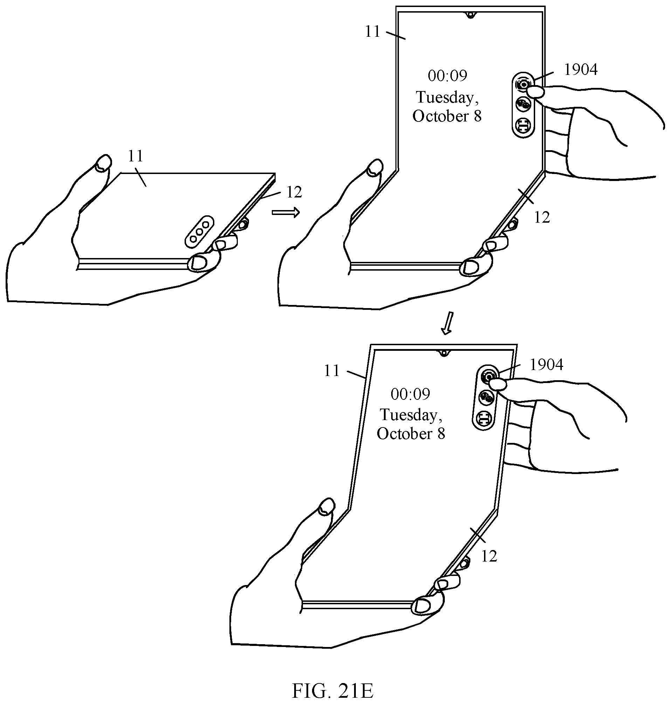

FIG. 21E is a schematic diagram 35 of an example of a scenario of a display method applied to an electronic device having a foldable screen according to an embodiment of this application;

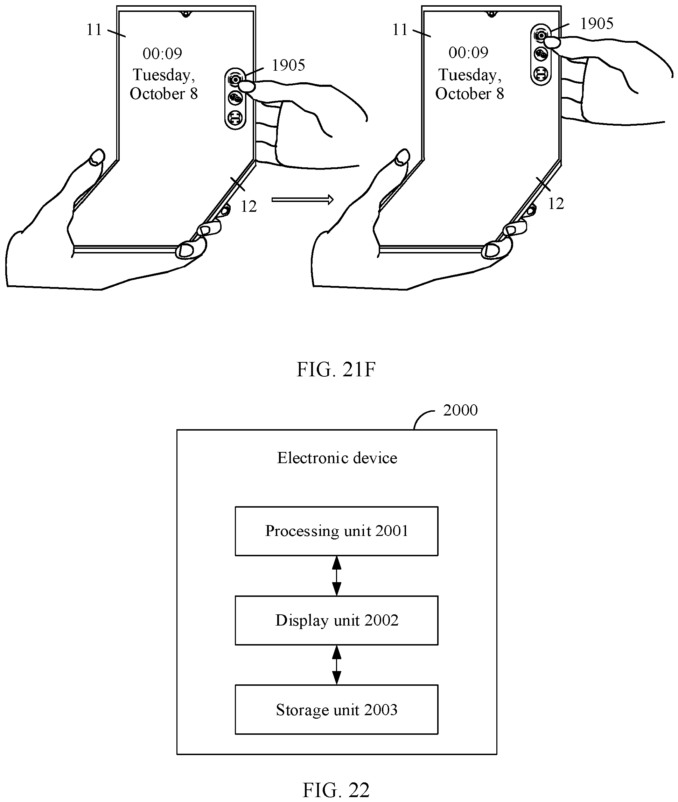

FIG. 21F is a schematic diagram 36 of an example of a scenario of a display method applied to an electronic device having a foldable screen according to an embodiment of this application;
FIG. 22 is a schematic diagram 6 of a structure of an electronic device having a foldable screen according to an embodiment of this application; and

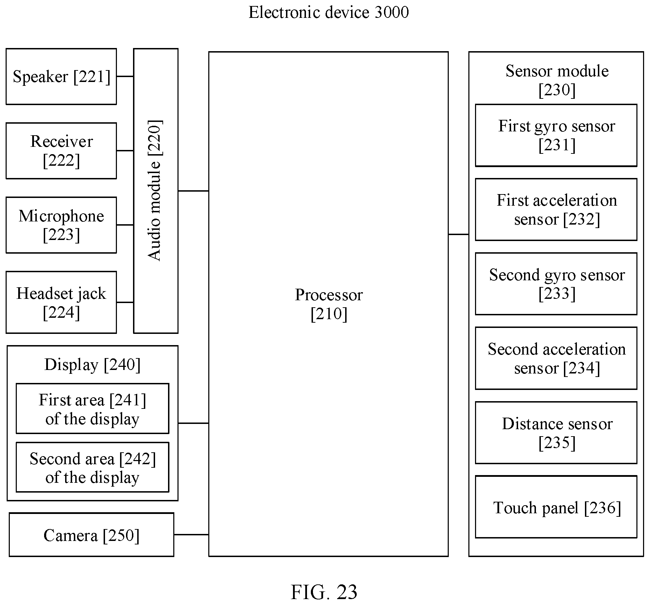

FIG. 23 is a schematic diagram 7 of a structure of an electronic device having a foldable screen according to an embodiment of this application.

### DESCRIPTION OF EMBODIMENTS

An electronic device having a foldable screen may be unfolded for use, or may be used after being folded along one or more rotating shafts. A location of the rotating shaft may be preset, or may be randomly selected by a user.

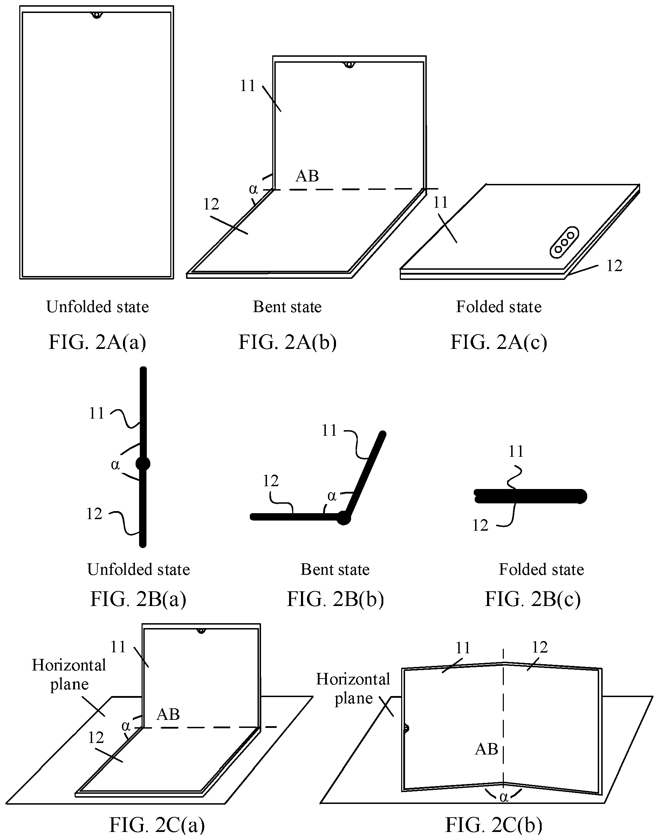

Referring to FIG. 2A(a), an electronic device is in an unfolded state. A user may fold the electronic device shown in FIG. 2A(a) along a rotating shaft of the electronic device. As shown in FIG. 2A(b), after the user folds the electronic device along a rotating shaft AB, a screen (a foldable screen) of the electronic device is divided into two display areas along the rotating shaft AB: a display area 1 and a display area 2. In the embodiments of this application, the display area 1 and the display area 2 that are formed after folding are displayed as two independent display areas. For example, the display area 1 may be referred to as a first area of the foldable screen, and the display area 2 may be referred to as a second area of the foldable screen. A display interface of the first area may be referred to as a first display interface, and a display interface of the second area may be referred to as a second display interface. To be specific, a display area of the foldable screen in which the first display interface is located is the first area, and a display area of the foldable screen in which the second display interface is located is the second area. The first display interface and the second display interface are on two different sides of the rotating shaft. Sizes of the first area and the second area may be the same or different. There may be an included angle α between a plane on which the first area located and a plane on which the second area located. For example, in FIG. 2A(b), the electronic device is in a bent state. The user may continue to fold the electronic device along the rotating shaft AB. As shown in FIG. 2A(c), the electronic device is in a folded state.

It may be understood that the display area 1 and the display area 2 may have other names. For example, the display area 1 is referred to as a screen A of the electronic device, and the display area 2 is referred to as a screen B of the electronic device. Alternatively, the display area 1 is referred to as an upper screen of the electronic device, and the display area 2 is referred to as a lower screen of the electronic device. Alternatively, the display area 1 is referred to as the second area of the foldable screen, and the display area 2 is referred to as the first area of the foldable screen. This is not limited in the embodiments of this application. In the embodiments of this application, an example in which the display area 1 is the first area and the display area 2 is the second area is used for description. It should be noted that, when the foldable screen is in the folded state, the foldable screen includes the first display interface and the second display interface. The display area of the foldable screen in which the first display interface is located is the first area, and the display area of the foldable screen in which the second display interface is located is the second area. In the embodiments of this application, the first area of the foldable screen is referred to as a first screen, and the second area of the foldable screen is referred to as a second screen. It may be understood that the first screen and the second screen are different areas of the same foldable screen.

Based on an included angle between the first screen and the second screen of the electronic device, a form of the electronic device is classified into the unfolded state, the bent state, and the folded state. For example, as shown in FIG. 2A(a), when an included angle α between a first screen 11 and a second screen 12 is greater than or equal to a first threshold, the electronic device is in the unfolded state. As shown in FIG. 2A(b), when the included angle α between the first screen 11 and the second screen 12 is less than the first threshold and greater than a second threshold, the electronic device is in the bent state. As shown in FIG. 2A(c), when the included angle α between the first screen 11 and the second screen 12 is less than or equal to the second threshold, the electronic device is in the folded state. It may be understood that the included angle α between the first screen 11 and the second screen 12 may range from 0° to 180°.

Correspondingly, as shown in FIG. 2B(a), when the included angle α between the first screen 11 and the second screen 12 is greater than or equal to the first threshold, the electronic device is in the unfolded state. As shown in FIG. 2B(b), when the included angle α between the first screen 11 and the second screen 12 is less than the first threshold and greater than the second threshold, the electronic device is in the bent state. As shown in FIG. 2B(c), when the included angle α between the first screen 11 and the second screen 12 is less than or equal to the second threshold, the electronic device is in the folded state. The rotating shaft AB may be a rotating shaft of the electronic device.

In an example, the first threshold may be 180°, and the second threshold may be 0°. In another example, the first threshold may be 150°, and the second threshold may be 60°. In another example, the first threshold may be 120°, and the second threshold may be 60°. In another example, the first threshold may be 120°, and the second threshold may be 30°. In another example, the first threshold may be 120°, and the second threshold may be 0°.

When the electronic device is in the bent state, in some embodiments, the user may fold the electronic device upward and downward. In other words, the electronic device is in a vertically bent state. For example, as shown in FIG. 2C(a), an included angle between the rotating shaft AB and a horizontal plane is less than a first specified angle (for example, 45°). In the vertically bent state, the first screen is on an upper side or a lower side of the second screen. In some other embodiments, the user may fold the electronic device leftward and rightward. In other words, the electronic device is in a horizontally bent state. For example, as shown in FIG. 2C(b), an included angle between the rotating shaft AB and a horizontal plane is less than a first specified angle (for example, 45°). In the horizontally bent state, the first screen is on a left side or a right side of the second screen.

When the user uses the electronic device that is in the bent state, in some embodiments, display content of an application is jointly displayed on a display interface of the first screen and a display interface of the second screen (for example, as shown in FIG. 1(c)). Because there is a specific angle between the first screen and the second screen, the display content of the application is displayed as two bent segments. It is very inconvenient for the user to view and operate the electronic device, and user experience is poor.

The embodiments of this application provide a display method applied to an electronic device having a foldable screen, to provide a display layout adapting to a form of the electronic device. For example, when the electronic device is in a bent state, a first display interface and a second display interface of the electronic device respectively display a first interface and a second interface, and the first interface and the second interface may be different display content. In this way, full display content is separately displayed on the first display interface and the second display interface of the electronic device, and same display content is not displayed in a bent manner. This improves user experience. It should be noted that the first interface and the second interface may be two different interfaces of a same application, or interfaces of two different applications.

The display method that is applied to the electronic device having a foldable screen and provided in the embodiments of this application may be applied to a mobile phone, a tablet computer, a notebook computer, an ultra-mobile personal computer (ultra-mobile personal computer, UMPC), a handheld computer, a netbook, a personal digital assistant (personal digital assistant, PDA), a wearable device, a virtual reality device, or another electronic device having a foldable screen. This is not limited in the embodiments of this application.

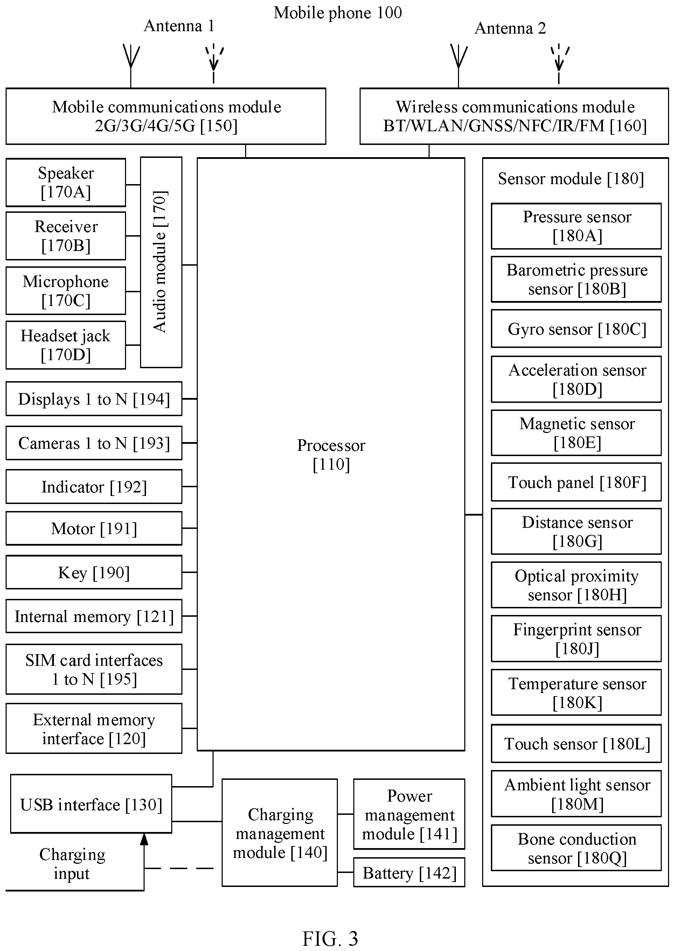

For example, a mobile phone 100 is the electronic device. FIG. 3 is a schematic structural diagram of the mobile phone 100.

The mobile phone 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communications module 150, a wireless communications module 160, an audio module 170, a speaker 170A, a receiver 170B, a microphone 170C, a headset jack 170D, a sensor module 180, a key 190, a motor 191, an indicator 192, a camera 193, a display 194, a subscriber identification module (subscriber identification module, SIM) card interface 195, and the like.

It may be understood that the structure shown in this embodiment of this application does not constitute a specific limitation on the mobile phone 100. In some other embodiments of this application, the mobile phone 100 may include more or fewer components than those shown in the figure, or some components may be combined, or some components may be split, or there may be a different component layout. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may be a nerve center and a command center of the mobile phone 100. The controller may generate an operation control signal based on instruction operation code and a time sequence signal, to complete control of instruction reading and instruction execution.

The memory may further be disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access and reduces a waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The I2C interface is a two-way synchronization serial bus, and includes a serial data line (serial data line, SDA) and a serial clock line (serial clock line, SCL). In some embodiments, the processor 110 may include a plurality of groups of I2C buses. The processor 110 may be separately coupled to a touch sensor 180L, a charger, a flash, the camera 193, and the like through different I2C bus interfaces. For example, the processor 110 may be coupled to the touch sensor 180L through the I2C interface, so that the processor 110 communicates with the touch sensor 180L through the I2C bus interface, to implement a touch function of the mobile phone 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communications module 160 through the I2S interface, to implement a function of answering a call by using a Bluetooth headset.

The PCM interface may also be configured to perform audio communication, and sample, quantize, and code an analog signal. In some embodiments, the audio module 170 may be coupled to the wireless communications module 160 through a PCM bus interface. In some embodiments, the audio module 170 may alternatively transmit an audio signal to the wireless communications module 160 through the PCM interface, to implement a function of answering a call by using a Bluetooth headset. Both the I2S interface and the PCM interface may be used for audio communication.

The UART interface is a universal serial data bus, and is configured to perform asynchronous communication. The bus may be a two-way communications bus, and converts to-be-transmitted data between serial communication and parallel communication. In some embodiments, the UART interface is usually configured to connect the processor 110 to the wireless communications module 160. For example, the processor 110 communicates with a Bluetooth module in the wireless communications module 160 through the UART interface, to implement a Bluetooth function. In some embodiments, the audio module 170 may transmit an audio signal to the wireless communications module 160 through the UART interface, to implement a function of playing music by using a Bluetooth headset.

The MIPI interface may be configured to connect the processor 110 to peripheral devices such as the display 194 and the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a shooting function of the mobile phone 100. The processor 110 communicates with the display 194 through the DSI interface, to implement a display function of the mobile phone 100.

The GPIO interface may be configured through software. The GPIO interface may be configured as a control signal or a data signal. In some embodiments, the GPIO interface may be configured to connect the processor 110 to the camera 193, the display 194, the wireless communications module 160, the audio module 170, the sensor module 180, and the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB Type-C port, or the like. The USB interface 130 may be configured to connect to a charger to charge the mobile phone 100, or may be configured to transmit data between the mobile phone 100 and a peripheral device, or may be configured to connect to a headset to play audio through the headset. Alternatively, the interface may be configured to connect to another electronic device, for example, an AR device.

It may be understood that an interface connection relationship between the modules illustrated in the embodiments of this application is merely an example for description, and does not constitute a limitation on the structure of the mobile phone 100. In some other embodiments of this application, the mobile phone 100 may alternatively use an interface connection manner different from that in the foregoing embodiments, or use a combination of a plurality of interface connection manners.

The charging management module 140 is configured to receive a charging input from the charger. The charger may be a wireless charger or a wired charger. In some embodiments of wired charging, the charging management module 140 may receive a charging input from a wired charger through the USB interface 130. In some embodiments of wireless charging, the charging management module 140 may receive wireless charging input by using a wireless charging coil of the mobile phone 100. The charging management module 140 supplies power to the mobile phone by using the power management module 141 while charging the battery 142.

The power management module 141 is configured to connect to the battery 142 and the charging management module 140 to the processor 110. The power management unit 141 receives an input from the battery 142 and/or the charging management module 140, and supplies power to the processor 110, the internal memory 121, an external memory, the display 194, the camera 193, the wireless communications module 160, and the like. The power management module 141 may further be configured to monitor parameters such as a battery capacity, a quantity of battery cycles, and a battery health status (electric leakage or impedance). In some other embodiments, the power management unit 141 may alternatively be disposed in the processor 110. In some other embodiments, the power management unit 141 and the charging management module 140 may alternatively be disposed in a same device.

A wireless communication function of the mobile phone 100 may be implemented through the antenna 1, the antenna 2, the mobile communications module 150, the wireless communications module 160, the modem processor, the baseband processor, and the like.

The antenna 1 and the antenna 2 are configured to transmit and receive electromagnetic wave signals. Each antenna in the mobile phone 100 may be configured to cover one or more communication bands. Different antennas may further be multiplexed, to improve antenna utilization. For example, the antenna 1 may be multiplexed as a diversity antenna of a wireless local area network. In some other embodiments, the antenna may be used in combination with a tuning switch.

The mobile communications module 150 may provide a wireless communication solution that includes 2G/3G/4G/5G or the like and that is applied to the mobile phone 100. The mobile communications module 150 may include at least one filter, a switch, a power amplifier, a low noise amplifier (low noise amplifier, LNA), and the like. The mobile communications module 150 may receive an electromagnetic wave through the antenna 1, perform processing such as filtering or amplification on the received electromagnetic wave, and transmit a processed electromagnetic wave to the modem processor for demodulation. The mobile communications module 150 may further amplify a signal modulated by the modem processor, and convert the signal into an electromagnetic wave for radiation through the antenna 1. In some embodiments, at least some function modules of the mobile communications module 150 may be disposed in the processor 110. In some embodiments, at least some function modules of the mobile communications module 150 and at least some modules of the processor 110 may be disposed in a same device.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. After being processed by the baseband processor, the low-frequency baseband signal is transmitted to the application processor. The application processor outputs a sound signal through an audio device (which is not limited to the speaker 170A, the receiver 170B, or the like), or displays an image or a video through the display 194. In some embodiments, the modem processor may be an independent component. In some other embodiments, the modem processor may be independent of the processor 110, and is disposed in a same device as the mobile communications module 150 or another function module.

The wireless communications module 160 may provide a wireless communication solution that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like and that is applied to the mobile phone 100. The wireless communications module 160 may be one or more devices that integrate at least one communications processing module. The wireless communications module 160 receives an electromagnetic wave through the antenna 2, performs frequency modulation and filtering on an electromagnetic wave signal, and sends a processed signal to the processor 110. The wireless communications module 160 may further receive a to-be-sent signal from the processor 110, perform frequency modulation and amplification on the signal, and convert the signal into an electromagnetic wave for radiation through the antenna 2.

In some embodiments, in the mobile phone 100, the antenna 1 and the mobile communications module 150 are coupled, and the antenna 2 and the wireless communications module 160 are coupled, so that the mobile phone 100 can communicate with a network and another device by using a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The mobile phone 100 implements a display function by using the GPU, the display 194, the application processor, and the like. The GPU is a microprocessor for image processing, and is connected to the display 194 and the application processor. The GPU is configured to perform mathematical and geometric calculation, and render an image. The processor 110 may include one or more GPUs that execute program instructions to generate or change display information.

The display 194 is configured to display an image, a video, and the like. The display 194 includes a display panel. A liquid crystal display (liquid crystal display, LCD), an organic light-emitting diode (organic light-emitting diode, OLED), an active-matrix organic light emitting diode or an active-matrix organic light emitting diode (active-matrix organic light emitting diode, AMOLED), a flexible light-emitting diode (flexible light-emitting diode, FLED), a mini-LED, a micro-LED, a micro-OLED, quantum dot light emitting diodes (quantum dot light emitting diodes, QLED), or the like may be used for the display panel. In some embodiments, the electronic device 100 may include one or N displays 194, where N is a positive integer greater than 1. In this embodiment of this application, the display 194 may include a display and a touch panel (touch panel, TP). The display is configured to output display content to a user, and the touch panel is configured to receive a touch event input by the user on the display 194.

The mobile phone 100 may implement a shooting function by using the ISP, the camera 193, the video codec, the GPU, the display 194, the application processor, and the like.

The ISP is configured to process data fed back by the camera 193. For example, during shooting, a shutter is pressed, light is transmitted to a photosensitive element of the camera through a lens, an optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a shooting scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) photoelectric transistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into a standard image signal in an RGB format, a YUV format, or the like. In some embodiments, the mobile phone 100 may include one or N cameras 193, where N is a positive integer greater than 1. In an example, the camera 193 may include a wide-angle camera, a videoing camera, a 3D depth sensing camera (for example, a structured light camera, a time of flight (Time of flignt, ToF) depth camera), a long-focus camera, and the like.

In this embodiment of this application, the camera 193 may include a front-facing camera and a rear-facing camera. The front-facing camera may be disposed on a same side as the first screen 11 of the mobile phone 100, and the rear-facing camera may be disposed on a side, of the mobile phone 100, that faces the first screen 11.

The digital signal processor is configured to process a digital signal, and may further process another digital signal in addition to a digital image signal. For example, when the mobile phone 100 selects a frequency, the digital signal processor is configured to perform Fourier transform on frequency energy, and the like.

The video codec is configured to compress or decompress a digital video. The mobile phone 100 may support one or more video codecs. In this way, the mobile phone 100 can play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, by referring to a mode of transmission between human brain neurons, and may further continuously perform self-learning. Applications such as intelligent cognition of the mobile phone 100, such as image recognition, facial recognition, voice recognition, and text understanding, can be implemented by using the NPU.

The external memory interface 120 may be configured to connect to an external storage card such as a micro SD card, to extend a storage capability of the mobile phone 100. The external storage card communicates with the processor 110 through the external memory interface 120, to implement a data storage function. For example, music and videos are stored in the external storage card.

The internal memory 121 may be configured to store computer-executable program code. The executable program code includes instructions. The processor 110 runs the instruction stored in the internal memory 121, to perform various function applications of the mobile phone 100 and data processing. The internal memory 121 may include a program storage area and a data storage area. The program storage area may store an operating system, an application required by at least one function (for example, a sound playing function or an image playing function), and the like. The data storage area may store data (for example, audio data or an address book) created during use of the mobile phone 100, and the like. In addition, the internal memory 121 may include a high-speed random access memory, and may further include a nonvolatile memory, for example, at least one magnetic disk storage device, a flash memory device, or a universal flash storage (universal flash storage, UFS).

The mobile phone 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal output, and is further configured to convert an analog audio input into a digital audio signal. The audio module 170 may further be configured to code and decode an audio signal. In some embodiments, the audio module 170 may be disposed in the processor 110, or some function modules of the audio module 170 are disposed in the processor 110.

The speaker 170A, also referred to as a "horn", is configured to convert an audio electrical signal into a sound signal. The mobile phone 100 may listen to music or answer a hands-free call through the speaker 170A.

The receiver 170B, also referred to as an "earpiece", is configured to convert an audio electrical signal into a sound signal. When a call is answered or voice information is received by using the mobile phone 100, the receiver 170B may be put close to a human ear to listen to a voice.

The microphone 170C, also referred to as a "mike" or a "microphone", is configured to convert a sound signal into an electrical signal. When making a call or sending voice information, the user may make a sound near the microphone 170C through the mouth of the user, to input a sound signal to the microphone 170C. At least one microphone 170C may be disposed in the mobile phone 100. In some other embodiments, two microphones 170C may be disposed in the mobile phone 100, to collect a sound signal and further implement a noise reduction function. In some other embodiments, three, four, or more microphones 170C may alternatively be disposed in the mobile phone 100, to collect a sound signal, reduce noise, further identify a sound source, implement a directional recording function, and the like.

The headset jack 170D is configured to connect to a wired headset. The headset jack 170D may be the USB interface 130 or a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There is a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The mobile phone 100 determines pressure intensity based on a capacitance change. When a touch operation is performed on the display 194, the mobile phone 100 detects intensity of the touch operation by using the pressure sensor 180A. The mobile phone 100 may also calculate a touch location based on a detection signal of the pressure sensor 180A. In some embodiments, touch operations that are performed in a same touch location but have different touch operation intensity may correspond to different operation instructions. For example, when a touch operation whose touch operation intensity is less than a first pressure threshold is performed on an SMS message application icon, an instruction for viewing an SMS message is executed. When a touch operation whose touch operation intensity is greater than or equal to the first pressure threshold is performed on the SMS message application icon, an instruction for creating a new SMS message is executed.

The barometric pressure sensor 180B is configured to measure barometric pressure. In some embodiments, the mobile phone 100 calculates an altitude by using the barometric pressure measured by the barometric pressure sensor 180B, to assist in positioning and navigation.

The gyro sensor 180C may be configured to determine a motion posture of the mobile phone 100. In some embodiments, angular velocities of the mobile phone 100 around three axes (namely, axes x, y, and z) may be determined by using the gyro sensor 180C. The gyro sensor 180C may be configured to perform image stabilization during shooting. For example, when the shutter is pressed, the gyro sensor 180C detects an angle at which the mobile phone 100 shakes, and calculates, based on the angle, a distance for which a lens module needs to compensate, so that the lens cancels the shake of the mobile phone 100 through reverse motion, to implement image stabilization. The gyro sensor 180C may further be used in a navigation scenario and a somatic game scenario.

The acceleration sensor 180D may detect magnitude of accelerations in various directions (usually on three axes) of the mobile phone 100. When the mobile phone 100 is still, a value and a direction of the gravity acceleration may be detected.

The magnetic sensor 180E includes a Hall sensor, a magnetometer, and the like. The Hall sensor can detect a direction of the magnetic field. The magnetometer is configured to measure magnitude and a direction of the magnetic field. The magnetometer may measure ambient magnetic field intensity, for example, may measure the magnetic field intensity by using the magnetometer to obtain azimuth information of a carrier of the magnetometer.

The touch panel 180F may be configured to detect a touch location of the user. In some embodiments, the touch panel 180F may be configured to detect a touch point of the user on the mobile phone 100, to further determine, based on the touch location by using a preset grasping algorithm, a current grasping posture of the user for grasping the mobile phone.

The distance sensor 180G is configured to measure a distance. The mobile phone 100 may measure a distance through infrared light or a laser. In some embodiments, in a shooting scenario, the mobile phone 100 may measure a distance by using the distance sensor 180G, to implement fast focusing.

For example, the optical proximity sensor 180H may include a light emitting diode (LED) and an optical detector, for example, a photodiode. The light-emitting diode may be an infrared light-emitting diode. The mobile phone 100 emits infrared light through the light-emitting diode. The mobile phone 100 detects infrared reflected light from a nearby object by using the photodiode. When sufficient reflected light is detected, the mobile phone 100 may determine that there is an object near the mobile phone 100. When insufficient reflected light is detected, the mobile phone 100 may determine that there is no object near the mobile phone 100. The mobile phone 100 may detect, by using the optical proximity sensor 180H, that the user holds the mobile phone 100 close to an ear to make a call, to automatically turn off a screen for power saving. The optical proximity sensor 180H may also be used in a smart cover mode or a pocket mode to automatically unlock or lock the screen.

The ambient light sensor 180M is configured to sense ambient light brightness. The mobile phone 100 may adaptively adjust brightness of the display 194 based on the sensed ambient light brightness. The ambient light sensor 180M may also be configured to automatically adjust white balance during shooting. The ambient light sensor 180M may also cooperate with the optical proximity sensor 180H to detect whether the mobile phone 100 is in a pocket to prevent an accidental touch.

The fingerprint sensor 180J is configured to collect a fingerprint. The mobile phone 100 may use a feature of the collected fingerprint to implement fingerprint unlocking, application access locking, fingerprint shooting, fingerprint call answering, and the like.

The temperature sensor 180K is configured to detect a temperature. In some embodiments, the mobile phone 100 executes a temperature processing policy based on the temperature detected by the temperature sensor 180K. For example, when the temperature reported by the temperature sensor 180K exceeds a threshold, the mobile phone 100 lowers performance of a processor near the temperature sensor 180K, to reduce power consumption for thermal protection. In some other embodiments, when the temperature is lower than another threshold, the mobile phone 100 heats the battery 142 to prevent the mobile phone 100 from being shut down abnormally because of a low temperature. In some other embodiments, when the temperature is lower than still another threshold, the mobile phone 100 boosts an output voltage of the battery 142 to avoid abnormal shutdown caused by a low temperature.

The touch sensor 180L is also referred to as a "touch panel". The touch sensor 180L may be disposed on the display 194, and the touch sensor 180L and the display 194 form a touchscreen, which is also referred to as a "touch screen". The touch sensor 180L is configured to detect a touch operation performed on or near the touch sensor 180L. The touch sensor may transfer the detected touch operation to the application processor, to determine a type of the touch event. A visual output related to the touch operation may be provided by using the display 194. In some other embodiments, the touch sensor 180L may alternatively be disposed on a surface of the mobile phone 100 at a location different from that of the display 194.

The bone conduction sensor 180Q may obtain a vibration signal. In some embodiments, the bone conduction sensor 180Q may obtain a vibration signal of a vibration bone of a human vocal-cord part. The bone conduction sensor 180Q may also be in contact with a human pulse to receive a blood pressure beating signal. In some embodiments, the bone conduction sensor 180Q may alternatively be disposed in the headset to form a bone conduction headset. The audio module 170 may obtain a voice signal through parsing based on the vibration signal that is of the vibration bone of the vocal-cord part and that is obtained by the bone conduction sensor 180Q, to implement a voice function. The application processor may parse heart rate information based on the blood pressure beating signal obtained by the bone conduction sensor 180Q, to implement a heart rate detection function.

In this embodiment of this application, a plurality of groups of sensors may be disposed on the mobile phone 100. For example, the first screen 11 and the second screen 12 of the mobile phone 100 each are provided with a sensor module.

For example, an acceleration sensor (acceleration, ACC) 1 and a gyro sensor (gyroscope, GYRO) 1 are disposed on the first screen 11 of the mobile phone 100, and an acceleration sensor 2 and a gyro sensor 2 are disposed on the second screen 12 of the mobile phone 100. The mobile phone 100 may read data of the ACC 1 and the GYRO 1, to obtain a movement acceleration of the first screen and a rotational angular velocity of the first screen, so as to obtain magnitude and a direction of a gravity acceleration G1 of the first screen. The mobile phone 100 may read data of the ACC 2 and the GYRO 2, to obtain a movement acceleration of the second screen and a rotational angular velocity of the second screen, so as to obtain magnitude and a direction of a gravity acceleration G2 of the second screen. The mobile phone 100 may further obtain parameters such as an included angle α between the first screen and the second screen based on the G1 and the G2. For a specific method in which the mobile phone 100 obtains a gravity acceleration G and the included angle α between the first screen and the second screen based on data of an ACC and a GYRO, refer to descriptions in the conventional technology. Details are not described herein again. Alternatively, if magnitude and a direction of the gravity acceleration G can be detected by using one sensor A, the sensor A may be separately disposed on the first screen 11 and the second screen 12. For example, the acceleration sensor and the gyro sensor may be integrated into one sensor (an A+G sensor), and the sensor is separately disposed on the first screen 11 and the second screen 12.

For example, a plurality of groups of touch panels may further be disposed on each of the first screen 11 and the second screen 12 of the mobile phone 100, to determine a grasping posture of the user when the user uses the mobile phone 100.

The key 190 includes a power key, a volume key, and the like. The key 190 may be a mechanical key or a touch key. The mobile phone 100 receives a key input, and generates a key signal input related to a user setting and function control of the mobile phone 100.

The motor 191 may generate a vibration prompt. The motor 191 may be configured to provide an incoming call vibration prompt and a touch vibration feedback. For example, touch operations performed on different applications (for example, shooting and audio playing) may correspond to different vibration feedback effects. The motor 191 may also correspond to different vibration feedback effects for touch operations performed on different areas of the display 194. Different application scenarios (for example, a time reminder, information receiving, an alarm clock, a game) may also correspond to different vibration feedback effects. The touch vibration feedback effect can also be customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or plugged from the SIM card interface 195, to implement contact with or separation from the mobile phone 100. The mobile phone 100 may support one or N SIM card interfaces, where N is a positive integer greater than 1. The SIM card interface 195 may support a nano-SIM card, a micro-SIM card, a SIM card, and the like. A plurality of cards may be simultaneously inserted in a same SIM card interface 195. The plurality of cards may be of a same type or of different types. The SIM card interface 195 may also be compatible with different types of SIM cards. The SIM card interface 195 may also be compatible with an external storage card. The mobile phone 100 interacts with a network by using the SIM card, to implement functions such as calling and data communication. In some embodiments, the mobile phone 100 uses an eSIM, namely, an embedded SIM card. The eSIM card may be embedded in the mobile phone 100, and cannot be separated from the mobile phone 100.

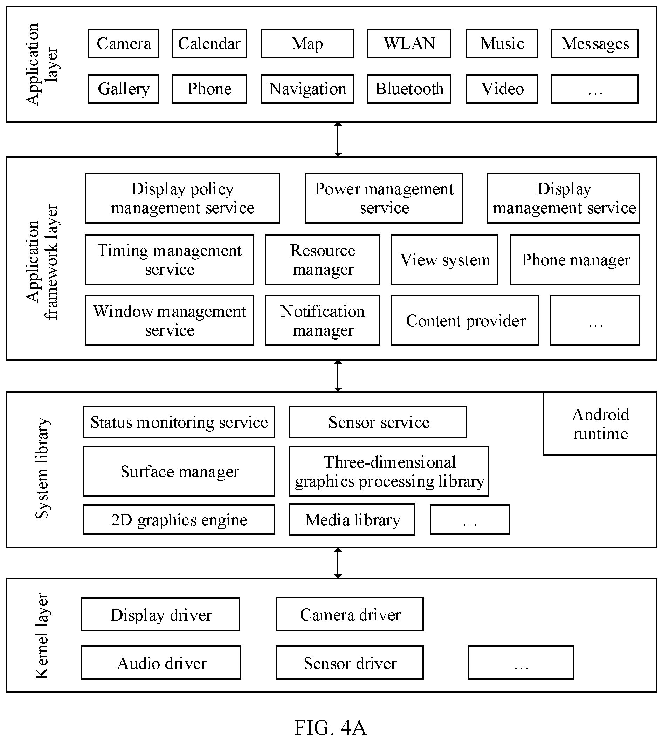

A software system of the mobile phone 100 may use a layered architecture, an event-driven architecture, a microkernel architecture, a microservice architecture, or a cloud architecture. In this embodiment of this application, the layered architecture is used as an example to describe the software structure of the mobile phone 100. FIG. 4A is a block diagram of the software structure of the mobile phone 100 according to an embodiment of this application.

In the layered architecture, software is divided into several layers, and each layer has a clear role and task. The layers communicate with each other through a software interface. In some embodiments, the mobile phone 100 may include an application layer, an application framework layer, an Android runtime (Android runtime) and system library, and a kernel layer.

The application layer may include a series of application packages.

As shown in FIG. 4A, the application packages may include applications such as "camera", "gallery", "calendar", "calls", "maps", "navigation", "WLAN", "Bluetooth", "music", "videos", and "SMS messages".

The application framework layer provides an application programming interface (application programming interface, API) and a programming framework for an application at the application layer. The application framework layer includes some predefined functions.

As shown in FIG. 4A, the application framework layer may include a display policy management service, a power management service (power management service, PMS), and a display management service (display manager service, DMS). Certainly, the application framework layer may further include an alarm management service (alarm manager service, AMS), a window management service (window manager service, WMS), a content provider, a view system, a phone manager, a resource manager, a notification manager, and the like. This is not limited in this embodiment of this application.

The display policy management service is used to control a display policy of the mobile phone 100. In this embodiment of this application, when learning from a bottom layer that the mobile phone 100 is in a bent state, the display policy management service may indicate, through the DMS, the WMS to control the application on the mobile phone 100 to be displayed on the screen according to the display method provided in the embodiments of this application.

The power management service may be used to control turning on or off the screen of the mobile phone 100. For example, in some cases, the power management service may control turning on or off the first screen or the second screen of the mobile phone 100.

The timer management service is used to manage a timer, an alarm, or the like.

The window management service is configured to manage a window program. A window management service may obtain a size of the display, determine whether there is a status bar, perform screen locking, take a screenshot, and the like.

The content provider is configured to: store and obtain data, and enable the data to be accessed by an application. The data may include a video, an image, audio, calls that are made and received, a browsing history, a bookmark, an address book, and the like.

The view system includes visual controls such as a control for displaying a text and a control for displaying an image. The view system can be used to construct an application. A display interface may include one or more views. For example, a display interface including an SMS message notification icon may include a text display view and an image display view.

The phone manager is configured to provide a communication function of the mobile phone 100, for example, management of a call status (including answering or declining).

The resource manager provides various resources for an application, such as a localized character string, an icon, an image, a layout file, and a video file.

The notification manager enables an application to display notification information in the status bar, and may be configured to convey a notification message. The notification manager may automatically disappear after a short pause without requiring a user interaction. For example, the notification manager is configured to notify download completion, give a message prompt, and the like. The notification manager may alternatively be a notification that appears in a top status bar of the system in a form of a graph or a scroll bar text, for example, a notification of an application running on the background, or a notification that appears on the screen in a form of a dialog window. For example, text information is prompted in the status bar, a prompt tone is produced, the electronic device vibrates, or an indicator light blinks.

The Android runtime includes a kernel library and a virtual machine. The Android runtime is responsible for scheduling and management of the Android system.

The kernel library includes two parts: One is a function that needs to be called by a java language, and the other is a kernel library of Android.

The application layer and the application framework layer run in the virtual machine. The virtual machine executes java files of the application layer and the application framework layer as binary files. The virtual machine is configured to perform functions such as object lifecycle management, stack management, thread management, security and exception management, and garbage collection.

The system library may include a plurality of function modules, for example, a status monitoring service, a sensor service, a surface manager (surface manager), a media library (Media Libraries), a three-dimensional graphics processing library (for example, OpenGL ES), and a 2D graphics engine (for example, SGL).

The status monitoring service may be used to identify various states of the mobile phone 100, for example, a form (including an unfolded state, a bent state, and a folded state) of the mobile phone, a grasping posture of the user for grasping the mobile phone 100, and a location of the mobile phone 100 relative to the user.

The sensor service is used to store and process sensor-related data, for example, provide output data of each sensor, and perform fusion processing on output data of a plurality of sensors.

The surface manager is configured to manage a display subsystem and provide fusion of 2D and 3D image layers for a plurality of applications.

The media library supports playback and recording of a plurality of commonly used audio and video formats, static image files, and the like. The media library may support a plurality of audio and video coding formats, such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

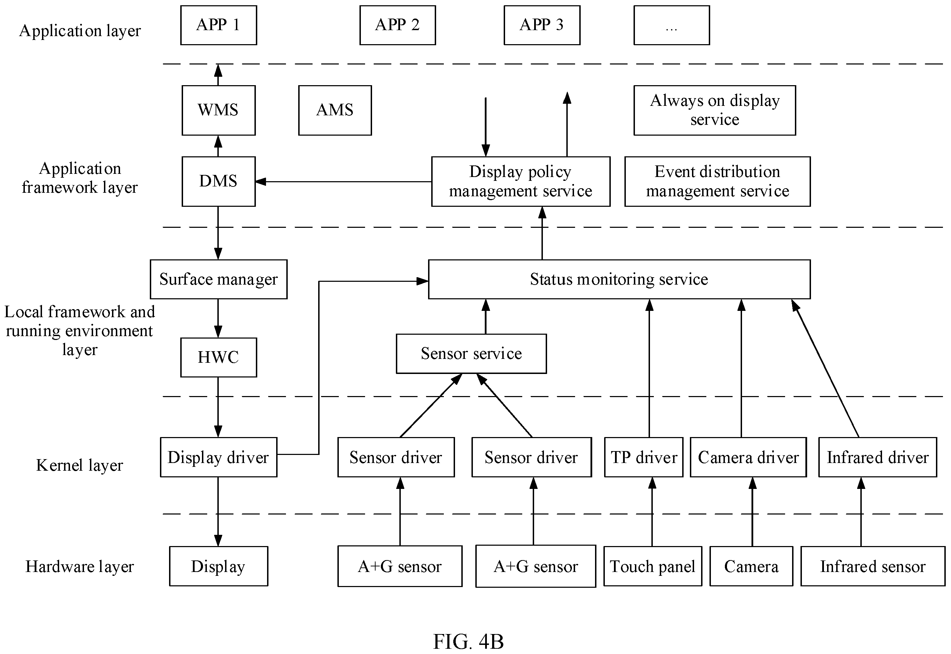

Similar to FIG. 4A, FIG. 4B is a schematic diagram of a data flow direction inside the mobile phone 100. From top to bottom, the mobile phone 100 includes an application layer, an application framework layer, a local framework and running environment layer (namely, a native layer), a kernel layer, and a hardware layer.

In an example, the hardware layer includes a plurality of A+G sensors. For example, one A+G sensor is disposed on each of the first screen 11 and the second screen 12 of the mobile phone 100. Output data of the A+G sensor on the first screen 11 is a gravity acceleration G1, and output data of the A+G sensor on the second screen 12 is a gravity acceleration G2. A sensor driver at the kernel layer receives the output data of the corresponding A+G sensors, and outputs the G1 and the G2 to a sensor service at the native layer.

The sensor service may obtain a pitch angle (x1, y1, z1) of the first screen 11 based on components of the G1 on three axes of a coordinate system, and obtain a pitch angle (x2, y2, z2) of the second screen 12 based on components of the G2 on the three axes of the coordinate system, and outputs (x1, y1, z1) and (x2, y2, z2) to a status monitoring service.

The status monitoring service may obtain an included angle α between the first screen 11 and the second screen 12 based on (x1, y1, z1) and (x2, y2, z2), and determine a form of the mobile phone based on the included angle α. Certainly, the sensor service may alternatively calculate the included angle α between the first screen 11 and the second screen 12 based on (x1, y1, z1) and (x2, y2, z2), and output the included angle α to the status monitoring service. The status monitoring service determines the form of the mobile phone based on the included angle α.

The status monitoring service may further determine a posture of the first screen 11 (namely, an angle of the first screen 11 relative to a horizontal plane) based on (x1, y1, z1), determine a posture of the second screen 12 (namely, an angle of the second screen 12 relative to the horizontal plane) based on (x2, y2, z2), and determine, based on the included angle α, the posture of the first screen 11, and the posture of the second screen 12, that the mobile phone 100 is in a horizontally bent state or a vertically bent state.

Further, a display policy management service receives the form of the mobile phone 100 reported by the status monitoring service, and determines first display content on the first screen 11 and second display content on the second screen 12 based on the form of the mobile phone 100 according to the display method provided in the embodiments of this application.

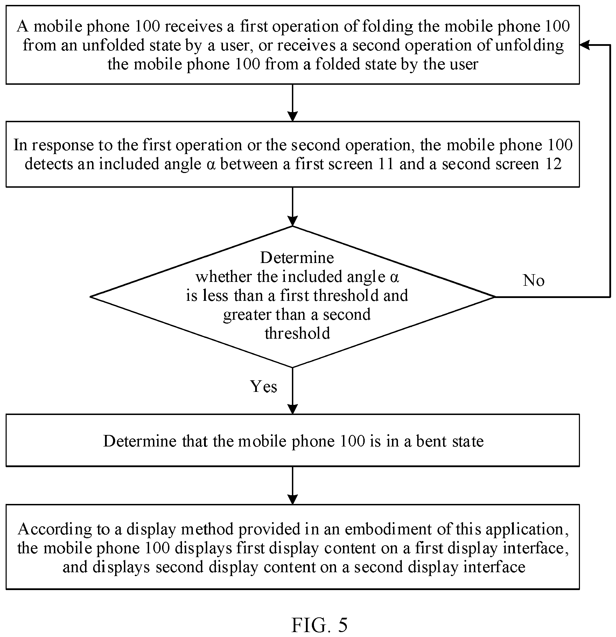

In some embodiments, as shown in FIG. 5, the mobile phone 100 receives a first operation of folding the mobile phone 100 from the unfolded state by the user, or receives a second operation of unfolding the mobile phone 100 from the folded state by the user. The first operation or the second operation may be implemented in a trigger manner such as manual triggering, key pressing, electronic device tapping, pressure triggering, triggering by a biometric feature such as a fingerprint, or touchscreen tapping. In response to the first operation or the second operation, the mobile phone 100 detects the included angle α between the first screen 11 and the second screen 12. If it is determined that the included angle α is less than a first threshold and greater than a second threshold, it is determined that the mobile phone 100 is in the bent state. Further, the mobile phone 100 may determine, based on the postures of the first screen 11 and the second screen 12, that the mobile phone 100 is in the horizontally bent state or the vertically bent state. If it is determined that the mobile phone 100 is in the bent state, the mobile phone 100 performs display according to the display method provided in the embodiments of this application.

The following uses an example in which the mobile phone is used as an electronic device to describe in detail, with reference to a specific scenario, the display method that is provided in the embodiments of this application and that is applied to the electronic device having a foldable screen.

In some embodiments, when the mobile phone 100 is in the bent state, a first display interface of the mobile phone 100 displays the first display content, and a second display interface displays the second display content. The first display content and the second display content may be different display interfaces of a same application, or may be display interfaces of different applications. Alternatively, the first display interface or the second display interface may be a black screen interface. This is not limited in this embodiment of this application.

In some examples, the mobile phone 100 is in the unfolded state, and the mobile phone 100 displays a running interface of a first application in full screen by using the unfolded foldable screen. The mobile phone 100 receives an operation of folding the mobile phone from the unfolded state to the bent state by the user. In response to that the mobile phone is folded from the unfolded state to the bent state, the first display interface of the mobile phone 100 displays the running interface of the first application, and the second display interface displays a second interface. The second interface does not include the running interface of the first application. A size of a window, of the running interface of the first application, that is displayed by using the unfolded foldable screen is a first size. A size of a window, of the running interface of the first application, that is displayed by using the first display interface is a second size. The first size is greater than the second size. In other words, in response to that the mobile phone is folded from the unfolded state to the bent state, the running interface of the first application is scaled down from the full foldable screen to the first display interface.

In some other examples, the mobile phone 100 is in the bent state, and the mobile phone 100 receives an input of the user for starting a first application. In response to the input of the user for starting the first application, the first display interface of the mobile phone 100 displays a running interface of the first application, and the second display interface displays a second interface. The second interface does not include the running interface of the first application. It should be noted that, in the following embodiment, an example in which the input for starting the first application is received on the first display interface and the running interface of the first application is displayed on the first display interface is used for description. In an actual application, the input for starting the first application may alternatively be received on the second display interface, and the running interface of the first application is displayed on the second display interface. Alternatively, the input for starting the first application is received on the second display interface, and the running interface of the first application is displayed on the first display interface. Alternatively, the input for starting the first application is received on the first display interface, and the running interface of the first application is displayed on the second display interface. Examples are not enumerated one by one in this embodiment of this application.

Further, when the mobile phone 100 is in the bent state, the first display interface of the mobile phone 100 displays the running interface of the first application, and the second display interface displays the second interface or the second screen 12 is turned off. The mobile phone 100 receives an operation of unfolding the mobile phone from the bent state to the unfolded state by the user. In response to the operation of unfolding the mobile phone from the bent state to the unfolded state by the user, the mobile phone 100 displays the running interface of the first application in full screen by using the unfolded foldable screen.

In an implementation, referring to FIG. 4B, the sensor service of the mobile phone outputs, to the status monitoring service, the pitch angle of the first screen and the pitch angle of the second screen that are obtained based on the output data of the A+G sensors. The status monitoring service obtains the included angle α between the first screen and the second screen based on the pitch angle of the first screen and the pitch angle of the second screen, and determines, based on α, that the mobile phone is in the unfolded state or the bent state.

When the mobile phone is in the unfolded state, the status monitoring service notifies the display policy management service that the mobile phone is in the unfolded state. The display policy management service determines to display the first display content in full screen on the unfolded foldable screen.

When the mobile phone is in the bent state, the status monitoring service notifies the display policy management service that the mobile phone is in the bent state. The display policy management service determines to display the first display content on the first display interface of the foldable screen, and display the second display content on the second display interface.

Then, the display policy management service notifies a DMS of content separately displayed on the first display interface and the second display interface. Further, the DMS indicates a surface manager to synthesize display content corresponding to the first display interface and display content corresponding to the second display interface, and invokes a display driver to display corresponding display content on a corresponding display interface (the first display interface or the second display interface).

The user may use the mobile phone to make a video call. If the mobile phone detects an operation of starting a video call application by the user, and the mobile phone is in the bent state, the first display interface of the foldable screen of the mobile phone displays a video call interface, and the second display interface of the foldable screen of the mobile phone displays another interface, or the second screen of the mobile phone is turned off (the second display interface is a black screen interface). An interface displayed on the second display interface may be a preset interface, or the second display interface displays an interface displayed by the electronic device before the video call, for example, a desktop or a WeChat chat interface. In this way, when the video call is made by using the first display interface, another application may be run by using the second display interface. For example, the video call is made by using the first display interface, and information is sent or a gallery is viewed by using the second display interface. Optionally, the second display interface may display a preset simple key, for example, a navigation key, in a screen-off state. A display interface of the first screen may be controlled by using the navigation key. Optionally, the navigation key may alternatively be displayed on the first screen.

In this way, in the bent state of the mobile phone, the first display interface of the foldable screen displays the video call interface, and the second display interface of the foldable screen displays another interface. The video call interface may be fully displayed on the first display interface without bending. User experience is relatively good during the video call. In addition, the another interface may further be displayed on the second display interface, so that the user can use another function during the video call. Alternatively, the second screen is turned off to reduce energy consumption.

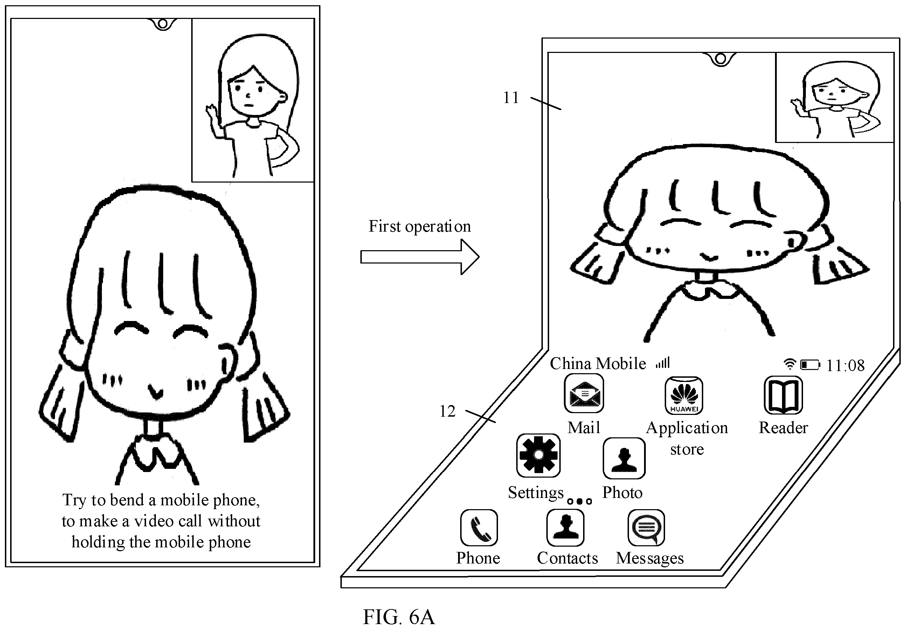

In an example, as shown in FIG. 6A, the user makes a video call in the unfolded state of the mobile phone 100. A display interface of the full screen (the first screen 11 and the second screen 12) of the mobile phone 100 displays a video call interface in full screen. In other words, when the mobile phone 100 is in the unfolded state for the video call, the foldable screen includes only one display interface, namely, the display interface for displaying the video call interface. The mobile phone 100 receives a first operation of folding the mobile phone from the unfolded state by the user. In response to the first operation of folding the mobile phone from the unfolded state by the user, the display interface of the foldable screen of the mobile phone 100 includes two display interfaces, namely, the first display interface and the second display interface. The first display interface of the foldable screen of the mobile phone 100 displays the video call interface, and the second display interface of the foldable screen displays the desktop. The first display interface and the second display interface may be respectively on two different sides of a rotating shaft of the mobile phone 100. It should be noted that the video call interface displayed in full screen on the unfolded foldable screen does not include the desktop or the WeChat chat interface.

In another example, as shown in FIG. 6B-1 and FIG.6B-2, the user enables a video call function of "WeChat" in the bent state of the mobile phone 100 to make a video call. If the mobile phone 100 determines that the mobile phone 100 is in the bent state, in response to the operation of starting the video call application by the user, the first display interface of the foldable screen of the mobile phone 100 displays the video call interface, and the second display interface of the foldable screen displays the desktop.

It should be noted that FIG. 6B-1 and FIG. 6B-2 are described by using an example in which the mobile phone 100 receives, on the first display interface, an input for starting the video call application, and displays the video call interface on the first display interface. It may be understood that the input for starting the video call application may alternatively be received on the second display interface, and the video call interface is displayed on the first display interface. Alternatively, the input for starting the video call application is received on the first display interface, and the video call interface is displayed on the second display interface. Alternatively, the input for starting the video call application is received on the second display interface, and the video call interface is displayed on the second display interface. In an implementation, the mobile phone 100 receives, on the first display interface or the second display interface, the input for starting the video call application, and displays the video call interface on a display interface in a display area of the first screen 11 or the first screen 12 that is on an upper side.

It should be noted that FIG. 6B-1 and FIG. 6B-2 are described by using an example in which the video call application is started by starting the video call function of "WeChat". It may be understood that, in an actual application, the video call application may alternatively be started in another manner. For example, the video call application is started through a video call function of "QQ". For example, the video call application is started through a video call function of FaceTime. For example, the video call application is started by tapping an icon of a preset video call application. This is not limited in this embodiment of this application.

In another example, as shown in FIG. 6C, the user makes a video call in the unfolded state of the mobile phone 100. The display interface of the full screen (the first screen 11 and the second screen 12) of the mobile phone 100 displays a video call interface. The mobile phone 100 receives the first operation of folding the mobile phone from the unfolded state by the user. In response to the first operation of folding the mobile phone from the unfolded state by the user, the first display interface of the foldable screen of the mobile phone 100 displays the video call interface, and the second screen 12 is turned off.

Further, referring to FIG. 6D, the first display interface of the foldable screen displays the video call interface, and the second display interface of the foldable screen displays another interface or the second screen 12 is turned off. The mobile phone 100 receives the operation of unfolding the mobile phone from the bent state to the unfolded state by the user. In response to the operation of unfolding the mobile phone from the bent state to the unfolded state by the user, the video call interface is displayed in a display area of the full screen (the first screen 11 and the second screen 12) of the mobile phone 100.

In the bent state of the mobile phone, the first display interface displays the first display content, and the mobile phone may turn on or off the second screen based on a distance between the user and the mobile phone.

For example, in the bent state of the mobile phone, the first display interface displays the first display content. When the user moves away from the mobile phone, the second screen of the mobile phone is turned off, to save power and reduce energy consumption. When the user approaches the mobile phone, the second screen of the mobile phone is turned on, and an interface before the screen is turned off is displayed, to facilitate user operations.

In an example, in the bent state of the mobile phone, the first display interface of the foldable screen of the mobile phone 100 displays the first display content, and the second display interface of the foldable screen of the mobile phone 100 displays the second display content. When detecting that the distance between the user and the mobile phone 100 is greater than a first distance (for example, 1 meter), the mobile phone 100 turns off the second screen 12. Optionally, a preset simple key, for example, a virtual navigation key, may alternatively be displayed on the second display interface that is in the screen-off state, and display content on the first screen may be controlled by using the virtual navigation key. Optionally, the second screen may alternatively be completely turned off, and the virtual navigation key is displayed at the bottom of the first display interface. In this way, power can be saved.

For example, as shown in FIG. 7A, the first display interface of the foldable screen of the mobile phone 100 displays the video call interface, and the second display interface of the foldable screen displays the desktop. If the mobile phone 100 detects that the distance between the user and the mobile phone 100 is greater than the first distance (for example, 1 meter), the mobile phone 100 turns off the second screen 12, or displays the virtual navigation key on the second display interface. The mobile phone may control, in response to an input performed on the virtual navigation key, the video call interface displayed in the first display area. For example, in response to the input performed on the virtual navigation key, the video call interface is returned to the home screen, or the video call interface is hidden, or the video call application is closed.

In an implementation, referring to FIG. 4B, a camera (for example, a front-facing low-power-consumption camera) of the mobile phone detects a distance L between the user and the camera in real time, and outputs a detected value of L to the status monitoring service through a camera driver. Optionally, in another implementation, a sensor (for example, a distance sensor or an infrared sensor) of the mobile phone detects a distance L between the user and the sensor in real time, and outputs a detected value of L to the status monitoring service through a sensor driver. If the status monitoring service determines that the mobile phone is in the bent state, determines, based on the value of L, that the distance between the user and the mobile phone is greater than the first distance, and determines that the second screen is in a screen-on state, the status monitoring service notifies the display policy management service of the foregoing information (the mobile phone is in the bent state, the distance between the user and the mobile phone is greater than the first distance, and the second screen is in the screen-on state). The display policy management service determines to turn off the second screen (optionally, a display interface of the second screen displays the navigation key). Further, the display policy management service indicates the DMS to turn off the second screen (optionally, the display interface of the second screen displays the navigation key), and the DMS invokes the WMS to indicate a "desktop" application to return to the background for running. Further, the DMS indicates the surface manager to invoke the display driver to turn off the second screen (optionally, the display interface of the second screen displays the navigation key).

In another example, in the bent state of the mobile phone, the first display interface of the foldable screen of the mobile phone 100 displays the first display content, and the second screen 12 of the mobile phone 100 is turned off. When detecting that the distance between the user and the mobile phone 100 is less than or equal to a second distance (for example, 1 meter), the mobile phone 100 turns on the second screen 12, and displays the second display content on the second display interface of the foldable screen. The second display content may be a preset interface, or a display interface before the second screen is turned off, for example, the desktop or the WeChat chat interface. For example, as shown in FIG. 7B, the first display interface displays the video call interface, and the second display interface displays, in a screen-off state, the virtual navigation key. When detecting that the distance between the user and the mobile phone 100 is less than or equal to the second distance (for example, 1 meter), the mobile phone 100 turns on the second display interface, and displays a desktop interface on the second display interface, or may display an unlocking interface on the turned-on second display interface, where the first display interface displays the video call interface. The second distance may be equal to or unequal to the first distance. This is not limited in this embodiment of this application.

In an implementation, referring to FIG. 4B, the camera (for example, the front-facing low-power-consumption camera) of the mobile phone detects the distance L between the user and the camera in real time, and outputs the detected value of L to the status monitoring service through the camera driver. Optionally, in another implementation, the sensor (for example, the distance sensor or the infrared sensor) of the mobile phone detects the distance L between the user and the sensor in real time, and outputs the detected value of L to the status monitoring service through the sensor driver. If the status monitoring service determines that the mobile phone is in the bent state, determines, based on the value of L, that the distance between the user and the mobile phone is less than or equal to the second distance, and determines that the second screen is turned off, the status monitoring service notifies the display policy management service of the foregoing information (the mobile phone is in the bent state, the distance between the user and the mobile phone is less than or equal to the second distance, and the second screen is turned off). The display policy management service determines to display the second display content on the second display interface. Then, the display policy management service indicates the DMS to display the second display content on the second display interface. Further, the DMS indicates the surface manager to synthesize an interface that is of the second display content and that corresponds to the second display interface, and invokes the display driver to turn on the second screen and display the interface of the second display content on the second display interface.

In another example, in the bent state of the mobile phone, the first display interface of the foldable screen of the mobile phone 100 displays the first display content, and the second screen 12 of the mobile phone 100 is turned off. If the mobile phone 100 detects an operation of triggering the second screen by the user, the mobile phone 100 turns on the second screen 12 and displays the second display content on the second display interface. The operation of triggering the second screen by the user may be that a hand of the user approaches the mobile phone, or the user taps (for example, lightly taps) a second area. The second display content may be a preset interface, or a display interface before the second screen is turned off, for example, the desktop or the WeChat chat interface.

For example, as shown in FIG. 7C, the first display interface of the foldable screen of the mobile phone 100 displays the video call interface, and the second screen 12 is turned off. If the mobile phone 100 detects an operation of triggering the second screen by the user, the mobile phone 100 turns on the second screen 12 and displays the WeChat chat interface on the second display interface.

In an implementation, referring to FIG. 4B, the camera (for example, the front-facing low-power-consumption camera) of the mobile phone detects an action of the hand of the user in real time, and outputs an image of the action of the hand of the user to the status monitoring service through the camera driver. If the status monitoring service determines that the mobile phone is in the bent state, determines that the hand of the user approaches the mobile phone, and determines that the second screen is turned off, the status monitoring service notifies the display policy management service of the foregoing information (the mobile phone is in the bent state, the hand of the user approaches the mobile phone, and the second screen is turned off).

Alternatively, the touch panel of the mobile phone detects an operation of tapping the second screen by the user, and a TP driver notifies the status detection service that the operation of tapping the second screen by the user is detected. If the status monitoring service determines that the mobile phone is in the bent state, determines that the operation of tapping the second screen by the user is detected, and determines that the second screen is turned off, the status monitoring service notifies the display policy management service of the foregoing information (the mobile phone is in the bent state, the operation of tapping the second screen by the user is detected, and the second screen is turned off).

The display policy management service determines to display an interface of the second display content on the second display interface. Then, the display policy management service indicates the DMS to display the interface of the second display content on the second display interface. Further, the DMS indicates the surface manager to synthesize the interface that is of the second display content and that corresponds to the second display interface, invokes the display driver to turn on the second screen and display the interface of the second display content on the second display interface.

When an operation of starting a shooting function by the user (for example, starting the camera by the user) is detected, and it is determined that the mobile phone is in the bent state, the first display interface of the foldable screen of the mobile phone displays a shooting preview interface of the camera, and the second display interface of the foldable screen of the mobile phone may display another interface (for example, a voice assistant interface, a shooting settings option interface, or a light supplement interface). Certainly, the user may first enable the shooting function, and then adjust the mobile phone to the bent state. Alternatively, the user first adjusts the mobile phone to the bent state, and then enables the shooting function. This is not limited in this embodiment of this application.

In this way, in the bent state of the mobile phone, the first display interface of the foldable screen displays the shooting preview interface, and the second display interface of the foldable screen displays another interface. The shooting preview interface is fully displayed on the first display interface without bending. In addition, interfaces such as the voice assistant interface, the shooting settings option interface, and the light supplement interface may further be displayed on the second display interface, to assist the user in better shooting, thereby improving user experience. In the bent state, the user may further place the mobile phone on a table, on the ground, or on another object, to release hands.

In an example, in the unfolded state of the mobile phone 100, the user starts a "shooting" application. The shooting preview interface is displayed on the display interface of the full screen (the first screen 11 and the second screen 12) of the mobile phone 100. The mobile phone 100 receives the first operation of folding the mobile phone from the unfolded state by the user. In response to the first operation of folding the mobile phone from the unfolded state by the user, the first display interface of the foldable screen of the mobile phone 100 displays the shooting preview interface, and the second display interface of the foldable screen displays another application interface (for example, the voice assistant interface, the shooting settings option interface, and the light supplement interface).

In another example, in the bent state of the mobile phone 100, the user starts the "shooting" application. The mobile phone 100 receives an operation of starting the "shooting" application by the user. In response to the operation of starting the "shooting" application by the user, the first display interface of the foldable screen of the mobile phone 100 displays the shooting preview interface, and the second display interface of the foldable screen displays another application interface (for example, a voice assistant prompt information interface, the light supplement interface, or the shooting settings option interface).

For example, as shown in FIG. 8(a), the mobile phone 100 is in the bent state, the first display interface of the foldable screen displays the shooting preview interface, and the second display interface of the foldable screen displays the voice assistant prompt information interface. Voice assistant prompt information is used to prompt the user to control shooting, for example, start shooting or end shooting, by using a voice assistant. The mobile phone 100 may receive a voice input of the user, and control the shooting preview interface in response to the received voice input.

For example, as shown in FIG. 8(b), the mobile phone 100 is in the bent state, the first display interface of the foldable screen displays the shooting preview interface, the second display interface of the foldable screen displays the shooting settings option interface, and the shooting settings option interface includes a shooting settings option. The mobile phone 100 may receive an input performed on the shooting settings option, and control the shooting preview interface in response to the input performed on the shooting settings option. For example, the mobile phone 100 receives an input performed on a shooting settings option "portrait" in FIG. 8(b), and controls the shooting preview interface to be displayed in a portrait mode.

In an example, the first display interface of the foldable screen displays the shooting preview interface, and the second display interface of the foldable screen displays another application interface (for example, the voice assistant prompt information interface, the light supplement interface, or the shooting settings option interface). The mobile phone 100 receives the operation of unfolding the mobile phone from the bent state to the unfolded state by the user. In response to the operation of unfolding the mobile phone from the bent state to the unfolded state by the user, the shooting preview interface is displayed in the display area of the full screen (the first screen 11 and the second screen 12) of the mobile phone 100.

In some examples, the user may take a selfie by using the front-facing camera of the mobile phone. For example, the user starts a "mirror" application on the mobile phone, and the front-facing camera of the mobile phone performs real-time shooting on the face of the user. When the mobile phone is in the bent state, a real-time shooting interface of the camera is displayed on the first display interface of the foldable screen, and another application interface is displayed on the second display interface of the foldable screen.

For example, as shown in FIG. 9A, the mobile phone 100 is in the bent state, and an application currently running in the foreground of the mobile phone 100 is the "mirror". The first display interface of the foldable screen of the mobile phone 100 displays a real-time facial image of the user that is obtained by the front-facing camera of the mobile phone 100. The second display interface of the foldable screen displays a shortcut key. For example, the shortcut key may be a make-up key. For example, the make-up key may include an eye shadow key, an eyeliner key, an eyebrow key, a lip gloss key, a foundation key, a blush key, and the like.

In this way, when the user wants to use the mobile phone as a mirror, the user may fold the mobile phone to the bent state, and place the mobile phone on the table. In this case, the first display interface of the foldable screen of the mobile phone displays the real-time facial image of the user, and the second display interface of the foldable screen displays an auxiliary interface (such as the make-up key). The facial image of the user is fully displayed on the first display interface of the foldable screen without bending. The make-up key on the second display interface of the foldable screen helps the user implement make-up preview, and guides the user to perform make-up. This improves user experience.

Optionally, in some examples, the user may tap a make-up key, and the mobile phone 100 receives a tap operation performed by the user on the make-up key. In response to the tap operation performed by the user on the make-up key, the mobile phone 100 displays a corresponding make-up effect image on the facial image of the user displayed on the first display interface. For example, if the mobile phone 100 receives a tap operation performed by the user on the lip gloss key, the mobile phone 100 displays, at a lip part of the facial image of the user on the first display interface, an image obtained after lip make-up is performed. In this way, the user can more conveniently preview a make-up effect of the user.

Optionally, in some examples, the user may tap a make-up key, and the mobile phone 100 receives a tap operation performed by the user on the make-up key. In response to the tap operation performed by the user on the make-up key, the mobile phone 100 displays a corresponding make-up animation on the facial image of the user displayed on the first display interface. For example, if the mobile phone 100 receives a tap operation performed by the user on the foundation key displayed on the second display interface, a foundation make-up animation is displayed at parts such as the forehead, the cheek, and the chin of the facial image of the user displayed on the first display interface, to guide the user to apply foundation. For example, if the mobile phone 100 receives a tap operation performed by the user on the eyeliner key displayed on the second display interface, the mobile phone 100 displays an eyeliner make-up animation at an eye part of the facial image of the user displayed on the first display interface, to guide the user to put on eyeliner. For example, if the mobile phone 100 receives a tap operation performed by the user on the eyebrow key displayed on the second display interface, the mobile phone 100 displays an eyebrow make-up animation at an eyebrow part of the facial image of the user displayed on the first display interface, to guide the user to draw the eyebrows. For example, if the mobile phone 100 receives a tap operation performed by the user on the lip gloss key displayed on the second display interface, the mobile phone 100 displays a lip make-up animation at a lip part of the facial image of the user displayed on the first display interface, to guide the user to perform lip make-up. In this way, the user can be guided to apply make-up.

Optionally, in some examples, the mobile phone 100 detects that an ambient environment is relatively dark. In this case, for example, as shown in FIG. 9B, the mobile phone 100 displays a supplement light effect (for example, highlights color rings or color lights) in a surrounding area of the screen of the mobile phone 100. In this way, light supplement can be implemented when the user looks in the mirror and performs make-up, thereby further improving user experience. In an implementation, an ambient light sensor at the hardware layer of the mobile phone may detect ambient light brightness around the mobile phone, and notify the display policy management service of the detected ambient light brightness. If determining that the ambient light brightness is less than a preset brightness value, the display policy management service controls the surrounding area of the screen of the mobile phone to display the supplement light effect.

In some examples, the front-facing camera of the mobile phone is on a same side as the first screen, and a rear-facing camera of the mobile phone is on a side distant from the first screen. When the front-facing camera or the rear-facing camera of the mobile phone is used for shooting, the mobile phone is in the bent state, and an angle between the first screen of the mobile phone and the horizontal plane is less than a first angle (for example, 20°), the shooting preview interface may be displayed by using the second display interface of the foldable screen of the mobile phone, and the first display interface of the foldable screen of the mobile phone may display another interface (for example, the voice assistant interface or the light supplement interface). Alternatively, the first display interface of the foldable screen of the mobile phone also displays the shooting preview interface, or the first screen of the mobile phone may be turned off. Certainly, the camera may be first started, and then the mobile phone is adjusted to the bent state. When the angle between the first screen of the mobile phone and the horizontal plane is less than the first angle (for example, 20°), the shooting preview interface is displayed by using the second display interface of the foldable screen of the mobile phone, and the first display interface of the foldable screen of the mobile phone may display another interface (for example, the voice assistant interface or the light supplement interface). Alternatively, the first display interface of the foldable screen of the mobile phone also displays the shooting preview interface, or the first screen of the mobile phone may be turned off. This is not limited in this embodiment of this application.

In an example, as shown in FIG. 10(a), the mobile phone 100 is in the bent state, and the rear-facing camera of the mobile phone is on the side distant from the first screen. When the rear-facing camera of the mobile phone 100 is used to shoot the sky, and an included angle between the first screen 11 of the mobile phone 100 and the horizontal plane is less than a preset angle, the shooting preview interface is displayed by using the second display interface of the foldable screen of the mobile phone 100, so that the user can view the shooting preview interface.

In another example, as shown in FIG. 10(b), the mobile phone 100 is in the bent state, and the front-facing camera of the mobile phone is on the same side as the first screen. When the front-facing camera of the mobile phone 100 is used to shoot the sky, and an included angle between the first screen 11 of the mobile phone 100 and the horizontal plane is less than a preset angle, the shooting preview interface is displayed by using the second display interface of the foldable screen of the mobile phone 100, so that the user can view the shooting preview interface.

In this way, when the electronic device is in the bent state, the camera and the first screen are on the same side or the camera is on the side distant from the first screen, and the camera is used to shoot the sky, the shooting preview interface can be easily viewed by using the second display interface, and the user does not need to look up or down to view the shooting preview interface by using the first display interface. This improves shooting experience of the user when the mobile phone 100 is in the bent state.

In an example, as shown in FIG. 10(c), the mobile phone 100 is in the bent state, and the rear-facing camera of the mobile phone is on the side distant from the first screen. When the rear-facing camera of the mobile phone 100 is used to shoot the ground, and an included angle between the first screen 11 of the mobile phone 100 and the horizontal plane is less than a preset angle, the shooting preview interface is displayed by using the second display interface of the foldable screen of the mobile phone 100, so that the user can view the shooting preview interface.

In another example, as shown in FIG. 10(d), the mobile phone 100 is in the bent state, and the front-facing camera of the mobile phone is on the same side as the first screen. When the front-facing camera of the mobile phone 100 is used to shoot the ground, and an included angle between the first screen 11 of the mobile phone 100 and the horizontal plane is less than a preset angle, the shooting preview interface is displayed by using the second display interface of the foldable screen of the mobile phone 100, so that the user can view the shooting preview interface.

In this way, when the electronic device is in the bent state, the camera and the first screen are on the same side or the camera is on the side distant from the first screen, and the camera is used to shoot the ground, the shooting preview interface can be easily viewed by using the second display interface, and the user does not need to look down or up to view the shooting preview interface by using the first display interface. This improves shooting experience of the user when the mobile phone 100 is in the bent state.

When the mobile phone is in a screen-off state (to be specific, both the first screen and the second screen are turned off), an always on display (always on display, AOD) function may be supported.

In some examples, if the mobile phone is in the bent state, an AOD interface may be displayed by using the first display interface of the foldable screen, and the second screen is turned off. For example, the AOD interface may include information such as a calendar, a time, a schedule, and a notification.

For example, as shown in FIG. 11A, the mobile phone 100 is in the bent state and is in the screen-off state. The first display interface of the foldable screen of the mobile phone 100 displays the AOD interface, and the second screen 12 is turned off. The AOD interface includes time information.

In some other examples, if the mobile phone is in the bent state, a first part of information on the AOD interface may be displayed on the first display interface of the foldable screen, and a second part of information on the AOD interface may be displayed on the second display interface of the foldable screen. For example, the time information may be displayed on the first display interface, and information such as the calendar, the schedule, the notification, and a memo may be displayed on the second display interface. One type of information is fully displayed only on the first display interface or the second display interface.

For example, as shown in FIG. 11B, the mobile phone 100 is in the bent state and is in the screen-off state. The time information on the AOD interface is displayed on the first display interface of the foldable screen of the mobile phone 100, and calendar information on the AOD interface may be displayed on the second display interface of the foldable screen.

In this way, when the always on display function of the mobile phone 100 is used, the user may set the mobile phone 100 to the bent state, and place the mobile phone 100 in a bracket form on the table, to more conveniently view information such as time. For example, when the user wakes up in the middle of the night and wants to view a time, but is unwilling to reach out to operate the mobile phone, the user may bend the mobile phone before going to bed, and place the mobile phone in the bracket form on the table, so that the user can directly view the time information while lying in bed.

The mobile phone may be used to play a game. If the mobile phone detects an operation of starting a "game" application by the user, and determines that the mobile phone is in the bent state, the first display interface of the foldable screen of the mobile phone displays a game interface, and the second display interface of the foldable screen of the mobile phone displays a game auxiliary interface (for example, a voice assistant interface, an entry/exit interface, or a joypad interface). In this way, the first display interface of the foldable screen of the mobile phone fully displays the game interface, and the game auxiliary interface on the second display interface is used by the user to control and operate the game. This improves user experience.

Certainly, the "game" function may alternatively be first enabled, and then the mobile phone is adjusted to the bent state. Alternatively, the mobile phone is first adjusted to the bent state, and then the "game" function is enabled. This is not limited in this embodiment of this application.

In an example, as shown in FIG. 12A, the mobile phone 100 detects the operation of starting the "game" application by the user. For example, the game is a somatic game, and the mobile phone 100 is in the bent state. In this case, the first display interface of the foldable screen of the mobile phone 100 displays a somatic game interface, the second display interface of the foldable screen displays a voice assistant interface. The somatic game interface includes action input prompt information 1201, to prompt the user to control, by using an action, the somatic game displayed on the first display interface of the foldable screen.

Optionally, the front-facing camera on the same side as the first screen 11 of the mobile phone 100 is a 3D depth sensing camera. The mobile phone 100 detects an action of the user by using a 3D modeling function of the 3D depth sensing camera, so that the user can interacts with a character in the game. In this way, when the user uses the mobile phone 100 to play the somatic game, the mobile phone 100 may be placed in the bracket form on the table. The first display interface of the foldable screen of the mobile phone 100 fully displays the somatic game interface, and the second display interface of the foldable screen displays the game auxiliary interface. The user may interact with a character in the game through an action, and may operate the voice assistant through a voice to assist in the game (for example, exiting the game interface through a voice control).

In another example, as shown in FIG. 12B, if the mobile phone 100 detects the operation of starting the "game" application by the user, and the mobile phone 100 is in the bent state, the first display interface of the foldable screen of the mobile phone 100 displays the game interface, and the second display interface of the foldable screen displays the joypad interface. For example, the joypad interface may include operation keys such as a control key and a wheel. Optionally, an operation key on the game interface on the first display interface is hidden. In this way, the operation key can be prevented from blocking the game interface.

The mobile phone may be controlled by using an air gesture. The mobile phone is in the bent state, the first display interface of the foldable screen of the mobile phone displays a first interface, and the second display interface of the foldable screen of the mobile phone displays a second interface. For example, the first interface is an album interface, and the second interface is an auxiliary interface (for example, the voice assistant interface or the entry/exit interface). Alternatively, the second interface may be a black screen interface or display another application interface. The first interface or the second interface may include prompt information of a gesture input, to prompt the user to control an operation on the first interface by using a gesture. The mobile phone may obtain an air gesture of the user by using the front-facing camera (for example, a 3D depth sensing camera) on the same side as the first screen, and complete a corresponding operation on the first display interface of the mobile phone based on the air gesture of the user. For example, if the mobile phone detects a fist-clenching gesture of the user from a distance, the mobile phone completes a screenshot operation on the first display interface. If the mobile phone detects a gesture of the user waving a hand up from a distance, the mobile phone completes a page-up operation on the first display interface. If the mobile phone detects a gesture of the user waving a hand down from a distance, the mobile phone completes a page-down operation on the first display interface. In this way, in the bent state of the mobile phone, the user can perform a simple control operation on the mobile phone by using an air gesture without touching the mobile phone.

For example, as shown in FIG. 13, the mobile phone 100 is in the bent state, the first display interface of the foldable screen of the mobile phone 100 displays the album interface, and the second display interface of the foldable screen displays the voice assistant interface. The front-facing camera of the mobile phone 100 is a 3D depth sensing camera. The mobile phone 100 detects a hand action of the user by using a 3D modeling function of the 3D depth sensing camera. If the mobile phone 100 detects a fist-clenching gesture of the user from a distance, the mobile phone 100 completes a screenshot operation on the first display interface. The album interface includes prompt information 1301 of a gesture input, to prompt the user to control an operation on the first display interface by using a gesture.

In an implementation, referring to FIG. 4B, the camera of the mobile phone collects an air gesture of the user (for example, collects a fist-clenching gesture of the user from a distance) in real time, and outputs a collected air gesture image to the status monitoring service through the camera driver. If the status monitoring service determines that the mobile phone is in the bent state, and collects the fist-clenching gesture of the user from a distance, the status monitoring service reports a screenshot event through an event distribution management service at the application framework layer, to complete the screenshot operation.

When the mobile phone is in the bent state and enters a screen saver mode, the first display interface of the foldable screen of the mobile phone displays a desktop screen saver interface, and the second display interface of the foldable screen of the mobile phone may display another application interface. For example, the second screen may be turned off (for example, as shown in FIG. 14(a)). Alternatively, the second display interface may display a mirror interface (for example, as shown in FIG. 14(b)) of the desktop screen saver interface.

In this way, in the bent state of the mobile phone, a desktop screen saver is fully displayed on the first display interface of the mobile phone without bending. In addition, when the desktop screen saver is displayed on the first display interface, the second screen may be turned off, to save power of the mobile phone and reduce energy consumption. Alternatively, the second display interface and the first display interface are displayed in a mirrored manner, so that the display interface of the mobile phone is more aesthetic.

A text may be input or a cloud computer function may be used on the mobile phone. If the mobile phone detects an operation of inputting a text or using the cloud computer function by the user, and determines that the mobile phone is in the bent state, the first display interface of the foldable screen of the mobile phone displays a text input interface or a cloud computer interface, and the second display interface of the foldable screen of the mobile phone displays a text input auxiliary interface (for example, a keyboard interface or a touchpad interface). Certainly, the text input interface may be first entered or the cloud computer function may be first used, and then the mobile phone is adjusted to the bent state. Alternatively, the mobile phone is first adjusted to the bent state, and then the text input interface is entered or the cloud computer function is used. This is not limited in this embodiment of this application.

In this way, the text input interface or the cloud computer interface may be fully displayed on the first display interface of the foldable screen without bending, and a display effect is relatively good. Further, a function of inputting a text on the first display interface may be implemented by using the text input auxiliary interface displayed on the second display interface. The text input auxiliary interface does not block the text input interface, so that user experience is relatively good. In addition, in the bent state, the user may place the mobile phone in the bracket form on the table, to simulate a use effect of a laptop computer.

For example, as shown in FIG. 15, the mobile phone 100 is in the bent state, and the mobile phone 100 detects the operation of using the cloud computer function by the user. In this case, the first display interface of the foldable screen of the mobile phone 100 displays the cloud computer interface, and the second display interface of the foldable screen of the mobile phone 100 displays the keyboard interface.

The mobile phone may be used for navigation. If the mobile phone detects an operation of starting a navigation function by the user, and the mobile phone is in the bent state, the first display interface of the foldable screen of the mobile phone may display an augmented reality (augmented reality, AR) real scene navigation interface, and the second display interface of the foldable screen of the mobile phone may display a map navigation interface corresponding to an AR real scene. In this way, as long as the user adjusts the mobile phone to the bent state, the user can view the AR real scene by using the first display interface, and view map navigation by using the second display interface. This operation is easy and convenient.

In an example, as shown in FIG. 16A-1 and FIG. 16A-2, the user uses the navigation function in the unfolded state of the mobile phone 100. In this case, the display interface of the full screen (the first screen 11 and the second screen 12) of the mobile phone 100 displays the map navigation interface. The mobile phone 100 receives the first operation of folding the mobile phone from the unfolded state by the user. In response to the first operation of folding the mobile phone from the unfolded state by the user, the first display interface of the foldable screen of the mobile phone 100 displays the AR real scene navigation interface, and the second display interface of the foldable screen displays the map navigation interface corresponding to the AR real-world scene.

In another example, as shown in FIG. 16B-1 and FIG. 16B-2, the user enables the navigation function in the bent state of the mobile phone 100. For example, if the mobile phone 100 receives a tap operation performed by the user on a "start navigation" key, and the mobile phone 100 determines that the mobile phone 100 is in the bent state, in response to the tap operation performed by the user on the "start navigation" key, the first display interface of the foldable screen of the mobile phone 100 displays the AR real scene navigation interface, and the second display interface of the foldable screen displays the map navigation interface corresponding to the AR real scene.

The mobile phone may be used to simulate a piano.

In an example, the mobile phone detects that the user starts a score application, and the mobile phone is in the bent state. In this case, the first display interface of the foldable screen of the mobile phone may display a score interface, and the second display interface of the foldable screen of the mobile phone may display a piano key interface. In this way, a function of simulating the piano by the mobile phone can be implemented.

For example, as shown in FIG. 17A, the mobile phone 100 is in the bent state, and the mobile phone 100 detects an operation of starting the score application by the user. In this case, the first display interface of the foldable screen of the mobile phone 100 displays the score interface, and the second display interface of the foldable screen of the mobile phone 100 displays the piano key interface.

In another example, the mobile phone detects that a video playing function is enabled, and the mobile phone is in the bent state. In this case, the first display interface of the foldable screen of the mobile phone may display a video playing interface, and the second display interface of the foldable screen of the mobile phone may display the piano key interface. In this way, a video on the video playing interface may be edited. For example, music is played and recorded by using the piano key interface, and the music played and recorded by using the piano key interface and the video on the video playing interface are synthesized to form a personalized video.

For example, as shown in FIG. 17B, the mobile phone 100 is in the bent state, and the mobile phone 100 detects that the video playing function is enabled. In this case, the first display interface of the foldable screen of the mobile phone 100 displays the video playing interface, and the second display interface of the foldable screen of the mobile phone 100 displays the piano key interface.

It should be noted that in FIG. 6A to FIG. 17B, examples in which the mobile phone is in a vertically bent state is used. It may be understood that the foregoing display method applied to the electronic device having a foldable screen is also applicable to a case in which the mobile phone is in a horizontally bent state. Details are not described in this embodiment of this application.

In an implementation, an AB rotating shaft (namely, a rotating shaft of the mobile phone) is used as a boundary to divide the first display content displayed on the first display interface of the foldable screen and the second display content displayed on the second display interface of the foldable screen. For example, when the mobile phone is in the vertically bent state, the first display content is displayed on a display interface of a mobile phone screen above the AB rotating shaft, and the second display content is displayed on a display interface of a mobile phone screen below the AB rotating shaft. When the mobile phone is in the horizontally bent state, the first display content is displayed on a display interface of a mobile phone turn on the left of the AB rotating shaft, and the second display content is displayed on a display interface of a mobile phone turn on the right of the AB rotating shaft.

In some embodiments, when the mobile phone is in the horizontally bent state, a preset function may be enabled to display a preset interface. The preset interface includes the first interface displayed on the first display interface of the foldable screen and the second interface displayed on the second display interface of the foldable screen. The first interface and the second interface may be different display interfaces of a same application, or may be display interfaces of different applications. For example, the preset function may be an electronic wallet, an e-book, a video recording function, or the like.

In an implementation, when the mobile phone is in the horizontally bent state, a specific enabled function may be determined based on a preset rule, a preset gesture, or the like. For example, in the horizontally bent state, if the mobile phone receives a first gesture, the mobile phone starts an electronic wallet application; if the mobile phone receives a second gesture, the mobile phone starts an e-book application; or if the mobile phone receives a third gesture, the mobile phone starts a video recording application. For example, when the mobile phone is horizontally bent to a preset angle, the electronic wallet application is automatically started.

In an implementation, referring to FIG. 4B, the sensor service of the mobile phone outputs, to the status monitoring service, the pitch angle of the first screen and the pitch angle of the second screen that are obtained based on the output data of the A+G sensors. The status monitoring service obtains the included angle α between the first screen and the second screen based on the pitch angle of the first screen and the pitch angle of the second screen, and determines, based on α, that the mobile phone is in the bent state. In addition, the status monitoring service determines, based on α, the pitch angle of the first screen, and the pitch angle of the second screen, that the mobile phone is in the horizontally bent state. The status monitoring service notifies the display policy management service that the mobile phone is in the horizontally bent state. If the display policy management service determines that the mobile phone is in the horizontally bent state, the display policy management service determines to display preset content on the display interfaces of the foldable display screen of the mobile phone, where the first interface is displayed on the first display interface of the foldable screen, and the second interface is displayed on the second display interface of the foldable screen. The display policy management service indicates the DMS to display the first interface on the first display interface of the foldable screen and display the second interface on the second display interface of the foldable screen. Further, the DMS indicates the surface manager to synthesize the first interface corresponding to the first display interface of the foldable screen and the second interface corresponding to the second display interface of the foldable screen, and invokes the display driver to display a corresponding image on a display interface of a corresponding display (the first screen or the second screen).

When the mobile phone is in the horizontally bent state, the mobile phone starts the electronic wallet application, and the mobile phone screen displays an electronic wallet application interface. The electronic wallet application interface may include preset privacy information of the user, for example, payment information such as a bank card, electronic certificate information, and electronic ticket information for life services, such as an electronic coffee coupon and an electronic movie ticket. For example, the electronic wallet application interface may include a payment card interface and an electronic ticket interface. The payment card interface may include payment information such as WeChat, Alipay, and a bank card, the electronic certificate information, and the like. The electronic ticket interface may include the electronic ticket information for life services, such as the electronic coffee coupon and the electronic movie ticket. The payment card interface may be displayed on the first display interface of the foldable screen, and the electronic ticket interface may be displayed on the second display interface of the foldable screen.

In this way, when the user horizontally opens the mobile phone to the bent state, the electronic wallet is started, and the electronic wallet application interface is displayed. Because the mobile phone has a specific bending angle, view of another person may be blocked, and it is difficult for the another person to view content on the interface of the mobile phone. This helps protect privacy information of the user.

For example, as shown in FIG. 18A, the mobile phone 100 is in the horizontally bent state, the first display interface of the foldable screen of the mobile phone 100 displays the payment card interface. The payment card interface includes information about a plurality of payment cards, and the payment card interface further includes the electronic certificate information. The second display interface of the foldable screen of the mobile phone 100 displays the electronic ticket information.

Certainly, the interface in FIG. 18A is merely an example for description, and information displayed on the electronic wallet application interface may be other content. This is not limited in this embodiment of this application. Optionally, the information displayed on the electronic wallet application interface may alternatively be adjusted based on a setting of the user.

The mobile phone may be triggered, in a plurality of manners, to enter or exit the electronic wallet application interface displayed in the horizontally bent state. The following schematically shows some triggering manners. It should be noted that the mobile phone may alternatively be triggered, in another manner, to enter or exit the electronic wallet application interface displayed in the horizontally bent state. This is not limited in this embodiment of this application.

In an example, the user unfolds the mobile phone 100 from the folded state into the horizontally bent state. Referring to FIG. 18B, the mobile phone 100 receives the second operation of unfolding the mobile phone 100 from the folded state by the user. If it is determined that the mobile phone 100 is in the horizontally bent state, or it is determined that the included angle α between the first screen 11 and the second screen 12 is less than a first value and greater than a second value, the electronic wallet application interface is displayed. The first display interface of the foldable screen of the mobile phone 100 displays the payment card interface. The payment card interface includes the information about a plurality of payment cards, and the payment card interface further includes the electronic certificate information. The second display interface of the foldable screen of the mobile phone 100 displays the electronic ticket information.

In another example, referring to FIG. 18C, the mobile phone 100 is in the unfolded state or the horizontally bent state, and the mobile phone 100 receives an operation of tapping an electronic wallet application icon by the user. In response to the operation of tapping the electronic wallet application icon by the user, the mobile phone 100 displays the electronic wallet application interface. The first display interface of the foldable screen of the mobile phone 10 displays the payment card interface. The payment card interface includes the information about a plurality of payment cards, and the payment card interface further includes the electronic certificate information. The second display interface of the foldable screen of the mobile phone 100 displays the electronic ticket information.

In still another example, the mobile phone 100 is in the unfolded state, and the mobile phone 100 may display an unlocking interface, a standby interface, a desktop, an application interface, or the like. The user folds the mobile phone 100 from the unfolded state to the bent state. Referring to FIG. 18D, the mobile phone 100 receives the first operation of folding the mobile phone 100 from the unfolded state by the user. If it is determined that the mobile phone 100 is in the horizontally bent state, or it is determined that the included angle α between the first screen 11 and the second screen 12 is less than the first value and greater than the second value, the electronic wallet application interface is displayed. The first display interface of the foldable screen of the mobile phone 100 displays the payment card interface. The payment card interface includes the information about a plurality of payment cards, and the payment card interface further includes the electronic certificate information. The second display interface of the foldable screen of the mobile phone 100 displays the electronic ticket information.

In still another example, the mobile phone 100 is in the horizontally bent state, and the mobile phone 100 displays the electronic wallet application interface. The user unfolds the mobile phone 100 from the horizontally bent state to the unfolded state. Referring to FIG. 18E, the mobile phone 100 receives a third operation of unfolding the mobile phone 100 from the horizontally bent state by the user. If it is determined that the mobile phone 100 is in the unfolded state, or it is determined that the included angle α between the first screen 11 and the second screen 12 is greater than or equal to the first value, the electronic wallet application interface is exited. Optionally, the mobile phone 100 may display an unlocking interface, a standby interface, a desktop, an application interface, or the like.

In still another example, the mobile phone 100 is in the horizontally bent state, and the mobile phone 100 displays the electronic wallet application interface. Referring to FIG. 18F, the electronic wallet application interface includes an exit key 1601. The user may tap the exit key 1601 to exit the electronic wallet application interface. If the mobile phone 100 receives an operation of tapping the exit key 1601 by the user, the mobile phone 100 exits the electronic wallet application interface. Optionally, the mobile phone 100 may display an unlocking interface, a standby interface, a desktop, an application interface, or the like.

In still another example, the mobile phone 100 is in the horizontally bent state, and the mobile phone 100 displays the electronic wallet application interface. The user folds the mobile phone 100 from the horizontally bent state to the folded state. The mobile phone 100 receives the third operation of folding the mobile phone 100 from the horizontally bent state by the user. If it is determined that the mobile phone 100 is in the folded state, or it is determined that the included angle α between the first screen 11 and the second screen 12 does not meet a preset included angle condition, the electronic wallet application interface is exited.

It should be noted that the foregoing method for displaying the electronic wallet application interface is also applicable to a scenario in which the mobile phone is in the vertically bent state. Details are not described in this embodiment of this application.

When the mobile phone is in the horizontally bent state, the mobile phone enables an e-book function, and the mobile phone screen displays an e-book interface. The e-book interface is divided into a first display page and a second display page. The first display page is displayed on the first display interface of the foldable screen, and the second display page is displayed on the second display interface of the foldable screen. The user may adjust the mobile phone to the horizontally bent state and place the mobile phone in the bracket form on the table, to easily read an e-book.

For example, as shown in FIG. 19, the mobile phone 100 is in the horizontally bent state, a part of text on a first page of the e-book is displayed on the first display interface of the foldable screen of the mobile phone 100, and another part of text on the first page of the e-book is displayed on the second display interface of the foldable screen of the mobile phone 100. Certainly, the first display interface and the second display interface may alternatively display different pages of the e-book. This is not limited in this embodiment of this application.

For a manner of triggering the mobile phone to enter or exit the e-book interface displayed in the horizontally bent state, refer to the description of the manner of triggering the mobile phone to enter or exit the electronic wallet application interface displayed in the horizontally bent state. Details are not described herein again.

When the mobile phone is the horizontally bent state, the mobile phone enables the video recording function. The front-facing camera on the same side as the first screen or the rear-facing camera on the side distant from the first screen on the mobile phone is started, to shoot a video at the user. The second display interface of the foldable screen of the mobile phone displays the shooting preview interface for the user to preview a shooting effect. The user may adjust the mobile phone to the horizontally bent state and place the mobile phone in the bracket form on the table, to easily record a video.

For example, as shown in FIG. 20, the mobile phone 100 is in the horizontally bent state, the first screen 11 of the mobile phone 100 is turned off, the camera is started to shoot a video, and the second display interface of the foldable screen of the mobile phone 100 displays the shooting preview interface.

For a manner of triggering the mobile phone to enter or exit the video recording function, refer to the description of the manner of triggering the mobile phone to enter or exit the electronic wallet application interface displayed in the horizontally bent state. Details are not described herein again.

In some embodiments, the mobile phone receives the second operation of unfolding the mobile phone from the folded state by the user, and in response to the second operation, the mobile phone detects the included angle α between the first screen and the second screen. If it is determined, based on the included angle α, that the mobile phone is in the bent state or the unfolded state, a shortcut application icon is displayed in a first specific area on the first display interface or the second display interface of the foldable screen of the mobile phone. The shortcut application icon may be a preset shortcut application icon. For example, applications such as a shooting application, WeChat, and a QR code scanning payment application that are frequently used by the user are set as shortcut applications. Optionally, the shortcut application may alternatively be set based on a setting of the user. This is not limited in this embodiment of this application.

In this way, the shortcut application icon is located in an area in which the finger of the user is relatively convenient to operate. When the mobile phone is unfolded, a shortcut application may be selected and started more conveniently, to implement a shortcut operation. For example, the mobile phone is unfolded and the shooting application is started at one go, thereby improving user experience.

The following provides description by using an example in which the mobile phone receives an operation of unfolding the mobile phone from the folded state to the bent state by the user. It may be understood that the method described in the following embodiment is also applicable to a scenario in which the mobile phone receives an operation of unfolding the mobile phone from the folded state to the unfolded state by the user.

In an example, the first specific area is a preset area on the first display interface or the second display interface.

Optionally, the first specific area is on the first display interface. For example, the first specific area is an area in the upper right corner of the first display interface of the foldable screen of the mobile phone. For example, referring to FIG. 21A, the mobile phone 100 detects the second operation of unfolding the mobile phone 100 from the folded state by the user. In response to the second operation of unfolding the mobile phone 100 from the folded state by the user, the shortcut application icon is displayed in a first specific area 1901 on the first display interface of the foldable screen. For example, the first specific area 1901 is an area, 2 cm away from an upper frame and 1 cm away from a right frame, in the upper right corner of the first display interface of the foldable screen.

In an implementation, referring to FIG. 4B, the A+G sensors of the mobile phone output detection data in real time, and the sensor service outputs, to the status monitoring service, the pitch angle of the first screen and the pitch angle of the second screen that are obtained based on the output data of the A+G sensors. The status monitoring service obtains the included angle α between the first screen and the second screen based on the pitch angle of the first screen and the pitch angle of the second screen, and determines, based on α, that the mobile phone changes from the folded state to the bent state. The status monitoring service notifies the display policy management service that the mobile phone changes from the folded state to the bent state. The display policy management service determines to display the shortcut application icon in the first specific area on the first display interface, and indicates the DMS to display the shortcut application icon in the first specific area on the first display interface. Further, the DMS indicates the surface manager to synthesize a display image of the first specific area, where the display image includes the shortcut application icon; and invokes the display driver to display the synthesized image on the first display interface.

Optionally, if the mobile phone is unfolded from the folded state to the vertically bent state, the first specific area is on the first display interface or the second display interface that is located on an upper screen. For example, the second screen of the mobile phone is on an upper side and the first screen is on a lower side. In this case, the first specific area is an area in the upper right corner of the second display interface of the foldable screen of the mobile phone. For example, referring to FIG. 21B, the mobile phone 100 detects the second operation of unfolding the mobile phone 100 from the folded state by the user. In response to the second operation of unfolding the mobile phone 100 from the folded state by the user, the shortcut application icon is displayed in a first specific area 1902 on the display interface of the second screen 12 that is on an upper side. For example, the first specific area 1902 is an area, 2 cm away from an upper frame and 1 cm away from a right frame, in the upper right corner of the second display interface.

Optionally, if the mobile phone is unfolded from the folded state to the horizontally bent state, the first specific area is on the first screen or the second screen that is on a right side. For example, the first screen of the mobile phone is on a left side, and the second screen is on the right side. In this case, the first specific area is an area in the upper right corner of the second display interface of the foldable screen of the mobile phone. For example, referring to FIG. 21C, the mobile phone 100 detects the second operation of unfolding the mobile phone 100 from the folded state by the user. In response to the second operation of unfolding the mobile phone 100 from the folded state by the user, the shortcut application icon is displayed in a first specific area 1912 on the display area of the second screen 12 that is on the right side. For example, the first specific area 1912 is an area, 2 cm away from an upper frame and 1 cm away from a right frame, in the upper right corner of the second display area.

In an implementation, referring to FIG. 4B, the A+G sensors of the mobile phone output detection data in real time, and the sensor service outputs, to the status monitoring service, the pitch angle of the first screen and the pitch angle of the second screen that are obtained based on the output data of the A+G sensors. In addition, the sensor service determines the pitch angle of the first screen based on a direction of output data G1 of the A+G sensor on the first screen, and determines the pitch angle of the second screen based on a direction of output data G2 of the A+G sensor on the second screen; determines a location of the first screen relative to the second screen based on the pitch angle of the first screen and the pitch angle of the second screen (for example, if it is determined, based on the pitch angle of the first screen, that the first screen is parallel to the horizontal plane and the screen is upward, and it is determined, based on the pitch angle of the second screen, that the second screen is perpendicular to the horizontal plane, it is determined that the second screen is on the upper side; or for example, if it is determined, based on the pitch angle of the first screen, that the first screen is perpendicular to the horizontal plane and the screen faces rightward, and it is determined, based on the pitch angle of the second screen, that the second screen is perpendicular to the horizontal plane and the screen faces leftward, it is determined that the second screen is on the right side); and reports a result to the status monitoring service. The status monitoring service obtains the included angle α between the first screen and the second screen based on the pitch angle of the first screen and the pitch angle of the second screen, and determines, based on α, that the mobile phone changes from the folded state to the bent state. The status monitoring service notifies the display policy management service that the mobile phone changes from the folded state to the bent state, and a screen on the upper side (or the right side) is the second screen.

The display policy management service determines to display the shortcut application icon in the first specific area on the second display interface of the foldable screen of the mobile phone, and indicates the DMS to display the shortcut application icon in the first specific area on the second display interface. Further, the DMS indicates the surface manager to synthesize a display image of the first specific area, where the display image includes the shortcut application icon; and invokes the display driver to display the synthesized image on the second display interface.

Optionally, a location of the first specific area may be determined based on an input of the user. For example, the mobile phone may receive an input of the user on a settings interface, and determine the location of the first specific area. For example, the mobile phone may receive a preset input (for example, double-tapping the screen with a single finger) of the user on the screen, and determine the location of the first specific area based on an input location of the user on the screen. In another example, the first specific area is close to a screen area touched by a finger used when the user unfolds the mobile phone. For example, referring to FIG. 21D, the user uses one hand as a support to hold the second screen 12 of the mobile phone 100, uses the other hand to hold the first screen 11, and unfolds the mobile phone 100 upward. A thumb of the hand, holding the first screen 11, of the user touches an upper right corner area of the first screen 11 of the mobile phone 100. The mobile phone 100 detects the second operation of unfolding the mobile phone 100 from the folded state by the user. In response to the second operation of unfolding the mobile phone 100 from the folded state by the user, the shortcut application icon is displayed in a first specific area 1903 on the first display interface of the foldable screen. The first specific area 1903 is close to an area in which the finger used when the user unfolds the mobile phone contacts the first screen 11 of the mobile phone 100.

In an implementation, referring to FIG. 4B, the A+G sensors of the mobile phone output detection data in real time, and the sensor service outputs, to the status monitoring service, the pitch angle of the first screen and the pitch angle of the second screen that are obtained based on the output data of the A+G sensors. The status monitoring service obtains the included angle α between the first screen and the second screen based on the pitch angle of the first screen and the pitch angle of the second screen, and determines, based on α, that the mobile phone changes from the folded state to the bent state. The status monitoring service notifies the display policy management service that the mobile phone changes from the folded state to the bent state. The touch panel of the mobile phone detects a touch event of the user on the mobile phone screen in real time; determines a location at which the finger of the user contacts the mobile phone screen; and reports the location at which the finger of the user contacts the mobile phone screen to the display policy management service through the TP driver and the status detection service. The display policy management service determines, based on the location at which the finger of the user contacts the mobile phone screen, that the location of the first specific area is an upper right corner area of the first display interface of the foldable screen. The display policy management service indicates the DMS to display the shortcut application icon in the first specific area on the first display interface. Further, the DMS indicates the surface manager to synthesize a display image of the first specific area, where the display image includes the shortcut application icon; and invokes the display driver to display the synthesized image on the first display interface.

Optionally, in some examples, the location of the first specific area may move with movement of the area in which the finger of the user contacts the screen. For example, referring to FIG. 21E, in a process in which the user unfolds the mobile phone 100 from the folded state, a location of a first specific area 1904 moves with the location at which the finger of the user contacts the mobile phone screen. For example, referring to FIG. 21F, a folding angle of the mobile phone 100 remains unchanged, and a location of a first specific area 1905 moves with the location at which the finger of the user contacts the mobile phone screen.

It should be noted that the display methods in the foregoing embodiments of this application may be combined with each other or separately performed. Various combination manners are not enumerated one by one in this application.

It may be understood that, to implement the foregoing functions, the electronic device includes corresponding hardware structures and/or software modules for performing the functions. A person skilled in the art should be easily aware that, in combination with units and algorithm steps of the examples described in the embodiments disclosed in this specification, the embodiments of this application may be implemented by hardware or a combination of hardware and computer software. Whether a function is performed by hardware or hardware driven by computer software depends on a particular application and a design constraint of the technical solutions. A person skilled in the art may use different methods to implement the described functions for each particular application, but it should not be considered that the implementation goes beyond the scope of the embodiments of this application.

In the embodiments of this application, the electronic device may be divided into function modules based on the foregoing method examples. For example, each function module may be obtained through division based on each corresponding function, or two or more functions may be integrated into one processing module. The integrated module may be implemented in a form of hardware, or may be implemented in a form of a software function module. It should be noted that, in the embodiments of this application, division into the modules is an example, and is merely logical function division. In an actual implementation, another division manner may be used.

When an integrated unit is used, FIG. 22 is a possible schematic structural diagram of the electronic device in the foregoing embodiments. An electronic device 2000 includes a processing unit 2001, a display unit 2002 and a storage unit 2003.

The processing unit 2001 is configured to control and manage an action of the electronic device 2000. For example, the processing unit 2001 may be configured to perform, in this embodiment of this application, processing steps such as determining a form of the electronic device 2000 and determining display content on a first display interface and/or a second display interface of a foldable screen based on the form of the electronic device 2000; processing steps such as determining display content of the electronic device 2000 based on an operation performed by a user on the electronic device 2000; and/or another process used for the technology described in this specification.

The display unit 2002 is configured to display an interface of the electronic device 2000. For example, the display unit 2002 may be configured to display a first interface on the first display interface, display a second interface on the second display interface, and display a shortcut application icon or the like in a first setting area.

The storage unit 2003 is configured to store program code and data of the electronic device 2000.

Certainly, unit modules in the electronic device 2000 include but are not limited to the processing unit 2001, the display unit 2002, and the storage unit 2003. For example, the electronic device 2000 may further include a detection unit and the like. The detection unit may be configured to: detect postures of a first screen and a second screen of the electronic device 2000, and an included angle between the first screen and the second screen; and detect an action or a gesture of a user, a distance between the user and the electronic device 2000, and the like.

The processing unit 2001 may be a processor or a controller. For example, the processing unit 2001 may be a central processing unit (central processing unit, CPU), a digital signal processor (digital signal processing, DSP), an application-specific integrated circuit (application-specific integrated circuit, ASIC), a field programmable gate array (field programmable gate array, FPGA) or another programmable logical device, a transistor logical device, a hardware component, or any combination thereof. The processor may include an application processor and a baseband processor. The processor may implement or execute various example logical blocks, modules, and circuits described with reference to content disclosed in this application. The processor may alternatively be a combination of implementing a computing function, for example, a combination of one or more microprocessors or a combination of a DSP and a microprocessor. The display unit 2002 may be a display. The storage unit 2003 may be a memory. The detection unit may be a sensor, a touch panel, a camera, or the like.

For example, the processing unit 2001 is a processor (for example, the processor 110 shown in FIG. 3), the display unit 2002 is a display (for example, the display 194 shown in FIG. 3, where the display 194 may be a touchscreen, and a display panel and a touch panel may be integrated in the touchscreen), the storage unit 2003 may be a memory (for example, the internal memory 121 shown in FIG. 3), and the detection unit may include a sensor (for example, the sensor module 180 shown in FIG. 3) and a camera (for example, the camera 193 shown in FIG. 3). The electronic device 2000 provided in this embodiment of this application may be the mobile phone 100 shown in FIG. 3. The processor, the display, the memory, and the like may be coupled together, for example, may be connected through a bus.

FIG. 23 is a diagram of a possible hardware architecture of the electronic device in the foregoing embodiments. An electronic device 3000 includes a processor 210, an audio module 220, a speaker 221, a receiver 222, a microphone 223, a headset jack 224, a sensor module 230, a display 240, and a camera 250.

The processor 210 may implement a function of the processor 110 in FIG. 3. The electronic device 3000 may implement an audio function by using the audio module 220, the speaker 221, the receiver 222, the microphone 223, the headset jack 224, and the processor 210. The sensor module 230 includes a first gyro sensor 231, a first acceleration sensor 232, a second gyro sensor 233, a second acceleration sensor 234, a distance sensor 235, a touch panel 236, and the like. The display 240 is a foldable screen, and includes a first area 241 of the display and a second area 242 of the display. The first area 241 of the display and the second area 242 of the display are on two different sides of a foldable rotating shaft of the display 240. The first gyro sensor 231 and the first acceleration sensor 232 are disposed on a same side of the electronic device 3000 as the first area 241 of the display. The second gyro sensor 233 and the second acceleration sensor 234 are disposed on a same side of the electronic device 3000 as the second area 242 of the display. The camera 250 is disposed on a same side of the electronic device 3000 as the first area 241 of the display.

The first gyro sensor 231 may be configured to detect a rotational angular velocity of the first area 241 of the display. The first acceleration sensor 232 may be configured to detect a movement acceleration of the first area 241 of the display. The second gyro sensor 233 may be configured to detect a rotational angular velocity of the second area 242 of the display. The second acceleration sensor 234 may be configured to detect a movement acceleration of the second area 242 of the display. The processor 210 may obtain magnitude and a direction of a gravity acceleration of the first area 241 of the display based on the rotational angular velocity that is detected by the first gyro sensor 231 and that is of the first area 241 of the display and the movement acceleration that is detected by the first acceleration sensor 232 and that is of the first area 241 of the display. The processor 210 may further obtain magnitude and a direction of a gravity acceleration of the second area 242 of the display based on the rotational angular velocity that is detected by the second gyro sensor 233 and that is of the second area 242 of the display and the movement acceleration that is detected by the second acceleration sensor 234 and that is of the second area 242 of the display. The processor 210 may further determine a posture of the first area 241 of the display based on the magnitude and the direction of the gravity acceleration of the first area 241 of the display, and may determine a posture of the second area 242 of the display based on the magnitude and the direction of the gravity acceleration of the second area 242 of the display. The processor 210 may further determine an included angle between the first area 241 of the display and the second area 242 of the display based on the magnitude and the direction of the gravity acceleration of the first area 241 of the display and the magnitude and the direction of the gravity acceleration of the second area 242 of the display; and determine a form (for example, an unfolded state, a bent state, or a folded state) of the electronic device 3000 based on the included angle between the first area 241 of the display and the second area 242 of the display.

If the processor 210 determines that the electronic device 3000 is in the unfolded state, the processor 210 indicates the display 240 to display a running interface of a first application on both a display interface of the first area 241 of the display and a display interface of the second area 242 of the display. If the processor 210 determines that the mobile phone 100 is in the bent state, the processor 210 indicates the display 240 to display the running interface of the first application on the display interface of the first area 241 of the display and display a second interface on the display interface of the second area 242 of the display. Optionally, if the processor 210 determines that the mobile phone 100 is in the bent state, the processor 210 indicates to turn off the second area 242 of the display.

The first application may include a video call application, a video playing application, an album browsing application, a text input application, a navigation application, a game application, a shooting application, or the like.

In an implementation, according to an instruction of the processor 210, the display 240, the first area 241 of the display, or the second area 242 of the display may play an album, display a video call interface, play a video, display a text input interface, display a navigation interface, display a game interface, display a shooting preview interface, display an AOD interface, display a virtual key, or the like.

In an implementation, the display 240, the first area 241 of the display, or the second area 242 of the display may be turned off according to an instruction of the processor 210.

In an implementation, the electronic device 3000 may implement a video call function by using the audio module 220, the speaker 221, the microphone 223, and the camera 250.

In an implementation, the electronic device 3000 may implement a video playing function by using the audio module 220, the speaker 221, the microphone 223, and the display 240.

In an implementation, the electronic device 3000 may implement a shooting function by using the camera 250.

In an implementation, the camera 250 may be configured to detect a distance between a user and the display 240.

In an implementation, the electronic device 3000 may receive a voice input by using the microphone 223, to implement a voice assistant function.

In an implementation, the electronic device 3000 may receive an input of the user on the display interface of the first area 241 of the display or the display interface of the second area 242 of the display. For example, an input for starting the first application is received. For example, an input of the user on a virtual keyboard or a virtual joypad key is received. For example, a tap input to the second area 242 of the display is received. For example, a touch input performed on the first area 241 of the display or the second area 242 of the display is received.

In an implementation, the processor 210 controls, based on the input received on the display interface of the second area 242 of the display, the running interface that is of the first application and that is displayed on the display interface of the first area 241 of the display.

In an implementation, the processor 210 indicates, based on the tap input received in the second area 242 of the display, the second area 242 of the display to turn on the screen.

In an implementation, the electronic device 3000 may receive a gesture input or an action input by using the camera 250. The processor 210 controls, based on the gesture input or the action input received by the camera 250, the running interface that is of the first application and that is displayed on the display interface of the first area 241 of the display.

In an implementation, the processor 210 determines, based on the form of the electronic device 3000, to display a preset interface (an electronic wallet interface, an e-book interface, or the like) on a display interface of the display 240, or exit from displaying the preset interface.

In an implementation, the display 240 displays the preset interface (the electronic wallet interface, the e-book interface, or the like) according to an instruction of the processor 210.

In an implementation, the processor 210 determines, based on a form change of the electronic device 3000, to display a shortcut application icon in a first specific area. The processor 210 is further configured to determine a location of the first specific area on the display 240.

In an implementation, the processor 210 determines a location of the first area 241 of the display relative to the second area 242 of the display based on detection data of the sensor module 230. The processor 210 further determines the location of the first specific area based on the location of the first area 241 of the display relative to the second area 242 of the display.

In an implementation, the processor 210 determines a specific location of the first specific area based on detection data of the touch panel 236.

In an implementation, the display 240 displays the shortcut application icon in the first specific area according to an instruction of the processor 210.

An embodiment of this application further provides a computer-readable storage medium. The computer-readable storage medium stores computer program code. When the processor executes the computer program code, the electronic device performs related method steps in the foregoing embodiments.

An embodiment of this application further provides a computer program product. When the computer program product runs on a computer, the computer is enabled to perform related method steps in the foregoing embodiments.

The electronic device 2000, the electronic device 3000, the computer-readable storage medium, or the computer program product provided in the embodiments of this application may be configured to perform a corresponding method provided above. Therefore, for beneficial effects that can be achieved by the electronic device 2000, the electronic device 3000, the computer-readable storage medium, or the computer program product, refer to beneficial effects of the corresponding method provided above. Details are not described herein again.

The foregoing descriptions about implementations allow a person skilled in the art to clearly understand that, for the purpose of convenient and brief description, division into the foregoing function modules is merely used as an example for description. In an actual application, the foregoing functions can be allocated to different function modules for implementation based on a requirement. In other words, an inner structure of an apparatus is divided into different function modules to implement all or some of the functions described above.

In the several embodiments provided in this application, it should be understood that the disclosed apparatus and method may be implemented in another manner. For example, the described apparatus embodiments are merely examples. For example, division into the modules or units is merely logical function division. There may be another division manner in an actual implementation. For example, a plurality of units or components may be combined or may be integrated into another apparatus, or some features may be ignored or not be performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate components may or may not be physically separate, and components displayed as units may be one or more physical units, in other words, may be located in one place, or may be distributed on a plurality of different places. Some or all of the units may be selected based on an actual requirement to achieve an objective of a solution of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in the embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in the embodiments of this application. The storage medium includes any medium that can store program code, for example, a USB flash drive, a removable hard disk, a ROM, a RAM, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A display method applied to an electronic device having a foldable screen, a camera (193) and a foldable rotating shaft, the foldable screen comprises a first display area (11) and a second display area (12), wherein the first display area and the second display area are on two different sides of the foldable rotating shaft, the camera and the first display area are on a same side of the foldable rotating shaft, a first plane on which the first display area located and a second plane on which the second display area located is different when the electronic device is in a bent state, wherein the method comprises:
receiving an input of a user;
starting the camera of the electronic device in response to the input of the user;
when the electronic device is in the bent state and an angle between the first plane and the horizontal plane is less than a preset angle, displaying a shooting preview interface of the camera on the second display area of the foldable screen and without displaying the shooting preview interface of the camera on the first display area; and
in response to the electronic device change from the bent state to a unfolded state, displaying the shooting preview interface of the camera on the first display area of the foldable screen and the second display area of the foldable screen.

2. The method according to claim 1, wherein the method further comprising:
displaying an icon for shooting on the second display area when the electronic device is in the bent state and the angle between the first plane and the horizontal plane is less than the preset angle.

3. The method according to any one of claims 1 to 2, wherein the method further comprises:
displaying the shooting preview interface of the camera on the first display area of the foldable screen when the electronic device is in the bent state and a display screen corresponding to the second display screen is placed on a table.

4. The method according to any one of claims 1 to 3, wherein the camera is a front-facing camera of the electronic device, or the camera is a rear-facing camera of the electronic device.

5. An electronic device, wherein the electronic device comprises a memory (121), a processor (110), a foldable screen, a camera (193) and a foldable rotating shaft; the foldable screen comprises a first display area (11) and a second display area (12), wherein the first display area and the second display area are on two different sides of the foldable rotating shaft, the camera and the first display area are on a same side of the foldable rotating shaft, a first plane on which the first display area located and a second plane on which the second display area located is different when the electronic device is in a bent state;
the processor invokes one or more computer programs stored in the memory, wherein the one or more computer programs comprise instructions, and when the instructions are executed by the processor, the electronic device is enabled to perform the following method:
receiving an input of a user;
starting the camera of the electronic device in response to the input of the user;
when the electronic device is in the bent state and an angle between the first plane and the horizontal plane is less than a preset angle, displaying a shooting preview interface of the camera on the second display area of the foldable screen and without displaying the shooting preview interface of the camera on the first display area; and
in response to the electronic device change from the bent state to a unfolded state, displaying the shooting preview interface of the camera on the first display area of the foldable screen and the second display area of the foldable screen.

6. The electronic device according to claim 6, wherein when the instructions are executed by the processor, the electronic device is further enabled to perform the following method:
displaying an icon for shooting on the second display area when the electronic device is in the bent state and the angle between the first plane and the horizontal plane is less than the preset angle.

7. The electronic device according to any one of claims 5 to 6, wherein when the instructions are executed by the processor, the electronic device is further enabled to perform the following method:
displaying the shooting preview interface of the camera on the first display area of the foldable screen when the electronic device is in the bent state and a display screen corresponding to the second display screen is placed on a table.

8. The electronic device according to any one of claims 5 to 7, wherein the camera is a front-facing camera of the electronic device, or the camera is a rear-facing camera of the electronic device.

9. A computer-readable storage medium, wherein the computer-readable storage medium comprises computer instructions, and when the computer instructions are run on an electronic device, wherein the electronic device comprises a foldable screen, a camera (193) and a foldable rotating shaft; the foldable screen comprises a first display area (11) and a second display area (12), wherein the first display area and the second display area are on two different sides of the foldable rotating shaft, the camera and the first display area are on a same side of the foldable rotating shaft, a first plane on which the first display area located and a second plane on which the second display area located is different when the electronic device is in a bent state; the electronic device is enabled to perform the method:
receiving an input of a user;
starting the camera of the electronic device in response to the input of the user;
when the electronic device is in the bent state and an angle between the first plane and the horizontal plane is less than a preset angle, displaying a shooting preview interface of the camera on the second display area of the foldable screen and without displaying the shooting preview interface of the camera on the first display area; and
in response to the electronic device change from the bent state to a unfolded state, displaying the shooting preview interface of the camera on the first display area of the foldable screen and the second display area of the foldable screen.

10. The computer-readable storage medium according to claim 9, wherein when the computer instructions are run on the electronic device, the electronic device is further enabled to perform the method:
displaying an icon for shooting on the second display area when the electronic device is in the bent state and the angle between the first plane and the horizontal plane is less than the preset angle.

11. The computer-readable storage medium according to any one of claim 9 or 10, wherein when the computer instructions are run on the electronic device, the electronic device is further enabled to perform the method:
displaying the shooting preview interface of the camera on the first display area of the foldable screen when the electronic device is in the bent state and a display screen corresponding to the second display screen is placed on a table.

12. The computer-readable storage medium according to any one of claims 9 to 11, wherein the camera is a front-facing camera of the electronic device, or the camera is a rear-facing camera of the electronic device.

## Patentansprüche

1. Anzeigeverfahren, das bei einer elektronische Vorrichtung verwendet wird, die einen faltbaren Bildschirm, eine Kamera (193) und eine faltbare Drehwelle aufweist, wobei der faltbare Bildschirm einen ersten Anzeigebereich (11) und einen zweiten Anzeigebereich (12) umfasst, wobei sich der erste Anzeigebereich und der zweite Anzeigebereich auf zwei verschiedenen Seiten der faltbaren Drehwelle befinden, sich die Kamera und der erste Anzeigebereich auf derselben Seite der faltbaren Drehwelle befinden, eine erste Ebene, auf der sich der erste Anzeigebereich befindet, und eine zweite Ebene, auf der sich der zweite Anzeigebereich befindet, sich, wenn sich die elektronische Vorrichtung in einem gebogenen Zustand befindet, unterscheiden, wobei das Verfahren Folgendes umfasst:
Empfangen einer Eingabe eines Benutzers;
Starten der Kamera der elektronischen Vorrichtung als Reaktion auf die Eingabe des Benutzers;
wenn sich die elektronische Vorrichtung im gebogenen Zustand befindet und ein Winkel zwischen der ersten Ebene und der horizontalen Ebene kleiner als ein voreingestellter Winkel ist, Anzeigen einer Aufnahmevorschauoberfläche der Kamera auf dem zweiten Anzeigebereich des faltbaren Bildschirms, und zwar ohne Anzeigen der Aufnahmevorschauoberfläche der Kamera auf dem ersten Anzeigebereich; und
als Reaktion auf das Übergehen der elektronischen Vorrichtung vom gebogenen Zustand in den entfalteten Zustand, Anzeigen der Aufnahmevorschauoberfläche der Kamera auf dem ersten Anzeigebereich des faltbaren Bildschirms und dem zweiten Anzeigebereich des faltbaren Bildschirms.

2. Verfahren nach Anspruch 1, wobei das Verfahren ferner umfasst:
Anzeigen eines Symbols für Aufnahme auf dem zweiten Anzeigebereich, wenn sich die elektronische Vorrichtung im gebogenen Zustand befindet und der Winkel zwischen der ersten Ebene und der horizontalen Ebene kleiner als der voreingestellte Winkel ist.

3. Verfahren nach einem der Ansprüche 1 bis 2, wobei das Verfahren ferner umfasst:
Anzeigen der Aufnahmevorschauoberfläche der Kamera auf dem ersten Anzeigebereich des faltbaren Bildschirms, wenn sich die elektronische Vorrichtung im gebogenen Zustand befindet und ein dem zweiten Anzeigebildschirm entsprechender Anzeigebildschirm auf einem Tisch aufliegt.

4. Verfahren nach einem der Ansprüche 1 bis 3, wobei die Kamera eine nach vorne gerichtete Kamera der elektronischen Vorrichtung ist oder die Kamera eine nach hinten gerichtete Kamera der elektronischen Vorrichtung ist.

5. Elektronische Vorrichtung, wobei die elektronische Vorrichtung einen Speicher (121), einen Prozessor (110), einen faltbaren Bildschirm, eine Kamera (193) und eine faltbare Drehwelle aufweist, wobei der faltbare Bildschirm einen ersten Anzeigebereich (11) und einen zweiten Anzeigebereich (12) umfasst, wobei sich der erste Anzeigebereich und der zweite Anzeigebereich auf zwei verschiedenen Seiten der faltbaren Drehwelle befinden, sich die Kamera und der erste Anzeigebereich auf derselben Seite der faltbaren Drehwelle befinden, eine erste Ebene, auf der sich der erste Anzeigebereich befindet, und eine zweite Ebene, auf der sich der zweite Anzeigebereich befindet, sich, wenn sich die elektronische Vorrichtung in einem gebogenen Zustand befindet, unterscheiden;
der Prozessor ein oder mehrere in dem Speicher gespeicherte Computerprogramme aufruft, wobei das eine oder mehreren Computerprogramme Anweisungen umfassen und, wenn die Anweisungen von dem Prozessor ausgeführt werden, die elektronische Vorrichtung dazu befähigt wird, das folgende Verfahren auszuführen:
Empfangen einer Eingabe eines Benutzers;
Starten der Kamera der elektronischen Vorrichtung als Reaktion auf die Eingabe des Benutzers;
wenn sich die elektronische Vorrichtung im gebogenen Zustand befindet und ein Winkel zwischen der ersten Ebene und der horizontalen Ebene kleiner als ein voreingestellter Winkel ist, Anzeigen einer Aufnahmevorschauoberfläche der Kamera auf dem zweiten Anzeigebereich des faltbaren Bildschirms, und zwar ohne Anzeigen der Aufnahmevorschauoberfläche der Kamera auf dem ersten Anzeigebereich; und
als Reaktion auf das Übergehen der elektronischen Vorrichtung vom gebogenen Zustand in den entfalteten Zustand, Anzeigen der Aufnahmevorschauoberfläche der Kamera auf dem ersten Anzeigebereich des faltbaren Bildschirms und dem zweiten Anzeigebereich des faltbaren Bildschirms.

6. Elektronische Vorrichtung nach Anspruch 6, wobei, wenn die Anweisungen von dem Prozessor ausgeführt werden, die elektronische Vorrichtung ferner dazu befähigt wird, das folgende Verfahren auszuführen:
Anzeigen eines Symbols für Aufnahme auf dem zweiten Anzeigebereich, wenn sich die elektronische Vorrichtung im gebogenen Zustand befindet und der Winkel zwischen der ersten Ebene und der horizontalen Ebene kleiner als der voreingestellte Winkel ist.

7. Elektronische Vorrichtung nach einem der Ansprüche 5 bis 6, wobei, wenn die Anweisungen von dem Prozessor ausgeführt werden, die elektronische Vorrichtung ferner dazu befähigt wird, das folgende Verfahren auszuführen:
Anzeigen der Aufnahmevorschauoberfläche der Kamera auf dem ersten Anzeigebereich des faltbaren Bildschirms, wenn sich die elektronische Vorrichtung im gebogenen Zustand befindet und ein dem zweiten Anzeigebildschirm entsprechender Anzeigebildschirm auf einem Tisch aufliegt.

8. Elektronische Vorrichtung nach einem der Ansprüche 5 bis 7, wobei die Kamera eine nach vorne gerichtete Kamera der elektronischen Vorrichtung ist oder die Kamera eine nach hinten gerichtete Kamera der elektronischen Vorrichtung ist.

9. Computerlesbares Speichermedium, wobei das computerlesbare Speichermedium Computeranweisungen umfasst und, wenn die Computeranweisungen auf einer elektronischen Vorrichtung ausgeführt werden, wobei die elektronische Vorrichtung einen faltbaren Bildschirm, eine Kamera (193) und eine faltbare Drehwelle aufweist, wobei der faltbare Bildschirm einen ersten Anzeigebereich (11) und einen zweiten Anzeigebereich (12) umfasst, wobei sich der erste Anzeigebereich und der zweite Anzeigebereich auf zwei verschiedenen Seiten der faltbaren Drehwelle befinden, sich die Kamera und der erste Anzeigebereich auf derselben Seite der faltbaren Drehwelle befinden, eine erste Ebene, auf der sich der erste Anzeigebereich befindet, und eine zweite Ebene, auf der sich der zweite Anzeigebereich befindet, sich, wenn sich die elektronische Vorrichtung in einem gebogenen Zustand befindet, unterscheiden, die elektronische Vorrichtung dazu befähigt wird, das folgende Verfahren auszuführen:
Empfangen einer Eingabe eines Benutzers;
Starten der Kamera der elektronischen Vorrichtung als Reaktion auf die Eingabe des Benutzers;
wenn sich die elektronische Vorrichtung im gebogenen Zustand befindet und ein Winkel zwischen der ersten Ebene und der horizontalen Ebene kleiner als ein voreingestellter Winkel ist, Anzeigen einer Aufnahmevorschauoberfläche der Kamera auf dem zweiten Anzeigebereich des faltbaren Bildschirms, und zwar ohne Anzeigen der Aufnahmevorschauoberfläche der Kamera auf dem ersten Anzeigebereich; und
als Reaktion auf das Übergehen der elektronischen Vorrichtung vom gebogenen Zustand in den entfalteten Zustand, Anzeigen der Aufnahmevorschauoberfläche der Kamera auf dem ersten Anzeigebereich des faltbaren Bildschirms und dem zweiten Anzeigebereich des faltbaren Bildschirms.

10. Computerlesbares Speichermedium nach Anspruch 9, wobei, wenn die Computeranweisungen auf der elektronischen Vorrichtung ausgeführt werden, die elektronische Vorrichtung ferner dazu befähigt wird, das folgende Verfahren auszuführen:
Anzeigen eines Symbols für Aufnahme auf dem zweiten Anzeigebereich, wenn sich die elektronische Vorrichtung im gebogenen Zustand befindet und der Winkel zwischen der ersten Ebene und der horizontalen Ebene kleiner als der voreingestellte Winkel ist.

11. Computerlesbares Speichermedium nach einem der Ansprüche 9 oder 10, wobei, wenn die Computeranweisungen auf der elektronischen Vorrichtung ausgeführt werden, die elektronische Vorrichtung ferner dazu befähigt wird, das folgende Verfahren auszuführen:
Anzeigen der Aufnahmevorschauoberfläche der Kamera auf dem ersten Anzeigebereich des faltbaren Bildschirms, wenn sich die elektronische Vorrichtung im gebogenen Zustand befindet und ein dem zweiten Anzeigebildschirm entsprechender Anzeigebildschirm auf einem Tisch aufliegt.

12. Computerlesbares Speichermedium nach einem der Ansprüche 9 bis 11, wobei die Kamera eine nach vorne gerichtete Kamera der elektronischen Vorrichtung ist oder die Kamera eine nach hinten gerichtete Kamera der elektronischen Vorrichtung ist.

## Revendications

1. Procédé d'affichage appliqué à un dispositif électronique ayant un écran pliable, une caméra (193) et un arbre rotatif pliable, l'écran pliable comprend une première zone d'affichage (11) et une seconde zone d'affichage (12), dans lequel la première zone d'affichage et la seconde zone d'affichage se trouvent sur deux côtés différents de l'arbre rotatif pliable, la caméra et la première zone d'affichage se trouvent sur un même côté de l'arbre rotatif pliable, un premier plan sur lequel se trouve la première zone d'affichage et un second plan sur lequel se trouve la seconde zone d'affichage sont différents lorsque le dispositif électronique est dans un état plié, dans lequel le procédé comprend :
la réception d'une entrée d'un utilisateur ;
le démarrage de la caméra du dispositif électronique en réponse à l'entrée de l'utilisateur ;
lorsque le dispositif électronique est dans l'état plié et qu'un angle entre le premier plan et le plan horizontal est inférieur à un angle prédéfini, l'affichage d'une interface d'aperçu de prise de vue de la caméra sur la seconde zone d'affichage de l'écran pliable et sans afficher l'interface d'aperçu de prise de vue de la caméra sur la première zone d'affichage ; et
en réponse au passage du dispositif électronique de l'état plié à un état déplié, l'affichage de l'interface d'aperçu de prise de vue de la caméra sur la première zone d'affichage de l'écran pliable et la seconde zone d'affichage de l'écran pliable.

2. Procédé selon la revendication 1, dans lequel le procédé comprend en outre :
l'affichage d'une icône de prise de vue sur la seconde zone d'affichage lorsque le dispositif électronique est dans l'état plié et que l'angle entre le premier plan et le plan horizontal est inférieur à l'angle prédéfini.

3. Procédé selon l'une quelconque des revendications 1 à 2, dans lequel le procédé comprend en outre :
l'affichage de l'interface d'aperçu de prise de vue de la caméra sur la première zone d'affichage de l'écran pliable lorsque le dispositif électronique est dans l'état plié et qu'un écran d'affichage correspondant au second écran d'affichage est placé sur une table.

4. Procédé selon l'une quelconque des revendications 1 à 3, dans lequel la caméra est une caméra frontale du dispositif électronique, ou la caméra est une caméra orientée vers l'arrière du dispositif électronique.

5. Dispositif électronique, dans lequel le dispositif électronique comprend une mémoire (121), un processeur (110), un écran pliable, une caméra (193) et un arbre rotatif pliable ; l'écran pliable comprend une première zone d'affichage (11) et une seconde zone d'affichage (12), dans lequel la première zone d'affichage et la seconde zone d'affichage se trouvent sur deux côtés différents de l'arbre rotatif pliable, la caméra et la première zone d'affichage se trouvent sur un même côté de l'arbre rotatif pliable, un premier plan sur lequel se trouve la première zone d'affichage et un second plan sur lequel se trouve la seconde zone d'affichage sont différents lorsque le dispositif électronique est dans un état plié ;
le processeur invoque un ou plusieurs programmes informatiques stockés dans la mémoire, dans lequel les un ou plusieurs programmes informatiques comprennent des instructions, et lorsque les instructions sont exécutées par le processeur, le dispositif électronique est activé pour exécuter le procédé suivant :
la réception d'une entrée d'un utilisateur ;
le démarrage de la caméra du dispositif électronique en réponse à l'entrée de l'utilisateur ;
lorsque le dispositif électronique est dans l'état plié et qu'un angle entre le premier plan et le plan horizontal est inférieur à un angle prédéfini, l'affichage d'une interface d'aperçu de prise de vue de la caméra sur la seconde zone d'affichage de l'écran pliable et sans afficher l'interface d'aperçu de prise de vue de la caméra sur la première zone d'affichage ; et
en réponse au passage du dispositif électronique de l'état plié à un état déplié, l'affichage de l'interface d'aperçu de prise de vue de la caméra sur la première zone d'affichage de l'écran pliable et la seconde zone d'affichage de l'écran pliable.

6. Dispositif électronique selon la revendication 6, dans lequel lorsque les instructions sont exécutées par le processeur, le dispositif électronique est en outre activé pour exécuter le procédé suivant :
l'affichage d'une icône de prise de vue sur la seconde zone d'affichage lorsque le dispositif électronique est dans l'état plié et que l'angle entre le premier plan et le plan horizontal est inférieur à l'angle prédéfini.

7. Dispositif électronique selon l'une quelconque des revendications 5 à 6, dans lequel lorsque les instructions sont exécutées par le processeur, le dispositif électronique est en outre activé pour exécuter le procédé suivant :
l'affichage de l'interface d'aperçu de prise de vue de la caméra sur la première zone d'affichage de l'écran pliable lorsque le dispositif électronique est dans l'état plié et qu'un écran d'affichage correspondant au second écran d'affichage est placé sur une table.

8. Dispositif électronique selon l'une quelconque des revendications 5 à 7, dans lequel la caméra est une caméra frontale du dispositif électronique, ou la caméra est une caméra orientée vers l'arrière du dispositif électronique.

9. Support de stockage lisible par ordinateur, dans lequel le support de stockage lisible par ordinateur comprend des instructions informatiques, et lorsque les instructions informatiques sont exécutées sur un dispositif électronique, dans lequel le dispositif électronique comprend un écran pliable, une caméra (193) et un arbre rotatif pliable ; l'écran pliable comprend une première zone d'affichage (11) et une seconde zone d'affichage (12), dans lequel la première zone d'affichage et la seconde zone d'affichage se trouvent sur deux côtés différents de l'arbre rotatif pliable, la caméra et la première zone d'affichage se trouvent sur un même côté de l'arbre rotatif pliable, un premier plan sur lequel se trouve la première zone d'affichage et un second plan sur lequel se trouve la seconde zone d'affichage sont différents lorsque le dispositif électronique est dans un état plié ; le dispositif électronique est activé pour exécuter le procédé :
la réception d'une entrée d'un utilisateur ;
le démarrage de la caméra du dispositif électronique en réponse à l'entrée de l'utilisateur ;
lorsque le dispositif électronique est dans l'état plié et qu'un angle entre le premier plan et le plan horizontal est inférieur à un angle prédéfini, l'affichage d'une interface d'aperçu de prise de vue de la caméra sur la seconde zone d'affichage de l'écran pliable et sans afficher l'interface d'aperçu de prise de vue de la caméra sur la première zone d'affichage ; et
en réponse au passage du dispositif électronique de l'état plié à un état déplié, l'affichage de l'interface d'aperçu de prise de vue de la caméra sur la première zone d'affichage de l'écran pliable et la seconde zone d'affichage de l'écran pliable.

10. Support de stockage lisible par ordinateur selon la revendication 9, dans lequel lorsque les instructions informatiques sont exécutées sur le dispositif électronique, le dispositif électronique est en outre activé pour exécuter le procédé :
l'affichage d'une icône de prise de vue sur la seconde zone d'affichage lorsque le dispositif électronique est dans l'état plié et que l'angle entre le premier plan et le plan horizontal est inférieur à l'angle prédéfini.

11. Support de stockage lisible par ordinateur selon l'une quelconque des revendications 9 ou 10, dans lequel lorsque les instructions informatiques sont exécutées sur le dispositif électronique, le dispositif électronique est en outre activé pour exécuter le procédé :
l'affichage de l'interface d'aperçu de prise de vue de la caméra sur la première zone d'affichage de l'écran pliable lorsque le dispositif électronique est dans l'état plié et qu'un écran d'affichage correspondant au second écran d'affichage est placé sur une table.

12. Support de stockage lisible par ordinateur selon l'une quelconque des revendications 9 à 11, dans lequel la caméra est une caméra frontale du dispositif électronique, ou la caméra est une caméra orientée vers l'arrière du dispositif électronique.
